(19) Europäisches Patentamt / European Patent Office / Office européen des brevets

(11) **EP 4 782 726 A1**

(12) **EUROPEAN PATENT APPLICATION**
published in accordance with Art. 153(4) EPC

(43) Date of publication:
**29.07.2026 Bulletin 2026/31**

(21) Application number: **24868209.8**

(22) Date of filing: **12.09.2024**

(51) International Patent Classification (IPC):
***F16H 61/66*** (2006.01)   ***F16H 61/02*** (2006.01)

(52) Cooperative Patent Classification (CPC):
**F16H 61/02; F16H 61/66**

(86) International application number:
**PCT/JP2024/032752**

(87) International publication number:
**WO 2025/063132 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.09.2023 JP 2023151568**

(71) Applicant: **Hitachi Construction Machinery Co., Ltd.**
**Tokyo 110-0015 (JP)**

(72) Inventors:
• **KOINUMA, Takuma**
  **Tsuchiura-shi, Ibaraki 300-0013 (JP)**
• **KIZAKI, Yasuharu**
  **Tsuchiura-shi, Ibaraki 300-0013 (JP)**
• **SAKAI, Youji**
  **Tsuchiura-shi, Ibaraki 300-0013 (JP)**

(74) Representative: **MERH-IP Matias Erny Reichl Hoffmann**
**Patentanwälte PartG mbB**
**Paul-Heyse-Straße 29**
**80336 München (DE)**

(54) **TRANSMISSION DEVICE**

(57)   A speed-changing device (21) is provided with an input shaft (22), an output shaft (23), a planetary stepless speed-changing mechanism (24), a direct joint mechanism (27), an idler element (28), a multistage speed-changing mechanism (26) and a controller (25). The controller (25) controls a rotation speed of a first variator (33) in the planetary stepless speed-changing mechanism (24) and engagement/disengagement of a first clutch (27C) in the direct joint mechanism (27). The controller (25) can switch the speed-changing device (21) to three power transmission states composed of a first power transmission state (stepless speed change), a second power transmission state (internal lockup) and a third power transmission state (external lockup).

Fig.3

EP 4 782 726 A1

**Description**

**TECHNICAL FIELD**

The present invention relates to speed-changing devices that are mounted on vehicles, such as wheel loaders.

**BACKGROUND ART**

For example, Patent Document 1 describes a construction machine that performs transmission of power by a planetary stepless speed-changing mechanism composed of a combination of a planetary gear mechanism and an electric motor. According to the construction machine of Patent Document 1, the planetary stepless speed-changing mechanism is used to reduce a rapid change in a rotation speed of an engine, thus making it possible to suppress an operating speed of a cargo working machine from rapidly changing.

**PRIOR ART DOCUMENT**

**PATENT DOCUMENT**

Patent Document 1: Japanese Patent Laid-Open No. 2008-247269 A (Japanese Patent No. 5095252)

**SUMMARY OF THE INVENTION**

Incidentally, it is thought that a speed-changing device includes a planetary stepless speed-changing mechanism and a multistage speed-changing mechanism connected to the planetary stepless speed-changing mechanism. In this case, it is not preferable that the multistage speed-changing mechanism increases in size.

An object of the present invention is to provide a speed-changing device that can reduce the number of stages of a multistage speed-changing mechanism to achieve the downsizing and cost reduction of the multistage speed-changing mechanism.

A speed-changing device according to an aspect of the present invention comprises: an input shaft that is rotated by a power source mounted on a vehicle; an output shaft that outputs the rotation to a traveling device in the vehicle; a planetary stepless speed-changing mechanism that is disposed between the input shaft and the output shaft to change the rotation of the input shaft side, which is transmitted to the output shaft side; a direct joint mechanism that transmits the rotation of the input shaft side to the output shaft side by bypassing the planetary stepless speed-changing mechanism; an idler element that mechanically connects an output side of the planetary stepless speed-changing mechanism and an output side of the direct joint mechanism; and a multistage speed-changing mechanism that gradually changes rotation of the output side of the planetary stepless speed-changing mechanism by switching a transmission route of the meshing of gears, wherein the direct joint mechanism includes a direct joint clutch disposed between the input shaft and the idler element, and the planetary stepless speed-changing mechanism includes: a planetary mechanism including three members of a first member connected to the input shaft side, a second member as the output side and a third member that is connected to the idler element and is an output side different from the second member; a first variator connected to the second member in the planetary mechanism; and a second variator that transmits power between the first variator and the second variator, characterized by including: a controller configured to control a rotation speed of the first variator and engagement/disengagement of the direct joint clutch, wherein the controller switches a power transmission state to three power transmission states composed of: a first power transmission state in which the controller disengages the direct joint clutch and changes the rotation speed of the first variator, whereby a rotation speed of the second member is changed and a rotation motion with two degrees of freedom is performed between the first member, the second member and the third member, and power transmitted to the planetary stepless speed-changing mechanism from the power source is transmitted to the multistage speed-changing mechanism; a second power transmission state in which the controller disengages the direct joint clutch and stops rotation of the first variator, whereby rotation of the second member is stopped and a rotation motion with one degree of freedom is performed between the first member, the second member and the third member, and power transmitted to the planetary stepless speed-changing mechanism from the power source is transmitted to the multistage speed-changing mechanism; and a third power transmission state in which the controller engages the direct joint clutch, whereby power transmitted to the direct joint mechanism from the power source by bypassing the planetary stepless speed-changing mechanism is transmitted to the multistage speed-changing mechanism.

According to the aspect of the present invention, the downsizing and cost reduction of the multistage speed-changing mechanism can be achieved.

## BRIEF DESCRIPTION OF THE DRAWINGS

Fig. 1 is a left side view showing a wheel loader on which a speed-changing device according to an embodiment of the present invention is mounted.

Fig. 2 is a partially broken side view showing the speed-changing device in Fig. 1.

Fig. 3 is a configuration diagram showing a speed-changing device according to a first embodiment.

Fig. 4 is a configuration diagram showing the speed-changing device in Fig. 3 together with an internal part of a planetary mechanism.

Fig. 5 is an enlarged view showing part (A) in Fig. 4.

Fig. 6 is an enlarged view showing part (B) in Fig. 4.

Fig. 7 is a configuration diagram showing an example in a case where a first variator, a second variator, a power absorption device and the like in a planetary stepless speed-changing mechanism in Fig. 3 are respectively configured of hydraulic equipment.

Fig. 8 is an explanatory diagram showing the planetary mechanism in Fig. 4 as viewed from a power source side.

Fig. 9 is a characteristic diagram showing a relation of rotation speeds between respective members in the planetary mechanism in Fig. 4.

Fig. 10 is a drive force diagram showing an idealistic relation between vehicle speeds and traction forces of a wheel loader.

Fig. 11 is a drive force diagram (a drive force diagram of the configuration of Table 1 as described later) showing one example of a relation between vehicle speeds and traction forces of the wheel loader.

Fig. 12 is a drive force diagram (a drive force diagram of the configuration of Table 2 as described later) showing another example of a relation between vehicle speeds and traction forces of the wheel loader.

Fig. 13 is a configuration diagram as similar to Fig. 3, showing a first modification example (configuration for executing internal lockup by a brake).

Fig. 14 is a configuration diagram as similar to Fig. 4, showing a second modification example (configuration in which an input shaft is connected to a first sun member and a first variator is connected to a carrier).

Fig. 15 is a configuration diagram as similar to Fig. 4, showing a third modification example (configuration in which an input shaft is connected to a first sun member and a first variator is connected to a second sun member).

Fig. 16 is a configuration diagram as similar to Fig. 4, showing a fourth modification example (configuration in which a second variator is connected to an output shaft).

Fig. 17 is a configuration diagram as similar to Fig. 7, showing a fifth modification example showing (another example in a case where a first variator, a second variator, a power absorption device and the like in a planetary stepless speed-changing mechanism in Fig. 3) are respectively configured of hydraulic equipment.

Fig. 18 is a characteristic diagram showing an example of a change in rotation speed and pressure over time at the switching from internal lockup to external lockup.

Fig. 19 is a characteristic diagram showing an example of a change in rotation speed and pressure over time at the switching from internal lockup to external lockup in the configuration provided with a brake mechanism.

Fig. 20 is a characteristic diagram showing an example of a change in rotation speed and pressure over time at the switching from external lockup to internal lockup.

Fig. 21 is a characteristic diagram showing an example of a change in rotation speed and pressure over time at the switching from external lockup to internal lockup in the configuration provided with the brake mechanism.

Fig. 22 is a characteristic diagram showing an example of a change in rotation speed, pressure and speed reduction ratio over time at the switching from stepless speed change to internal lockup.

Fig. 23 is a characteristic diagram showing an example of a change in rotation speed, pressure and speed reduction ratio over time at the switching from stepless speed change to internal lockup in the configuration provided with the brake mechanism.

Fig. 24 is a characteristic diagram showing an example of a change in rotation speed, pressure and speed reduction ratio over time at the switching from internal lockup to stepless speed change.

Fig. 25 is a characteristic diagram showing an example of a change in rotation speed, pressure and speed reduction ratio over time at the switching from internal lockup to stepless speed change in the configuration provided with the brake mechanism.

Fig. 26 is a characteristic diagram showing an example of a change in pressure over time at the time of switching a speed stage of a multistage speed-changing mechanism.

Fig. 27 is a characteristic diagram showing an example of a change in pressure and rotation speed over time at the switching from internal lockup to external lockup and at the time of switching the speed stage of the multistage speed-changing mechanism.

Fig. 28 is a characteristic diagram showing an example of a change in pressure and rotation speed over time at the switching from internal lockup to external lockup and at the time of switching the speed stage of the multistage speed-changing mechanism in the configuration provided with the brake mechanism.

Fig. 29 is a characteristic diagram showing an example of a change in pressure and rotation speed over time at the switching from external lockup to internal lockup and at the time of switching the speed stage of the multistage speed-changing mechanism.

Fig. 30 is a characteristic diagram showing an example of a change in pressure and rotation speed over time at the switching from external lockup to internal lockup and at the time of switching the speed stage of the multistage speed-changing mechanism in the configuration provided with the brake mechanism.

Fig. 31 is a characteristic diagram showing an example of a change in speed reduction ratio over time at the switching from internal lockup to external lockup and at the time of switching the speed stage of the multistage speed-changing mechanism.

Fig. 32 is a characteristic diagram showing an example of a change in speed reduction ratio over time at the switching from external lockup to internal lockup and at the time of switching the speed stage of the multistage speed-changing mechanism.

Fig. 33 is a characteristic diagram showing an example of a change in speed reduction ratio and pressure over time at the switching from stepless speed change to external lockup and at the time of switching the speed stage of the multistage speed-changing mechanism.

Fig. 34 is a characteristic diagram showing an example of a change in speed reduction ratio and pressure over time at the switching from external lockup to stepless speed change and at the time of switching the speed stage of the multistage speed-changing mechanism.

Fig. 35 is a characteristic diagram showing a relation between rotation directions of a variator and directions of torque (load).

Fig. 36 is a configuration diagram as similar to Fig. 4, showing a second embodiment.

Fig. 37 is an enlarged view showing part (C) in Fig. 36.

Fig. 38 is an explanatory diagram showing a planetary mechanism in Fig. 36 as viewed from a power source side.

Fig. 39 is a characteristic diagram showing a relation of rotation speeds between three members in the planetary mechanism in Fig. 36.

Fig. 40 is a configuration diagram as similar to Fig. 36, showing a sixth modification example (configuration in which an input shaft is connected to a ring member and a first variator is connected to a carrier).

Fig. 41 is a configuration diagram as similar to Fig. 36, showing a seventh modification example (configuration in which an input shaft is connected to a carrier and a first variator is connected to a ring member).

## MODE FOR CARRYING OUT THE INVENTION

Hereinafter, speed-changing devices according to embodiments and modification examples in the present invention will be explained in detail with reference to the accompanying drawings by taking a case of being applied to a vehicle (wheel loader) as an example.

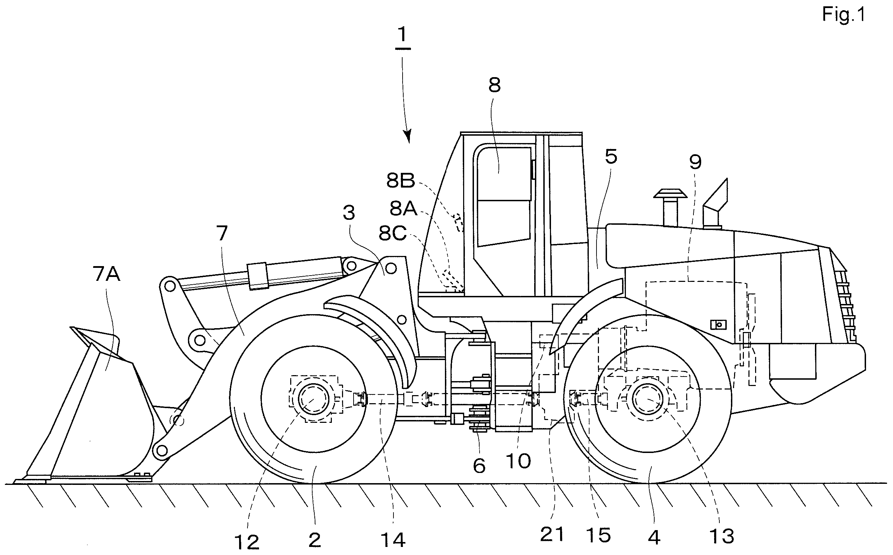

Fig. 1 to Fig. 9 show a first embodiment. In Fig. 1, a wheel loader 1 is a representative example of a vehicle (working vehicle). The wheel loader 1 is configured as an articulate type working vehicle in which a front vehicle body 3 provided with left and right front wheels 2 and a rear vehicle body 5 provided with left and right rear wheels 4 are connected to be bendable in the left-right direction. The front vehicle body 3 and the rear vehicle body 5 are configured as a vehicle body of the wheel loader 1. A center hinge 6 and a steering cylinder (not shown) are arranged between the front vehicle body 3 and the rear vehicle body 5, and expansion/contraction of the steering cylinder enables the front vehicle body 3 and the rear vehicle body 5 to bend about the center hinge 6 in the left-right direction. Thereby, the wheel loader 1 can perform the steering at the traveling.

A cargo working machine 7 also called a working mechanism is disposed in the front vehicle body 3 of the wheel loader 1 to be capable of tilting/lifting thereto. The cargo working machine 7 is provided with a loader bucket 7A. On the other hand, a cab 8 that defines therein an operating room, an engine 9, a hydraulic pump 10, a speed-changing device 21 as a transmission (power transmission device) and the like are arranged in the rear vehicle body 5 of the wheel loader 1. An accelerator pedal 8A as a control member for accelerating the vehicle and a forward/backward travel switching lever 8B (hereinafter, called FNR lever 8B) for switching a forward travel, a backward travel and a shift stage of the vehicle are arranged inside the cab 8. In addition, although omitted in illustration, a driver's seat, a steering wheel, a brake pedal, switches for parking brake and the like are arranged inside the cab 8.

An operation amount detector 8C is disposed in the accelerator pedal 8A to detect an operation amount $\theta 1$ of the accelerator pedal 8A. When the FNR lever 8B is operated by an operator, the FNR lever 8B switches the forward travel/retreat of the wheel loader 1 and also switches the shift stage. The operator switches the FNR lever 8B to a forward position (F) at the time of causing the wheel loader 1 to go forward. The operator switches the FNR lever 8B to a retreat position (R) at the time of causing the wheel loader 1 to go backward. The operator switches the FNR lever 8B to a neutral position (N) at the time of causing the wheel loader 1 to continue to stop without traveling or to stop in the middle of traveling. The operator switches the FNR lever 8B to rotate around a lever shaft at the time of switching the speed change stage.

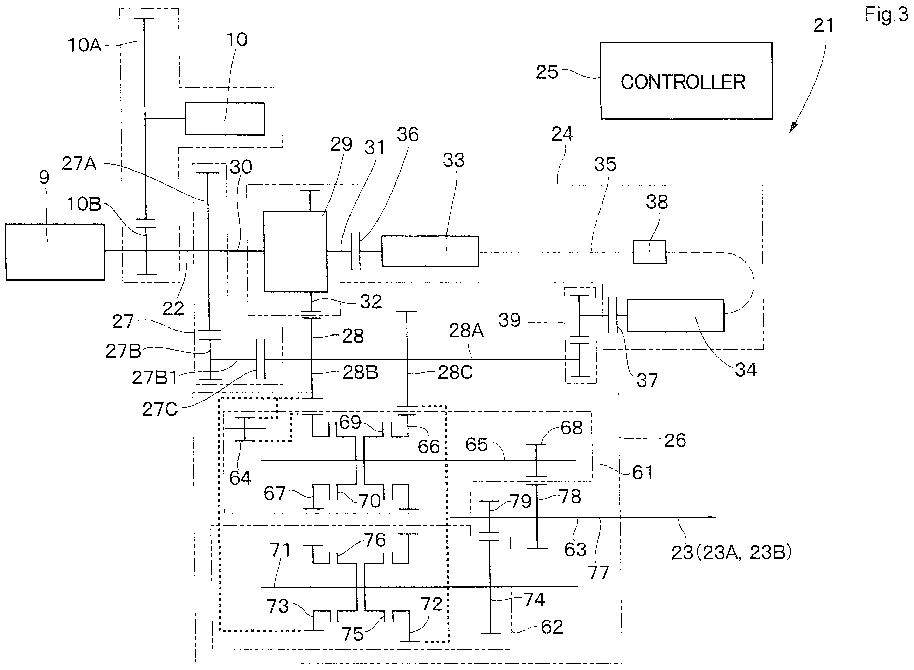

The engine 9 is a power source (prime mover) of the wheel loader 1. The power source may be configured of the engine 9 as a unit that is an internal combustion engine, and besides, may be configured of, for example, an engine and an electric motor or an electric motor as a unit. The hydraulic pump 10 is connected to the engine 9. The hydraulic pump 10 is a hydraulic source for operating the cargo working machine 7. As shown in Fig. 3 to be described later, the hydraulic pump 10 is connected via gears 10A, 10B to the engine 9.

A front axle 12 extending in the left-right direction is provided under the front vehicle body 3. The left and right front wheels 2 are respectively attached on both end sides of the front axle 12. On the other hand, a rear axle 13 extending in the left-right direction is provided under the rear vehicle body 5. The left and right rear wheels 4 are respectively attached on both end sides of the rear axle 13.

The front axle 12 is connected via a front propeller shaft 14 to the speed-changing device 21. The rear axle 13 is connected via a rear propeller shaft 15 to the speed-changing device 21. The speed-changing device 21 changes (increases and/or decreases) rotation of the engine 9 to be transmitted to the front propeller shaft 14 and the rear propeller shaft 15. That is, the power from the engine 9 is transmitted to the speed-changing device 21 connected to the engine 9.

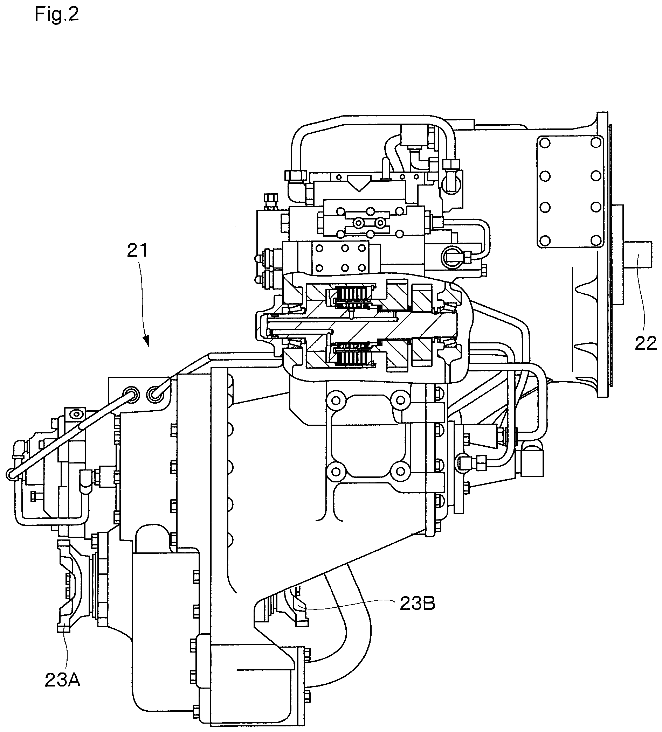

The power from the engine 9 is adjusted in a rotation number and in a rotation direction by the speed-changing device 21, which is then transmitted from a front output shaft 23A and a rear output shaft 23B of the speed-changing device 21 via the front propeller shaft 14 and the rear propeller shaft 15 to the front axle 12 and the rear axle 13. That is, as shown in Fig. 2, the speed-changing device 21 is provided with an input shaft 22 connected to the engine 9, the front output shaft 23A connected to the front propeller shaft 14 and the rear output shaft 23B connected to the rear propeller shaft 15. The speed-changing device 21 switches power transmission routes within the speed-changing device 21 to perform a speed change and a forward rotation/a reverse rotation between the input shaft 22 and the output shafts 23A, 23B.

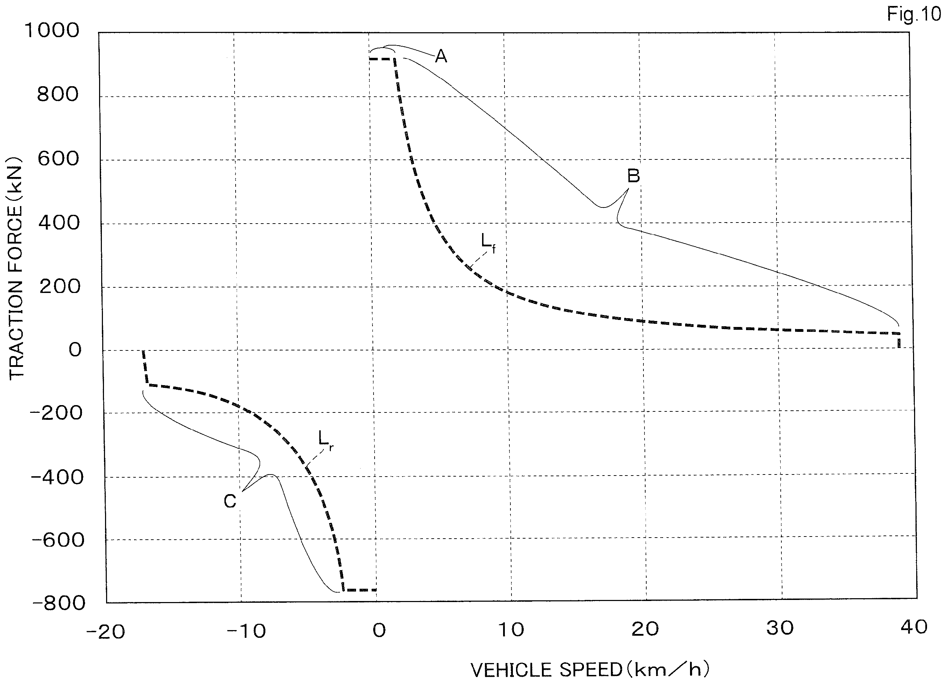

Here, Fig. 10 shows an idealistic drive force diagram of the wheel loader 1. In Fig. 10, an idealistic drive force line Lf in the forward direction and an idealistic drive force line Lr in the backward direction (retreat direction) are shown. At the forwarding time, a high traction force is required at the excavating, and a travel in a high vehicle speed (0 to 40km/h) is required at the deadheading. In addition, the wheel loader 1 needs to stably travel on the upslope at various grades provided in a quarry or the like. Therefore, for example, at a vehicle speed of 3km/h or more, a traction force is preferably the iso-horsepower regardless of the vehicle speed.

A range A in Fig. 10 shows a range in which a high traction force is required for excavation, that is, the range A of a drive power line at the excavating. A range B in Fig. 10 shows a range in which a traction force of the iso-horsepower is required regardless of the vehicle speed, that is, the range B of a drive power line of the iso-horsepower in the forward direction. A range C in Fig. 10 shows a range in which a traction force of the iso-horsepower is required regardless of the vehicle speed, that is, the range C of a drive power line of the iso-horsepower in the backward direction.

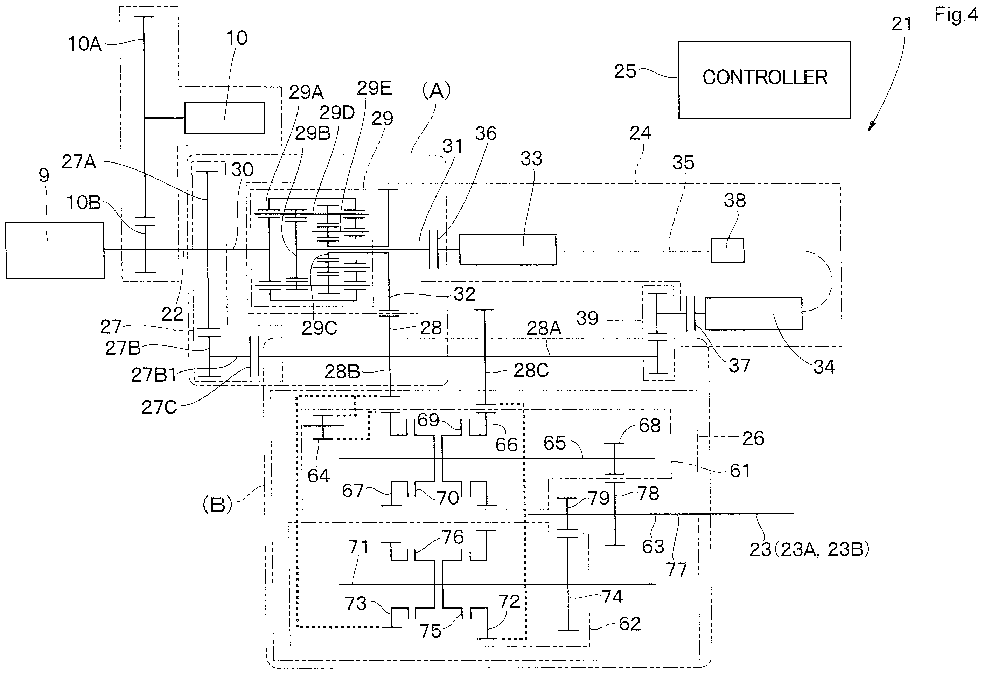

As shown in Fig. 3 and Fig. 4, the speed-changing device 21 according to the first embodiment is provided with a planetary stepless speed-changing mechanism 24, a direct joint mechanism 27 and a multistage speed-changing mechanism 26. In this case, the speed-changing device 21 is provided with a mode of transmitting power to the multistage speed-changing mechanism 26 while continuously speed-changing the planetary stepless speed-changing mechanism 24, a mode of transmitting power to the multistage speed-changing mechanism 26 by executing internal lockup of the planetary stepless speed-changing mechanism 24 and a mode of transmitting power to the multistage speed-changing mechanism 26 by an external lockup mechanism (direct joint mechanism 27) not via the planetary stepless speed-changing mechanism 24. The power transmission by the internal lockup is carried out by stopping the rotation of a member (for example, a first sun gear 29B) linked to a first variator 33 out of three rotation members, (for example, a carrier 29A, the first sun gear 29B and a second sun gear 29C) in the planetary gear mechanism 29, which constitute the planetary stepless speed-changing mechanism 24.

On the other hand, the power transmission by the external lockup is performed via the external lockup mechanism (direct joint mechanism 27) attached to an exterior of the planetary stepless speed-changing mechanism 24. In this case, the power transmission by the external lockup is performed in a state of stopping the power transmission by the planetary stepless speed-changing mechanism 24. This stopping is performed by releasing (or reducing the torque) the member (for example, the first sun gear 29B) linked to the first variator 33 out of the three members (for example, the carrier 29A, the first sun gear 29B and the second sun gear 29C) in the planetary gear mechanism 29.

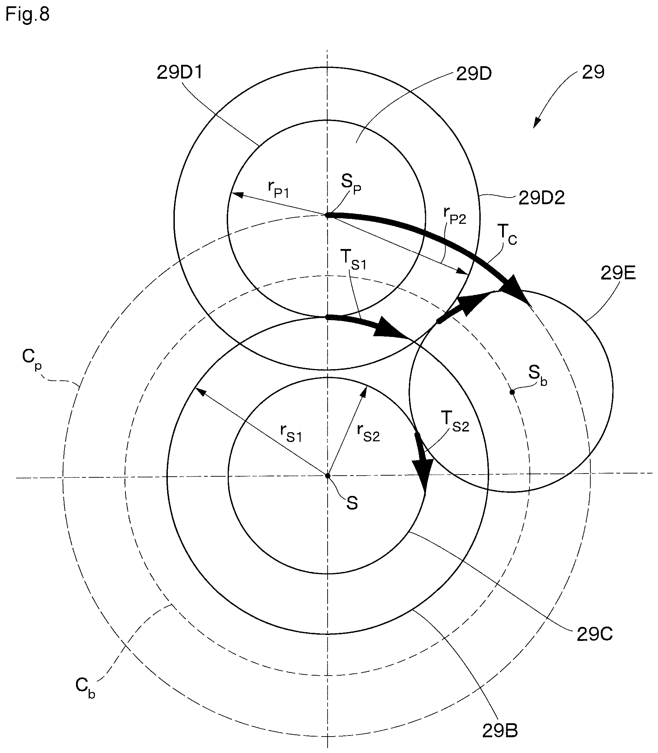

In addition, according to the first embodiment, as shown in Fig. 4, Fig. 5 and Fig. 8, the planetary gear mechanism 29 in the planetary stepless speed-changing mechanism 24 is provided with the two sun gears 29B, 29C, a planet gear 29D and a balance gear 29E revolving about a center axis S (Fig. 8) of the two sun gears 29B, 29C and rotating on its own axis, and one carrier 29A rotatably supporting the planet gear 29D and the balance gear 29E and rotating on its own axis about the center axis S of the two sun gears 29B, 29C.

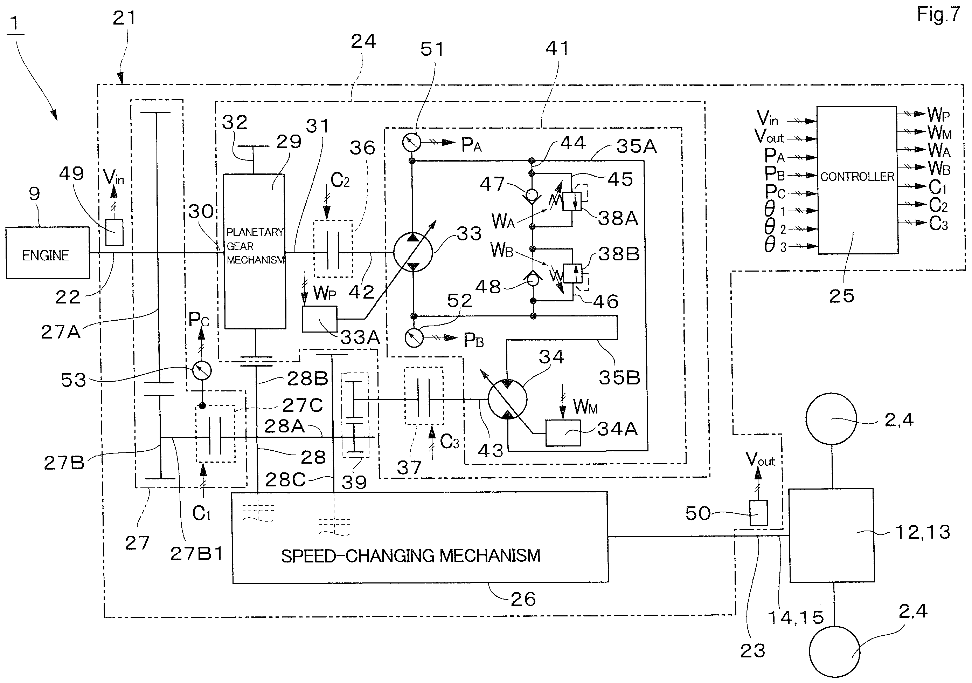

Hereinafter, an explanation will be in detail made of the speed-changing device 21 according to the first embodiment. It should be noted that in Fig. 3, the planetary gear mechanism 29 in the speed-changing device 21 is shown in a box (rectangular frame), on the other hand, Fig. 4 shows an internal part of the planetary gear mechanism 29, that is, also a specific gear arrangement of the planetary gear mechanism 29. In addition, in Fig. 3 and Fig. 4, for avoiding complication of the figures, the output shaft 23 of the speed-changing device 21 is shown in a simple manner as the common output shaft 23 (= output shafts 23A, 23B) that transmits the power to both the front axle 12 and the rear axle 13. That is, in Fig. 3 and Fig. 4, the configuration of dividing the power to the output shaft 23A on the front side and the output shaft 23B on the rear side through, for example, a center differential mechanism or the like is omitted in illustration. The omission of that configuration is similar in Fig. 7 as well to be described later. In addition, in Fig. 7 a hydraulic pump 10 and gears 10A, 10B are also omitted.

Fig. 3 and Fig. 4 are schematic diagrams of the speed-changing device 21 according to the first embodiment, more specifically the speed-changing device 21 provided with both the internal lockup and the external lockup. The speed-changing device 21 is provided with the input shaft 22 as an input member, the output shaft 23 as an output member, the planetary stepless speed-changing mechanism 24 as a stepless speed-changing mechanism (main speed-changing mechanism) and a controller 25. In addition, the speed-changing device 21 is provided with a multistage speed-changing mechanism 26 as a stepped speed-changing mechanism (sub speed-changing mechanism) and a direct joint mechanism 27 as an external lockup mechanism. The direct joint mechanism 27 is provided with a first clutch 27C to be connected at the time of transmitting the power through the direct joint mechanism 27.

In addition, the speed-changing device 21 is provided with an idler element 28 (an idler shaft 28A, a first idler gear 28B and a second idler gear 28C) that mechanically connects the planetary stepless speed-changing mechanism 24, the multistage speed-changing mechanism 26 and the direct joint mechanism 27. Further, as shown in Fig. 7 to be described later, the speed-changing device 21 is provided with a first speed detector 49, a second speed detector 50, a first pressure detector 51, a second pressure detector 52 and a third pressure detector 53.

The input shaft 22 of the speed-changing device 21 is rotated by the engine 9 as a power source (prime mover) mounted on the vehicle (wheel loader 1). That is, the input shaft 22 is connected to the engine 9 (drive shaft thereof). The input shaft 22 is provided with the gear 10B for transmitting the power to the hydraulic pump 10. The input shaft 22 is provided with an input gear 27A in the direct joint mechanism 27. The input shaft 22 is connected via a first connecting member 30 to the planetary stepless speed-changing mechanism 24 (more specifically, the planetary gear mechanism 29). On the other hand, the power is outputted from the output shaft 23 of the speed-changing device 21. The output shaft 23 of the speed-changing device 21 also acts as an output shaft 77 of the multistage speed-changing mechanism 26 to be described later. The output shaft 23 outputs the rotation via the front axle 12 and/or the rear axle 13 in the wheel loader 1 to the front wheels 2 and/or the rear wheels 4.

The power inputted to the speed-changing device 21 from the input shaft 22 is transmitted via the planetary stepless speed-changing mechanism 24 or the direct joint mechanism 27 to the idler element 28. The power transmitted to the idler element 28 is outputted through the multistage speed-changing mechanism 26 from the output shaft 23. The planetary stepless speed-changing mechanism 24 is disposed between the input shaft 22 and the output shaft 23 (specifically between the input shaft 22 and the multistage speed-changing mechanism 26, more specifically between the input shaft 22 and the idler element 28). The planetary stepless speed-changing mechanism 24 changes the rotation in the input shaft 22-side to be transmitted to the output shaft 23-side. An input side of the planetary stepless speed-changing mechanism 24 is connected to the input shaft 22 on which the input gear 27A in the direct joint mechanism 27 is disposed. An output side of the planetary stepless speed-changing mechanism 24 is connected to the idler shaft 28A in the idler element 28.

The planetary stepless speed-changing mechanism 24 forms a state of the internal lockup by stopping a second connecting member 31 for connecting the planetary gear mechanism 29 (for example, the first sun gear 29B) and the first variator 33. The state of the internal lockup is formed, for example, by braking the first variator 33 to stop the second connecting member 31. The brake operation of the first variator 33 will be described later. When the planetary stepless speed-changing mechanism 24 is in a state of the internal lockup, the power inputted from the input shaft 22 is transmitted via "the first connecting member 30 for connecting the planetary gear mechanism 29 (for example, the carrier 29A) and the input shaft 22", "the planetary gear mechanism 29" and "a third connecting member 32 for connecting the planetary gear mechanism 29 (for example, the second sun gear 29C) and the idler element 28" to the idler element 28 (the first idler gear 28B).

In the first embodiment, the speed-changing device 21 can optionally select the power transmission route for transmitting the power inputted from the engine 9 to the input shaft 22 to the multistage speed-changing mechanism 26 from three routes of the following (A), (B) and (C).

(A) Stepless speed-changing route (first power transmission route) for transmitting the power inputted from the engine 9 to the input shaft 22 to the multistage speed-changing mechanism 26 in a state where the planetary stepless speed-changing mechanism 24 is continuously speed-changed. At this time, the first clutch 27C as a direct joint clutch is disengaged, and a second clutch 36 and a third clutch 37 of the planetary stepless speed-changing mechanism 24 are engaged (connected). A state of transmitting the power via the stepless speed-changing route is defined as a first power transmission state.

(B) Internal lockup route (second power transmission route) for transmitting the power inputted from the engine 9 to the input shaft 22 to the multistage speed-changing mechanism 26 in a state where the planetary stepless speed-changing mechanism 24 is changed to the internal lockup. At this time, the first clutch 27C as the direct joint clutch is disengaged, and the second clutch 36 in the planetary stepless speed-changing mechanism 24 is engaged (connected). The third clutch 37 is engaged (connected) as needed. A state of transmitting the power via the internal lockup route is defined as a second power transmission state.

(C) External lockup route (third power transmission route) for transmitting the power inputted from the engine 9 to the input shaft 22 via the direct joint mechanism 27 to the multistage speed-changing mechanism 26. This external lockup route is a power transmission route via the direct joint mechanism 27 not via the planetary stepless speed-changing mechanism 24. At this time, the first clutch 27C as the direct joint clutch is engaged (connected), and the second clutch 36 and the third clutch 37 in the planetary stepless speed-changing mechanism 24 are disengaged as needed. A state of transmitting the power via the external lockup route is defined as the third power transmission state.

In the embodiment, at the time it is appropriate to continuously speed-change the planetary stepless speed-changing mechanism 24, the power transmission is performed by continuously speed-changing the planetary stepless speed-changing mechanism 24. At the time it is appropriate to cause the planetary stepless speed-changing mechanism 24 to operate in the internal lockup, the power transmission is performed by causing the planetary stepless speed-changing mechanism 24 to operate in the internal lockup. At the time it is appropriate to perform the power transmission via the direct joint mechanism 27, the power transmission is performed via the direct joint mechanism 27.

Table 1 described below shows a combination of power transmission routes in the speed-changing device 21 provided with both the internal lockup and the external lockup. In this case, the multistage speed-changing mechanism 26 is provided with shift stages of a forward three-speed and a backward one-speed. That is, the multistage speed-changing mechanism 26 can select the shift stage from a forward one-speed, a forward two-speed, a forward three-speed and a backward one-speed.

[Table 1]

| Name of power transmission state | Selection of planetary stepless speed-changing mechanism or external lockup mechanism | Multistage speed-changing mechanism | Vehicle speed [km/h] | Operation of wheel loader |
|---|---|---|---|---|
| forward one-speed stepless speed change | planetary stepless speed-changing mechanism (stepless speed-changing operation) | forward one-speed | 0 to 10 | excavation startup transport deadhead |
| forward one-speed internal lockup | planetary stepless speed-changing mechanism (internal lockup operation) | forward one-speed | 5 to 10 | transport deadhead |
| forward one-speed external lockup | external lockup mechanism | forward one-speed | 7 to 14 | transport deadhead |
| forward two-speed internal lockup | planetary stepless speed-changing mechanism (internal lockup operation) | forward two-speed | 9 to 18 | deadhead |
| forward two-speed external lockup | external lockup mechanism | forward two-speed | 12 to 24 | deadhead |
| forward three-speed internal lockup | planetary stepless speed-changing mechanism (internal lockup operation) | forward three-speed | 16 to 31 | deadhead |
| forward three-speed external lockup | external lockup mechanism | forward three-speed | 20 to 40 | deadhead |
| backward one-speed stepless speed change | planetary stepless speed-changing mechanism (stepless speed-changing operation) | backward one-speed | 0 to 12 | startup transport deadhead |
| backward one-speed internal lockup | planetary stepless speed-changing mechanism (internal lockup operation) | backward one-speed | 6 to 12 | transport deadhead |

7

(continued)

| Name of power transmission state | Selection of planetary stepless speed-changing mechanism or external lockup mechanism | Multistage speed-changing mechanism | Vehicle speed [km/h] | Operation of wheel loader |
|---|---|---|---|---|
| backward one-speed external lockup | external lockup mechanism | backward one-speed | 8 to 16 | transport deadhead |

As shown in Table 1, at the forward traveling, the power transmission states are arranged in order of "forward one-speed stepless speed change", "forward one-speed internal lockup", "forward one-speed external lockup", "forward two-speed internal lockup", "forward two-speed external lockup", "forward three-speed internal lockup" and "forward three-speed external lockup" from the traveling state where the vehicle speed is low. At the backward traveling, the power transmission states are arranged in order of "backward one-speed stepless speed change", "backward one-speed internal lockup" and "backward one-speed external lockup" from the traveling state where the vehicle speed is low.

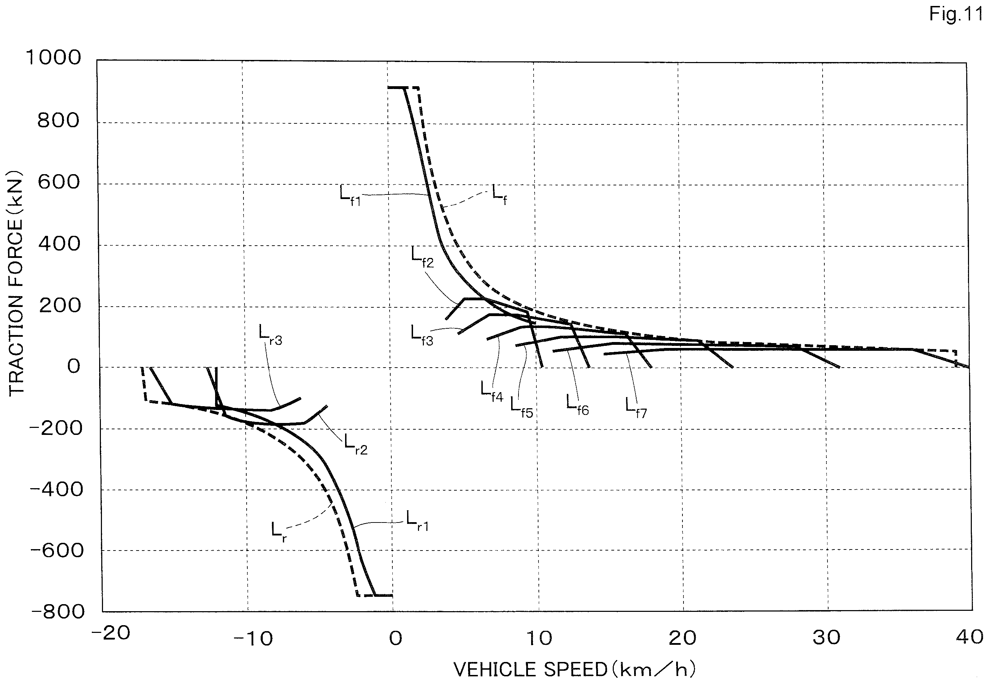

Fig. 11 shows a drive force diagram of the speed-changing device 21 provided with the power transmission states in Table 1. As shown in Fig.11, as to the forward travel, the speed change is made possible in seven stages of a forward one-speed stepless speed change Lf1, a forward one-speed internal lockup Lf2, a forward one-speed external lockup Lf3, a forward two-speed internal lockup Lf4, a forward two-speed external lockup Lf5, a forward three-speed internal lockup Lf6 and a forward three-speed external lockup Lf7.

On the other hand, as to the backward travel, the speed change is made possible in three stages of a backward one-speed stepless speed change Lr1, a backward one-speed internal lockup Lr2 and a backward one-speed external lockup Lr3. The speed-changing device 21 provided with the power transmission states in Table 1 can obtain a high traction force at the startup in the backward direction, and a high vehicle speed (0 to 16km/h) can be obtained at the transporting and the deadheading. In addition, the wheel loader 1 can stably travel on the upslopes at various grades.

It should be noted that when the speed stage of the multistage speed-changing mechanism 26 is at a forward two-speed and/or a forward three-speed, the power transmission state of the stepless speed-changing operation may be provided. For example, a combination of power transmission routes as shown in Table 2 described below may be adopted.

[Table 2]

| Name of power transmission state | Selection of planetary stepless speed-changing mechanism or external lockup mechanism | Multistage speed-changing mechanism | Vehicle speed [km/h] | Operation of wheel loader |
|---|---|---|---|---|
| forward one-speed stepless speed change | planetary stepless speed-changing mechanism (stepless speed-changing operation) | forward one-speed | 0 to 10 | excavation startup transport deadhead |
| forward one-speed internal lockup | planetary stepless speed-changing mechanism (internal lockup operation) | forward one-speed | 5 to 10 | transport deadhead |
| forward one-speed external lockup | external lockup mechanism | forward one-speed | 7 to 14 | transport deadhead |
| forward two-speed stepless speed change | planetary stepless speed-changing mechanism (stepless speed-changing operation) | forward two-speed | 0 to 18 | excavation startup transport deadhead |
| forward two-speed internal lockup | planetary stepless speed-changing mechanism (internal lockup operation) | forward two-speed | 9 to 18 | deadhead |
| forward two-speed external lockup | external lockup mechanism | forward two-speed | 12 to 24 | deadhead |
| forward three-speed stepless speed change | planetary stepless speed-changing mechanism (stepless speed-changing operation) | forward three-speed | 0 to 31 | excavation startup transport deadhead |
| forward three-speed internal lockup | planetary stepless speed-changing mechanism (internal lockup operation) | forward three-speed | 16 to 31 | deadhead |

(continued)

| Name of power transmission state | Selection of planetary stepless speed-changing mechanism or external lockup mechanism | Multistage speed-changing mechanism | Vehicle speed [km/h] | Operation of wheel loader |
| --- | --- | --- | --- | --- |
| forward three-speed external lockup | external lockup mechanism | forward three-speed | 20 to 40 | deadhead |
| backward one-speed stepless speed change | planetary stepless speed-changing mechanism (stepless speed-changing operation) | backward one-speed | 0 to 12 | startup transport deadhead |
| backward one-speed internal lockup | planetary stepless speed-changing mechanism (internal lockup operation) | backward one-speed | 6 to 12 | transport deadhead |
| backward one-speed external lockup | external lockup mechanism | backward one-speed | 8 to 16 | transport deadhead |

As shown in Table 2, at the forward traveling, the power transmission states may be arranged in order of "forward one-speed stepless speed change", "forward one-speed internal lockup", "forward one-speed external lockup", "forward two-speed stepless speed change", "forward two-speed internal lockup", "forward two-speed external lockup", "forward three-speed stepless speed change", "forward three-speed internal lockup" and "forward three-speed external lockup" from the traveling state where the vehicle speed is low. At the backward traveling, the power transmission states are arranged as similar to those in Table 1.

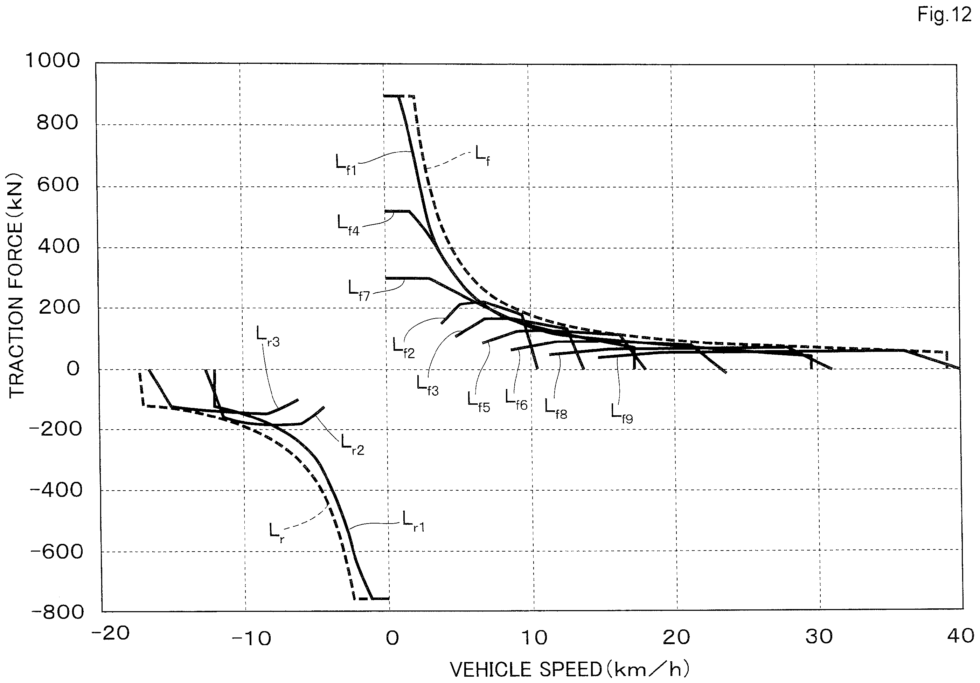

Fig. 12 shows a drive force diagram of the speed-changing device 21 provided with the power transmission states in Table 2. As shown in Fig. 12, as to the forward travel, the speed change is made possible in nine stages of a forward one-speed stepless speed change Lf1, a forward one-speed internal lockup Lf2, a forward one-speed external lockup Lf3, a forward two-speed stepless speed change Lf4, a forward two-speed internal lockup Lf5, a forward two-speed external lockup Lf6, a forward three-speed stepless speed change Lf7, a forward three-speed internal lockup Lf8 and a forward three-speed external lockup Lf9.

An advantage of having the forward two-speed stepless speed change Lf4 and the forward three-speed stepless speed change Lf7 lies at the time of changing the power transmission state from the forward two-speed stepless speed change Lf4 to the forward one-speed external lockup Lf3 and at the time of changing the power transmission state from the forward three-speed stepless speed change Lf7 to the forward two-speed external lockup Lf6. In a case where in the wheel loader 1, the speed-changing device 21 transmits a traction force equal to or more than 70% of the vehicle speed corresponding to Lf line as shown in Fig. 12, it is preferable not to use the forward two-speed stepless speed change Lf4 and the forward three-speed stepless speed change Lf7 for fuel saving. This is because in the stepless speed-changing state, a power transmission efficiency of the speed-changing device 21 is inferior as compared with that of the internal lockup or external lockup.

On the other hand, in a case where the speed-changing device 21 transmits a traction force equal to or less than 40% of the vehicle speed corresponding to Lf line, it is preferable to use the forward two-speed stepless speed change Lf4 and the forward three-speed stepless speed change Lf7 for fuel saving. This is because in the stepless speed-changing state, the power transmission efficiency of the speed-changing device 21 is inferior as compared with that of the internal lockup or external lockup but an efficiency of the engine 9 as a power source deteriorates more than that. In this case, the rotation speed of the engine 9 is lowered to improve the efficiency of the engine 9, thereby making it possible to improve a total efficiency of the speed-changing device 21 and the engine 9. Specifically, when the speed-changing device 21 transmits the traction force equal to or less than 40% of the vehicle speed corresponding to Lf line in a range of a vehicle speed of 0 to 16 km/h, the forward three-speed stepless speed change can achieve fuel efficiency. Also, when the speed-changing device 21 transmits the traction force equal to or less than 40% of the vehicle speed corresponding to Lf line in a range of a vehicle speed of 0 to 9 km/h, the forward two-speed stepless speed change can achieve fuel efficiency.

Next, an explanation will be made of the planetary stepless speed-changing mechanism 24 with reference to Fig. 3. The planetary stepless speed-changing mechanism 24 is provided with the planetary gear mechanism 29 as a planetary mechanism, the first variator 33, a second variator 34, a transmission element 35, the second clutch 36 and the third clutch 37. The planetary gear mechanism 29 is connected via a first connecting member 30 to an input side (engine 9-side). The planetary gear mechanism 29 is connected via a second connecting member 31 to a first output side (first variator 33-side). The planetary gear mechanism 29 is connected via a third connecting member 32 to a second output side (idler element 28-side).

The first variator 33 and the second variator 34 are configured of an electric motor and generator (an electric motor and an electric generator), or a hydraulic pump and motor (a hydraulic pump and a hydraulic motor). Specifically in a case where the first variator 33 is configured of the electric motor (electric generator), the second variator 34 is configured of the electric generator (electric motor). In a case where the first variator 33 is configured of the hydraulic pump (hydraulic motor), the second variator 34 is configured of the hydraulic motor (hydraulic pump). As shown in Fig. 7 to be described later, in the embodiment the first variator 33 and the second variator 34 are configured of the hydraulic pump and motor (fluid-pressure rotary machine of performing a pumping operation or a motoring operation, more specifically a hydraulic rotary machine).

The first variator 33 (hereinafter, also called a first hydraulic pump and motor 33) and the second variator 34 (hereinafter, also called a second hydraulic pump and motor 34) are configured to be able to, in a case where a rotation speed of the first variator 33 is different from that of the second variator 34, perform the power transmission between them while continuously performing the speed change. Therefore, the transmission element 35 is disposed between the first variator 33 and the second variator 34 to transmit the power therebetween. The transmission element 35 is configured of, for example, an electrical wire or a hydraulic pipe arrangement. As shown in Fig. 7, in the embodiment the transmission element 35 is configured of a pair of main pipelines 35A, 35B (a first main pipeline 35A and a second main pipeline 35B).

A power absorption source 38 is disposed in the middle of the transmission element 35. The power absorption source 38 is a device for absorbing (disposing of or storing) power. The power absorption source 38 absorbs (disposes of or stores) the power exceeding an amount of the power that can be received by the second variator 34 out of the power of the first variator 33. In addition, the power absorption source 38 absorbs (disposes of or stores) the power exceeding an amount of the power that can be received by the first variator 33 out of the power of the second variator 34.

The power absorption source 38 may be configured of, for example, a hydraulic accumulator or an electric storage device (storage battery) as a device for storing power (power storage device). In addition, the power absorption source 38 may be configured of, for example, a communication valve (relief valve or on-off valve) or a resistance device (electrical resistance) as a device for disposing of power (power disposing device). As shown in Fig. 7, in the embodiment the power absorption source 38 is configured of variable relief valves 38A, 38B (first variable relief valve 38A and second variable relief valve 38B). The functions of the first variator 33, the second variator 34 and the transmission element 35 may be achieved by a transmission with a limitless speed change ratio (IVT). In a case where the first variator 33 and the second variator 34 are configured of the electric motor and generator, they may be configured to be provided with an inverter and a converter as needed.

The second clutch 36 is disposed between the planetary gear mechanism 29 and the first variator 33, that is, between the second connecting member 31 and the first variator 33. The second clutch 36 is configured of, for example, a clutch (friction plates) by friction joint, a dog clutch or a dog clutch with synchromesh. The second clutch 36 performs mechanical engagement (connection) and disengagement of the second connecting member 31 and the first variator 33 therebetween. That is, the second clutch 36 switches the transmission and release of power of the planetary gear mechanism 29 and the first variator 33 therebetween.

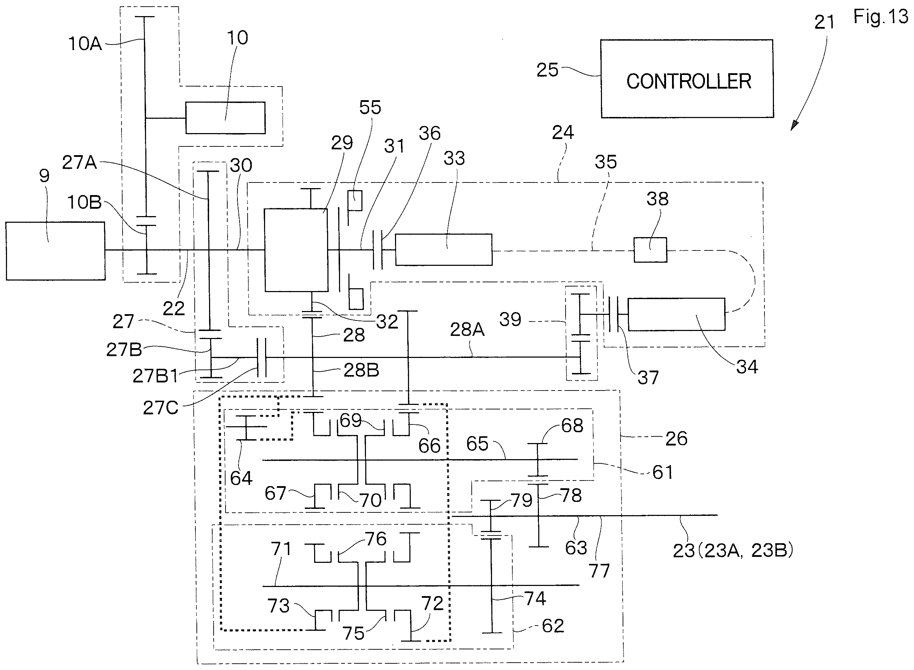

The controller 25 is configured of a microcomputer provided with, for example, a calculation circuit (CPU), a memory and the like. The controller 25 controls engagement and disengagement of the first clutch 27C, engagement and disengagement of the second clutch 36 and engagement and disengagement of the third clutch 37. The controller 25 controls a rotation speed of the first variator 33. The controller 25 controls a rotation speed of the second variator 34. The controller 25 controls the power absorption source 38 (variable relief valves 38A, 38B). The controller 25 controls a brake mechanism 55 (Fig. 13) to be described later, as needed. Further, the controller 25 controls engagement and disengagement of a forward one-speed clutch 69, a backward one-speed clutch 70, a forward two-speed clutch 75 and a forward three-speed clutch 76 in the multistage speed-changing mechanism 26 to be described later.

Here, the controller 25 controls the engagement and disengagement of the second clutch 36. For example, when the power transmission by the planetary stepless speed-changing mechanism 24 is unnecessary, the controller 25 outputs a signal for disengaging the second clutch 36 to disengage the second clutch 36. Thereby, the rotation of the first variator 33 can be stopped (or reduced) to reduce power losses due to the rotation of the first variator 33.

The second variator 34 is connected via the third clutch 37 to the idler element 28. The third clutch 37 switches the transmission and release of power of the second variator 34 and the idler element 28 therebetween. That is, the third clutch 37 is disposed between the second variator 34 and the idler element 28. The idler element 28 is provided with the idler shaft 28A and the first idler gear 28B and a second idler gear 28C disposed in the idler shaft 28A. The idler shaft 28A is connected via the first clutch 27C to a lockup gear 27B (more specifically, a rotation shaft 27B1 of the lockup gear 27B) of the direct joint mechanism 27.

In addition, the idler shaft 28A is connected via a transmission 39 and the third clutch 37 to the second variator 34. The first idler gear 28B is meshed with the third connecting member 32 and is connected via the third connecting member 32 to the planetary gear mechanism 29. In addition, the first idler gear 28B is meshed with a counter gear 64 (backward one-speed gear 67) and a forward three-speed gear 73 in the multistage speed-changing mechanism 26. In addition, the second idler gear 28C is meshed with a forward one-speed gear 66 and a forward two-speed gear 72 in the multistage speed-changing mechanism 26. Because of this, the first idler gear 28B and the second idler gear 28C are connected to the multistage speed-changing mechanism 26.

The transmission 39 is disposed between the second variator 34 and the idler element 28 (idler shaft 28A) to perform a speed change between the second variator 34 and the idler element 28. This transmission 39 may be omitted. In this case, the third clutch 37 is disposed between the idler shaft 28A of the idler element 28 and a rotation shaft (second rotation shaft 43) of the second variator 34, and the engagement (connection) and disengagement of the idler shaft 28A and the rotation shaft of the second variator 34 can be performed by the third clutch 37.

The third clutch 37 is configured of, for example, a clutch (friction plates) by friction joint, a dog clutch or a dog clutch with synchromesh. The third clutch 37 performs mechanical engagement (connection) and disengagement of the second variator 34 and the idler element 28 therebetween. The controller 25 controls the engagement and disengagement of the third clutch 37. For example, when the power transmission by the second variator 34 is unnecessary, the controller 25 outputs a signal for disengaging the third clutch 37 to disengage the third clutch 37. Thereby, the rotation of the second variator 34 can be stopped (or reduced) to reduce power losses due to the rotation of the second variator 34. However, the third clutch 37 is not necessarily disengaged under these conditions.

The power transmitted to the first connecting member 30 from the engine 9 is distributed to the second connecting member 31 linked to the first variator 33 and the third connecting member 32 linked to the idler element 28 by the planetary gear mechanism 29. The power transmitted to the second connecting member 31 is transmitted via the second clutch 36, the first variator 33, the transmission element 35, the second variator 34, the third clutch 37 and the transmission 39 to the idler element 28. The power transmitted to the third connecting member 32 is transmitted to the idler element 28. A distribution ratio in torque between the second connecting member 31 and the third connecting member 32 is always constant and depends upon a type and a meshing radius of gears of the planetary gear mechanism 29.

However, since the distribution ratio in torque between the second connecting member 31 and the third connecting member 32 is constant, the power is not always transmitted from the first variator 33 to the second variator 34, and in some cases the power is transmitted from the second variator 34 to the first variator 33. The power to be transmitted from the third variator 32 to the idler element 28 is smaller in a loss than the power via the first variator 33 and the second variator 34 from the second connecting member 31. Therefore, the planetary stepless speed-changing mechanism 24 in which the variators 33, 34 and the planetary gear mechanism 29 are combined has a higher power transmission efficiency than the stepless speed-changing device configured to perform the power transmission by the variator only.

Fig. 7 shows a specific configuration of each of the first variator 33, the second variator 34, the transmission element 35 and the power absorption device 38. As shown in Fig. 7, the planetary stepless speed-changing mechanism 24 is provided with the planetary gear mechanism 29, a hydrostatic stepless speed-changing mechanism 41, the second clutch 36 and the third clutch 37. The hydrostatic stepless speed-changing mechanism 41 is provided with a first rotation shaft 42, the first hydraulic pump and motor 33 corresponding to the first variator 33, the pair of main pipelines 35A, 35B (the first main pipeline 35A and the second main pipeline 35B) corresponding to the transmission element 35, the second hydraulic pump and motor 34 corresponding to the second variator 34, a second rotation shaft 43, the variable relief valves 38A, 38B (the first variable relief valve 38A and the second variable relief valve 38B) corresponding to the power absorption device 38, a connecting pipeline 44, bypass pipelines 45, 46 and check valves 47, 48.

The first rotation shaft 42 is equivalent to an input shaft of the hydrostatic stepless speed-changing mechanism 41. The first rotation shaft 42 corresponds to a rotation shaft of the first hydraulic pump and motor 33. The second rotary shaft 43 is equivalent to an output shaft of the hydrostatic stepless speed-changing mechanism 41. The second rotation shaft 43 corresponds to a rotation shaft of the second hydraulic pump and motor 34. The first hydraulic pump and motor 33 is connected via the second clutch 36 to an output side of the planetary gear mechanism 29. The first hydraulic pump and motor 33 causes hydraulic oil to flow into the pair of main pipelines 35A, 35B due to the rotation of the first rotation shaft 42.

The first hydraulic pump and motor 33 is configured of, for example, a swash plate or an axial hydraulic pump of a variable displacement type (hydraulic rotary machine). The first hydraulic pump and motor 33 is hydraulic equipment (hydraulic pump or hydraulic motor) that functions as a hydraulic pump when power is inputted thereto from the first rotation shaft 42 and functions as a hydraulic motor when power is outputted to the first rotation shaft 42. The first hydraulic pump and motor 33 is provided with a regulator 33A for adjusting a capacity (pump capacity and motor capacity). The regulator 33A is variably controlled based upon commands (command signals $W_p$) from the controller 25.

The pair of main pipelines 35A, 35B establish connection between a pair of delivery/discharge ports of the first hydraulic pump and motor 33 and a pair of delivery/discharge ports of the second hydraulic pump and motor 34. The second hydraulic pump and motor 34 is connected via the pair of main pipelines 35A, 35B (first main pipeline 35A and second main pipeline 35B) to the first hydraulic pump and motor 33. The second hydraulic pump and motor 34 rotates by hydraulic oil supplied from the first hydraulic pump and motor 33. The second hydraulic pump and motor 34 is connected via the third clutch 37 and the transmission 39 to the idler element 28 (idler shaft 28A). The second hydraulic pump and motor 34 causes hydraulic oil to flow into the pair of main pipelines 35A, 35B due to the rotation of the second rotation shaft 43.

The second hydraulic pump and motor 34 is configured of, for example, a swash plate or an axial hydraulic pump of a variable displacement type (hydraulic rotary machine). The second hydraulic pump and motor 34 is hydraulic equipment (hydraulic motor or hydraulic pump that functions as a hydraulic motor when power is outputted to the second rotation shaft 43 and functions as a hydraulic pump when power is inputted thereto from the second rotation shaft 43. The second hydraulic pump and motor 34 is provided with a regulator 34A for adjusting a capacity (motor capacity and pump capacity). The regulator 34A is variably controlled based upon commands (command signals $W_M$) from the controller 25.

The hydrostatic stepless speed-changing mechanism 41 is provided with the variable relief valves 38A, 38B each setting pressure (relief setting pressure, relief start pressure) of which can be changed and the check valves 47, 48 that allow communication of hydraulic oil in one direction and block communication of hydraulic oil in the reversing direction. That is, the connection between the first main pipeline 35A and the second main pipeline 35B in the hydrostatic stepless speed-changing mechanism 41 is established by the connecting pipeline 44. The first hydraulic pump and motor 33 and the second hydraulic pump and motor 34 transmit the power by the communication of operating oil therebetween via the pair of main pipelines 35A, 35B. For example, when the rotation on the input shaft 22-side is changed to be transmitted to the output shaft 23-side, the pressure of the first main pipeline 35A is higher than that in the second main pipeline 35B. In addition, for example, when the rotation on the output shaft 23-side is changed to be transmitted to the input shaft 22-side, the pressure of the second main pipeline 35B is higher than that in the first main pipeline 35A. The pair of check valves 47, 48 are arranged in the connecting pipeline 44 for the connection between the first main pipeline 35A and the second main pipeline 35B.

The one check valve 47 (hereinafter, also called a first check valve 47) allows communication of hydraulic oil from the second main pipeline 35B-side toward the first main pipeline 35A-side and blocks the communication of hydraulic oil in the reversing direction. That is, the first check valve 47 causes the flow of the hydraulic oil from the second main pipeline 35B to the first main pipeline 35A to be in the communicating state and blocks the flow of the hydraulic oil from the first main pipeline 35A to the second main pipeline 35B. The other check valve 48 (hereinafter, also called the second check valve 48) allows communication of hydraulic oil from the first main pipeline 35A-side toward the second main pipeline 35B-side and blocks the communication of hydraulic oil in the reversing direction. That is, the second check valve 48 causes the flow of the hydraulic oil from the first main pipeline 35A to the second main pipeline 35B to be in the communicating state and blocks the flow of the hydraulic oil from the second main pipeline 35B to the first main pipeline 35A.

The bypass pipelines 45, 46 that bypass the respective check valves 47, 48 are connected to the connecting pipeline 44. The first bypass pipeline 45 branches off from the connecting pipeline 44 and bypasses the first check valve 47 to be connected to the connecting pipeline 44. The second bypass pipeline 46 branches off from the connecting pipeline 44 and bypasses the second check valve 48 to be connected to the connecting pipeline 44. The variable relief valves 38A, 38B are arranged in the middle of the bypass pipelines 45, 46.

That is, the first variable relief valve 38A is disposed in the middle of the first bypass pipeline 45. The first variable relief valve 38A causes the flow of the hydraulic oil from the first main pipeline 35A to the second main pipeline 35B to be in the blocking state in a case where the pressure of the first main pipeline 35A is equal to or less than a certain pressure and to be in the communicating state in a case where the pressure of the first main pipeline 35A exceeds the certain pressure. On the other hand, the second variable relief valve 38B is disposed in the middle of the second bypass pipeline 46. The second variable relief valve 38B causes the flow of the hydraulic oil from the second main pipeline 35B to the first main pipeline 35A to be in the blocking state in a case where the pressure of the second variable relief valve 38B is equal to or less than a certain pressure and to be in the communicating state in a case where the pressure of the second variable relief valve 38B exceeds the certain pressure. The variable relief valves 38A,38B each are configured of an electric relief valve (for example, an electromagnetic relief valve) an opening pressure (relief pressure) of which changes in response to command signals (command signal $W_A$, $W_B$) from the controller 25. A change in a setting pressure (relief setting pressure, that is, relief starting pressure) of each of the variable relief valves 38A,38B is made based upon command signals (command signal $W_A$, $W_B$) from the controller 25.

A first speed detector 49 is disposed in the input shaft 22 in the speed-changing device 21. The first speed detector 49 is a rotation detecting sensor that detects a rotation speed and a rotation direction of the input shaft 22. The rotation speed of the input shaft 22 corresponds to a rotation speed of the engine 9 (hereinafter, called an engine rotation speed $V_{in}$). The first speed detector 49 outputs a detection signal corresponding to the engine rotation speed $V_{in}$ to the controller 25. A second speed detector 50 is disposed in the output shaft 23 in the speed-changing device 21. The second speed detector 50 is a rotation detecting sensor that detects a rotation speed of the output shaft 23 (hereinafter, called an output rotation speed $V_{out}$) and a rotation direction of the output shaft 23. The output rotation speed $V_{out}$ corresponds to a vehicle speed. The second speed detector 50 outputs detection signals corresponding to the output rotation speed $V_{out}$ and the rotation direction to the controller 25.

A first pressure detector 51 is disposed in the first main pipeline 35A. The first pressure detector 51 is a pressure sensor that detects a hydraulic pressure (pressure) of the first main pipeline 35A. The first pressure detector 51 outputs a detection signal corresponding to hydraulic pressure $P_A$ of the first main pipeline 35A to the controller 25. A second pressure detector 52 is disposed in the second main pipeline 35B. The second pressure detector 52 is a pressure sensor that detects a hydraulic pressure (pressure) of the second main pipeline 35B. The second pressure detector 52 outputs a detection signal corresponding to hydraulic pressure $P_B$ of the second main pipeline 35B to the controller 25.

A third pressure detector 53 is disposed in the first clutch 27C. The third pressure detector 53 is a pressure sensor that detects a clutch pressure (pressure) of the first clutch 27C. The third pressure detector 53 outputs a detection signal corresponding to a clutch pressure $P_C$ of the first clutch 27C to the controller 25. An operation amount detector 8C (refer to Fig. 1) is disposed in the accelerator pedal 8A. The operation amount detector 8C is an operation amount detection sensor that detects an operation amount $\theta 1$ of the accelerator pedal 8A. The operation amount detector 8C outputs a detection signal corresponding to the operation amount $\theta 1$ of the accelerator pedal 8A to the controller 25. In addition, an output value (capacity $\theta 2$) of a capacity sensor (not shown) of the first hydraulic pump and motor 33 and an output value (capacity $\theta 3$) of a capacity sensor (not shown) of the second hydraulic pump and motor 34 are inputted to the controller 25.

As shown in Fig. 7, a command (command signal $C_1$) from the controller 25 is inputted to the first clutch 27C. Engagement and disengagement of the first clutch 27C are controlled based upon the command (command signal $C_1$) from the controller 25. A command (command signal $C_2$) from the controller 25 is inputted to the second clutch 36. Engagement and disengagement of the second clutch 36 are controlled based upon the command (command signal $C_2$) from the controller 25. A command (command signal $C_3$) from the controller 25 is inputted to the third clutch 37. Engagement and disengagement of the third clutch 37 are controlled based upon the command (command signal $C_3$) from the controller 25.

Next, an explanation will be made of the planetary gear mechanism 29. In Fig. 3 and Fig. 7, the planetary gear mechanism 29 is shown in a box (rectangular frame). The planetary gear mechanism 29 is provided with three members (rotation members) of a first member linked to the engine 9 as a power source, a second member linked to the first variator 33 and a third member linked to the idler element 28 on the output shaft 23-side. In the first embodiment, the planetary gear mechanism 29 is configured of a carrier and two sun gears (first sun gear and second sun gear). Table 3 described below shows a combination of the configuration elements (the carrier, the first sun gear and the second sun gear) in the planetary gear mechanism 29.

[Table 3]

| No. | First member linked to power source | Second member linked to first variator | Third member linked to idler element | Number of Figure |
|---|---|---|---|---|
| 1-A | carrier | first sun gear | second sun gear | Fig. 4 (first embodiment) Fig. 16 (fourth modification example) |
| 1-B | first sun gear | carrier | second sun gear | Fig. 14 (second modification example) |
| 1-C | first sun gear | second sun gear | carrier | Fig. 15 (third modification example) |

As shown in Fig. 4, Fig. 5 and Fig. 8, in the first embodiment (that is, No. 1-A in Table 3) the planetary gear mechanism 29 is provided with the carrier 29A corresponding to the first member, the first sun gear 29B corresponding to the second member, the second sun gear 29C corresponding to the third member, a planet gear 29D and a balance gear 29E. The first sun gear 29B, the second sun gear 29C, the planet gear 29D and the balance gear 29E do not necessarily require the power transmission by the meshing of gears but may perform the power transmission by friction of rollers (an outer peripheral surface thereof), for example.

The engine 9 is connected via the first connecting member 30 to the carrier 29A. The first sun gear 29B is connected via the second connecting member 31 to the first variator 33. The second sun gear 29C is connected via the third connecting member 32 to the idler element 28 (first idler gear 28B). The first sun gear 29B is meshed with the planet gear 29D. The second sun gear 29C is meshed with the balance gear 29E. The balance gear 29E is meshed with the planet gear 29D.

A rotating axis Sp (Fig. 8) of the planet gear 29D and a rotating axis Sb (Fig. 8) of the balance gear 29E are supported on the carrier 29A. Therefore, the planet gear 29D and the balance gear 29E revolve about a center axis S (Fig. 8) of the planetary gear mechanism 29 and rotate on its own axis. The planet gear 29D is provided with a gear part 29D1 meshing with the first sun gear 29B and a gear part 29D2 meshing with the balance gear 29E.

According to the first embodiment, the balance gear 29E is disposed between the second sun gear 29C and the planet gear 29D but may be disposed between the first sun gear 29B and the planet gear 29D. In addition, the balance gear 29E may be disposed both between the second sun gear 29C and the planet gear 29D and between the first sun gear 29B and the planet gear 29D or may not be disposed in both thereof.

Fig. 8 is a cross section showing the planetary gear mechanism 29 as viewed from the power source side. The carrier 29A, the first sun gear 29B and the second sun gear 29C are concentrically arranged. That is, the center axis S (rotation center axis) of each of the carrier 29A, the first sun gear 29B and the second sun gear 29C is in agreement therewith. The first sun gear 29B is meshed with the gear part 29D1 of the planet gear 29D. The second sun gear 29C is meshed with the balance gear 29E. The balance gear 29E is meshed with the gear part 29D2 of the planet gear 29D. The balance gear 29E and the planet gear 29D rotate freely in a rotating direction by the carrier 29A and are restricted in a revolving direction in relation to the center axis S in such a way that the meshing of the respective gears establishes. Therefore, the planet gear 29D rotates about the rotating axis Sp as the center axis of the planet gear 29D and revolves about the center axis S of the carrier 29A. Therefore, a trace Cp of the center axis (rotating axis Sp) of the planet gear 29D becomes a circle about the center axis S of the carrier 29A. The balance gear 29E rotates about the rotating axis Sb as the center axis of the balance gear 29E and revolves about the center axis S of the carrier 29A. Therefore, a trace Cb of the center axis (rotating axis Sb) of the balance gear 29E becomes a circle about the center axis S of the carrier 29A.

A meshing radius rs1 of the first sun gear 29B is a meshing radius of the first sun gear 29B-side at the time the first sun gear 29B is meshed with the planet gear 29D. A meshing radius rp1 of the gear part 29D1 of the planet gear 29D is a meshing radius of the gear part 29D1-side at the time the first sun gear 29B is meshed with the planet gear 29D. A meshing radius rs2 of the second sun gear 29C is a meshing radius of the second sun gear 29C-side at the time the second sun gear 29C is meshed with the balance gear 29E. A meshing radius rp2 of the gear part 29D2 of the planet gear 29D is a meshing radius of the planet part 29D-side at the time the balance gear 29E is meshed with the planet gear 29D.

In the first embodiment (No. 1-A in Table 3), since the carrier 29A is connected to a member (terminal) linked to the engine 9, that is, the first connecting member 30, torque Tc of the carrier 29A is torque that the engine 9 can generate. Since the first sun gear 29B is connected to a member (terminal) linked to the first variator 33, that is, the second connecting member 31, torque Ts1 of the first sun gear 29B is torque that the first variator 33 can generate. Since the second sun gear 29C is connected to a member (terminal) linked to the idler element 28, that is, the third connecting member 32, torque Ts2 of the second sun gear 29C is a torque reaction that receives from the first idler gear 28B.

A ratio of the torque Ts1 of the first sun gear 29B, the torque Ts2 of the second sun gear 29C and the torque Tc of the carrier 29A is invariable during the time when the planetary stepless speed-changing mechanism 24 is transmitting the power. The controller 25 outputs a signal for controlling the first variator 33 based upon this principle, and controls the torque of the second connecting member 31 (for example, the first sun gear 29B) linked to the first variator 33. That is, the controller 25 controls the torque of the second connecting member 31 (for example, the first sun gear 29B) by controlling the first variator 33. Thereby, the controller 25 indirectly controls the torque of the first connecting member 30 (for example, the carrier 29A) linked to the engine 9 and the torque of the third connecting member 32 (for example, the second sun gear 29C) linked to the idler element 28. As a result, the transmission torque can be controlled between the first connecting member 30 (for example, the carrier 29A) linked to the engine 9 and the third connecting member 32 (for example, the second sun gear 29C) linked to the idler element 28.

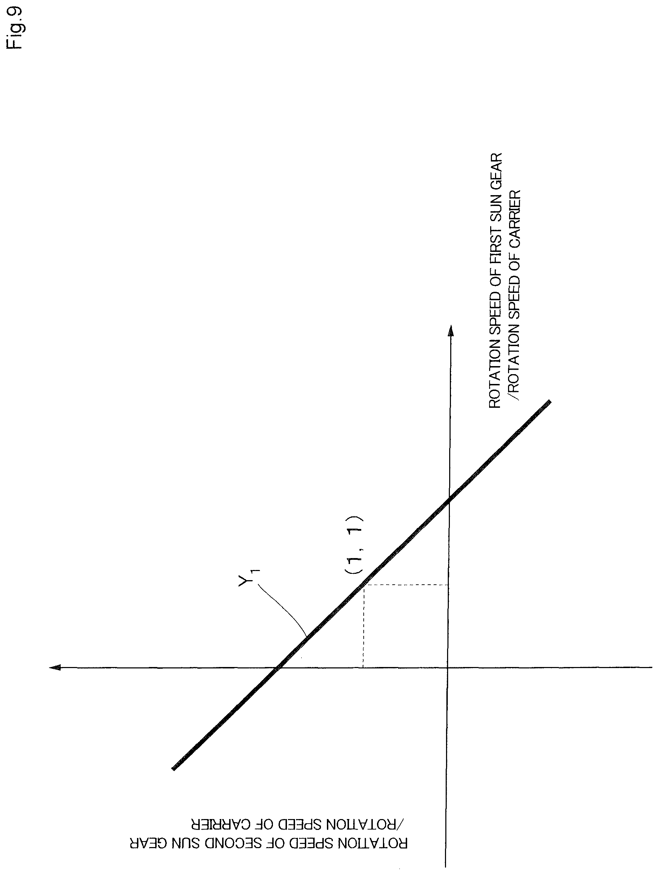

Fig. 9 shows a relation of rotation speeds of the planetary gear mechanism 29. It is assumed that the rotation speed of the carrier 29A is constant. In this case, when the rotation speed of the second sun gear 29C is made high, the rotation speed of the first sun gear 29B is made low. In contrast, when the rotation speed of the second sun gear 29C is made low, the rotation speed of the first sun gear 29B is made high. The controller 25 outputs a signal for controlling the first variator 33 based upon this principle and controls the rotation speed of the second connecting member 31 (for example, the first sun gear 29B) linked to the first variator 33. That is, the controller 25 controls the rotation speed of the second connecting member 31 (for example, the first sun gear 29B) by controlling the first variator 33. Thereby, the controller 25 indirectly controls the rotation speed of the first connecting member 30 (for example, the carrier 29A) linked to the engine 9 and the rotation speed of the third connecting member 32 (for example, the second sun gear 29C) linked to the idler element 28. As a result, the speed change ratio can be controlled between the first connecting member 30 (for example, the carrier 29A) linked to the engine 9 and the third connecting member 32 (for example, the second sun gear 29C) linked to the idler element 28.

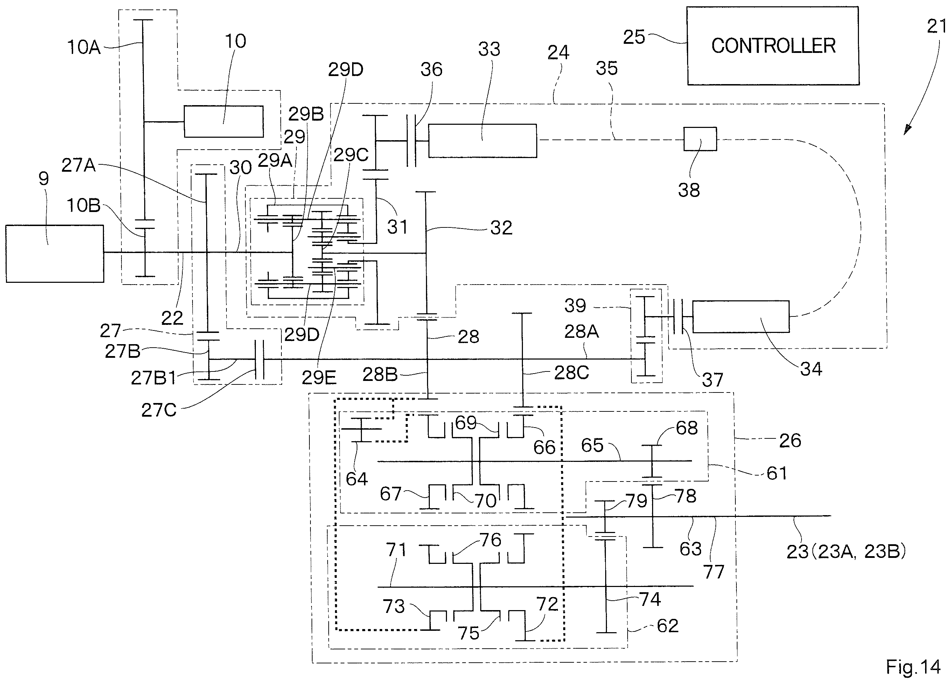

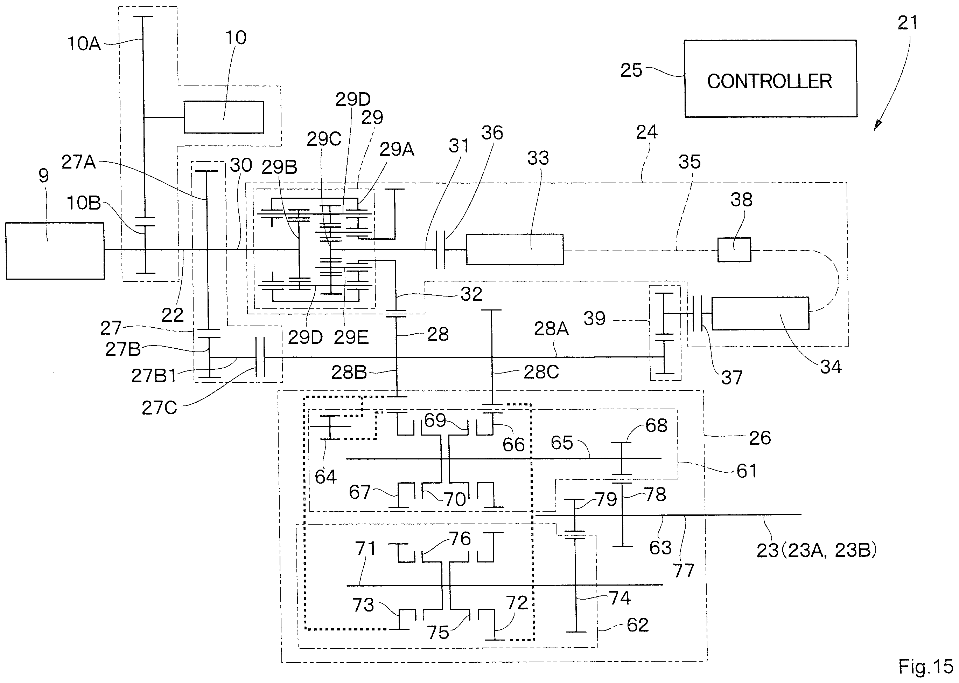

When "the rotation speed of the second sun gear/the rotation speed of the carrier" is 0, the rotation speed of the second sun gear 29C is 0. Since the second sun gear 29C is linked via the third connecting member 32, the idler element 28 and the multistage speed-changing mechanism 26 to the output shaft 23, in a case where the second sun gear 29C is $0min^{-1}$, the vehicle speed is 0km/h. That is, a speed change ratio of the planetary stepless speed-changing mechanism 24 is limitless. It should be noted that, as shown in a second modification example (that is, No. 1-B in Table 3) in Fig. 14, the planetary gear mechanism 29 may cause the first sun gear 29B to be connected to the first connecting member 30 as a member linked to the engine 9, the carrier 29A to be connected to the second connecting member 31 as a member linked to the first variator 33 and the second sun gear 29C to be connected to the third connecting member 32 as a member linked to the idler element 28. In addition, as shown in a third modification example (that is, No. 1-C in Table 3) in Fig. 15, the planetary gear mechanism 29 may cause the first sun gear 29B to be connected to the first connecting member 30, the second sun gear 29C to be connected to the second connecting member 31 and the carrier 29A to be connected to the third connecting member 32.

Next, an explanation will be made of the internal lockup operation of the planetary stepless speed-changed mechanism 24. A transmission efficiency of power between the planetary gear mechanism 29 and the idler element 28 is defined as described below. The transmission efficiency of the power transmission route via the third connecting member 32 is higher than the transmission efficiency of the power transmission route via the second connecting member 31, the first variator 33, the transmission element 35, the second variator 34, the third clutch 37 and the transmission 39. Therefore, for enhancing the transmission efficiency, the rotation of the second connecting member 31 linked to the first variator 33 has only to be stopped, not performing the power transmission between the first variator 33 and the second variator 34. In this case, the power supplied to the planetary gear mechanism 29 via the first connecting member 30 from the engine 9 is not distributed to the second connecting member 31 linked to the first variator 33, all of which is transmitted to the third connecting member 32 linked to the idler element 28.

For causing the planetary stepless speed-changing mechanism 24 to be in a state of the internal lockup, the rotation of the second connecting member 31 linked to the first variator 33 out of the three connecting members 30, 31, 32 linked to the planetary gear mechanism 29 has only to be stopped. In a case where the first variator 33 and the second variator 34 are the hydraulic pump and motor, the controller 25 holds a volume of the hydraulic pump and motor of the first variator 33 to a predetermined value or more (preferably 10% or more of the maximum volume) and controls a volume of the hydraulic pump and motor of the second variator 34 to 0.

In addition, the internal lockup state may be realized by fixing the rotation shaft of the first variator 33 to a non-rotation part to stop the rotation of the first variator 33. For example, as the first modification example as shown in Fig. 13, the internal lockup state may be realized by fixing the second connecting member 31 to a non-rotation part (for example, a case of the speed-changing device 21) by the brake mechanism 55. The brake mechanism 55 may adopt the configuration of fixing the second connecting member 31 linked to the first variator 33 to the non-rotation part by friction joint or mechanical meshing joint. Particularly in a case where the first variator 33 is an electric generator, it is preferable to fix the second connecting member 31 to the non-rotation part by the brake mechanism 55 from a point of view of power losses.

In a case of the speed-changing device 21 where the internal lockup operation and the external lockup operation of the planetary stepless speed-changing mechanism 24 can be performed, at the starting-up and at the excavating, the power transmission is performed by causing the planetary stepless speed-changing mechanism 24 to be continuously changed in a speed. At the transporting and at the deadheading, the power transmission is performed by causing the planetary stepless speed-changing mechanism 24 to be in the internal lockup or the power transmission is performed by an external lockup mechanism (direct joint mechanism 27). Thereby, at the starting-up and at the excavating (vehicle speed 0km/h to 7km/h) when the stepless speed change is necessary, the power transmission efficiency can be enhanced by the stepless speed change of the planetary stepless speed-changing mechanism 24. On the other hand, at the transporting and at the deadheading (vehicle speed 7km/h or higher) when the stepless speed change is not necessary, the power transmission efficiency can be enhanced by causing the planetary stepless speed-changing mechanism 24 to be in the internal lockup or by transmitting the power with the external lockup mechanism (direct joint mechanism 27), which is higher than that of the stepless speed change.

Next, an explanation will be made of the direct joint mechanism 27 as the external lockup mechanism with reference to Fig. 3 and Fig. 4. The direct joint mechanism 27 transmits the power supplied from the engine 9 to the idler gear 28B by the meshing of gears with each other not via the planetary stepless speed-changing mechanism 24. The direct joint mechanism 27 is provided with the input gear 27A disposed in the input shaft 22, a lockup gear 27B meshing with the input gear 27A, and the first clutch 27C. A rotation shaft 27B1 in which the lockup gear 27B is disposed is connected via the first clutch 27C to the idler shaft 28A of the idler element 28.

The first clutch 27C is disposed between the input shaft 22 (more specifically, the rotation shaft 27B1) and the idler shaft 28A. The first clutch 27C is configured of, for example, a clutch (friction plates) by friction joint, a dog clutch or a dog clutch with synchromesh. The first clutch 27C performs mechanical engagement (connection) and disengagement between the lockup gear 27B (rotation shaft 27B1) and the idler element 28B (idler shaft 28A). The second clutch 36 is disengaged and the first clutch 27C is engaged, whereby the power inputted from the input shaft 22 is transmitted via the input gear 27A, the lockup gear 27B and the first clutch 27C to the idler element 28 (first idler gear 28B and second idler gear 28C). Thereby, the power supplied from the engine 9 is transmitted via the direct joint mechanism 27 as the external lockup mechanism to the first idler gear 28B and the second idler gear 28C not via the planetary stepless speed-changing mechanism 24.

Here, an external lockup rotation speed ratio Ir is defined according to Equation 1 as described below. It should be noted that the number of teeth of the input gear 27A is indicated by "N27A" and the number of teeth of the lockup gear 27B is indicated by "N27B".

[Equation 1]

$$Ir = N27A/N27B$$

In a case of the speed-changing device 21 that is provided with the external lockup mechanism (direct joint mechanism 27) and performs the internal lockup operation, it is preferable that the external lockup rotation speed ratio Ir is equal to or more than the internal lockup output speed change ratio Ip. Preferably, for effectively using the speed change ratio of the planetary stepless speed-changing mechanism 24 more widely, the external lockup rotation speed ratio Ir is made larger than the internal lockup output speed change ratio Ip. As a result, a range of speed multiplication of the planetary stepless speed-changing mechanism 24 can be used more widely and effectively. The internal lockup output speed change ratio Ip is defined according to Equation 2 as described below. In this case, the number of teeth of the third connecting member 32 linked to the first idler gear 28B is indicated by "N32", the number of teeth of the first idler gear 28B is indicated by "N28B" and the internal lockup speed change ratio is indicated by "In".

[Equation 2]

$$Ip = In \times (\frac{N32}{N28})$$

The speed-changing device 21 that is provided with the external lockup mechanism (direct joint mechanism 27) and performs the internal lockup operation can perform the power transmission as follows, for example. At the starting-up and at the excavating (vehicle speed 0km/h to 7km/h) when the stepless speed change is necessary, the power transmission is performed while performing a stepless speed change via the planetary stepless speed-changing mechanism 24. At the transporting and at the deadheading (vehicle speed 7km/h or more) when the stepless speed change is not necessary, the power transmission is performed while executing the internal lockup via the planetary stepless speed-changing mechanism 24. At the transporting and at the deadheading (vehicle speed 10km/h or more) when the stepless speed change is not necessary, the power transmission is performed via the external lockup mechanism (direct joint mechanism 27). Thereby, the speed-changing device 21 can select a power transmission route that is the highest in the power transmission efficiency at all the operations of the excavating, the starting-up, the transporting and the deadheading.

Next, an explanation will be made of the multistage speed-changing mechanism 26. The multistage speed-changing mechanism 26 is a speed-changing mechanism that changes in a speed by the meshing of gears, the switching of clutches and the switching of a brake. The multistage speed-changing mechanism 26 corresponds to, for example, a planetary transmission, a countershaft type transmission, a manual transmission, an automated manual transmission, a dual clutch transmission and the like. In the first embodiment, the multistage speed-changing mechanism 26 is configured of the countershaft type transmission with forward three-speeds and backward one-speed.

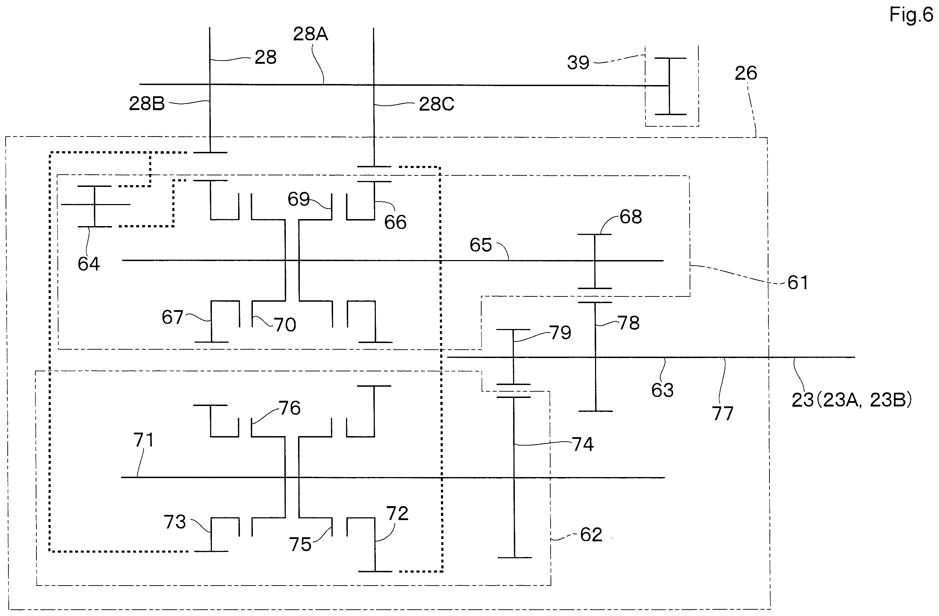

An explanation will be made of the multistage speed-changing mechanism 26 as the countershaft type transmission with reference to Fig. 6. The multistage speed-changing mechanism 26 is provided with a low range shaft unit 61, a high range shaft unit 62, an output shaft unit 63 and a counter gear 64. The low range shaft unit 61 includes a low range shaft 65, a forward one-speed gear 66, a backward one-speed gear 67, a low range gear 68, a forward one-speed clutch 69 and a backward one-speed clutch 70. The high range shaft unit 62 includes a high range shaft 71, a forward two-speed gear 72, a forward three-speed gear 73, a high range gear 74, a forward two-speed clutch 75 and a forward three-speed clutch 76. The counter gear 64 is a gear for reversing a rotation direction of an output shaft 77 in the output shaft unit 63. The output shaft unit 63 includes the output shaft 77, a low range output gear 78 and a high range output gear 79. The output shaft 77 in the output shaft unit 63 (that is, the output shaft 77 in the multistage speed-changing mechanism 26) corresponds to the output shaft 23 in the speed-changing device 21.

The backward one-speed gear 67 is always meshed with the first idler gear 28B via the counter gear 64 and rotates together with the first idler gear 28B. The forward three-speed gear 73 is always meshed with the first idler gear 28B and rotates together with the first idler gear 28B. The forward one-speed gear 66 is always meshed with the second idler gear 28C and rotates together with the second idler gear 28C. The forward two-speed gear 72 is always meshed with the second idler gear 28C and rotates together with the second idler gear 28C.

The backward one-speed clutch 70 performs engagement (connection) and disengagement of the backward one-speed gear 67 and the low range shaft 65. The backward one-speed gear 67 and the low range shaft 65 are engaged by the backward one-speed clutch 70, whereby the power transmission between the first idler gear 28B and the low range shaft 65 is made possible. The forward one-speed clutch 69 performs engagement (connection) and disengagement of the forward one-speed gear 66 and the low range shaft 65. The forward one-speed gear 66 and the low range shaft 65 are engaged by the forward one-speed clutch 69, whereby the power transmission between the second idler gear 28C and the low range shaft 65 is made possible.

The forward two-speed clutch 75 performs engagement (connection) and disengagement of the forward two-speed gear 72 and the high range shaft 71. The forward two-speed gear 72 and the high range shaft 71 are engaged by the forward two-speed clutch 75, whereby the power transmission between the second idler gear 28C and the high range shaft 71 is made possible. The forward three-speed clutch 76 performs engagement (connection) and disengagement of the forward three-speed gear 73 and the high range shaft 71. The forward three-speed gear 73 and the high range shaft 71 are engaged by the forward three-speed clutch 76, whereby the power transmission between the first idler gear 28B and the high range shaft 71 is made possible.

The low range gear 68 in the low range shaft unit 61 is always meshed with the low range output gear 78 in the output shaft unit 63, and the low range shaft 65 and the output shaft 77 rotate together. In addition, the high range gear 74 in the high range shaft unit 62 is always meshed with the high range output gear 79 in the output shaft unit 63, and the high range shaft 71 and the output shaft 77 rotate together.

That is, when the backward one-speed gear 67 and the low range shaft 65 are engaged (connected) by the backward one-speed clutch 70, the first idler gear 28B, the counter gear 64, the backward one-speed gear 67, the backward one-speed clutch 70, the low range shaft 65, the low range gear 68, the low range output gear 78 and the output shaft 77 rotate together. Because of this, it is possible to transmit the power transmitted to the idler element 28 (idler shaft 28A and first idler gear 28B) via the planetary stepless speed-changing mechanism 24 and the direct joint mechanism 27 to the output shaft 77.

When the forward one-speed gear 66 and the low range shaft 65 are engaged (connected) by the forward one-speed clutch 69, the second idler gear 28C, the forward one-speed gear 66, the forward one-speed clutch 69, the low range shaft 65, the low range gear 68, the low range output gear 78 and the output shaft 77 rotate together. Because of this, it is possible to transmit the power transmitted to the idler element 28 (idler shaft 28A and second idler gear 28C) via the planetary stepless speed-changing mechanism 24 or the direct joint mechanism 27 to the output shaft 77.

When the forward two-speed gear 72 and the high range shaft 71 are engaged (connected) by the forward two-speed clutch 75, the second idler gear 28C, the forward two-speed gear 72, the forward two-speed clutch 75, the high range shaft 71, the high range gear 74, the high range output gear 79 and the output shaft 77 rotate together. Because of this, it is possible to transmit the power transmitted to the idler element 28 (idler shaft 28A and second idler gear 28C) via the planetary stepless speed-changing mechanism 24 or the direct joint mechanism 27 to the output shaft 77.

When the forward three-speed gear 73 and the high range shaft 71 are engaged (connected) by the forward three-speed clutch 76, the first idler gear 28B, the forward three-speed gear 73, the forward three-speed clutch 76, the high range shaft 71, the high range gear 74, the high range output gear 79 and the output shaft 77 rotate together. Because of this, it is possible to transmit the power transmitted to the idler element 28 (idler shaft 28A and first idler gear 28B) via the planetary stepless speed-changing mechanism 24 or the direct joint mechanism 27 to the output shaft 77. Table 4 described below shows operations (engagement and disengagement) of the respective clutches 69, 70, 75, 76 in the multistage speed-changing mechanism 26.

[Table 4]

| Speed stage of multistage speed-changing mechanism | forward one-speed clutch | forward two-speed clutch | forward three-speed clutch | backward one-speed clutch |
|---|---|---|---|---|
| forward one-speed | engagement | disengagement | disengagement | disengagement |
| forward two-speed | disengagement | engagement | disengagement | disengagement |
| forward three-speed | disengagement | disengagement | engagement | disengagement |
| backward one-speed | disengagement | disengagement | disengagement | engagement |

In the backward one-speed, the backward one-speed clutch 70 is engaged (connected), and the forward one-speed clutch 69, the forward two-speed clutch 75 and the forward three-speed clutch 76 are disengaged. In the forward one-speed, the forward one-speed clutch 69 is engaged (connected), and the backward one-speed clutch 70, the forward two-speed clutch 75 and the forward three-speed clutch 76 are disengaged. In the forward two-speed, the forward two-speed clutch 75 is engaged (connected), and the forward one-speed clutch 69, the backward one-speed clutch 70 and the forward three-speed clutch 76 are disengaged. In the forward three-speed, the forward three-speed clutch 76 is engaged (connected), and the forward one-speed clutch 69, the backward one-speed clutch 70 and the forward two-speed clutch 75 are disengaged.

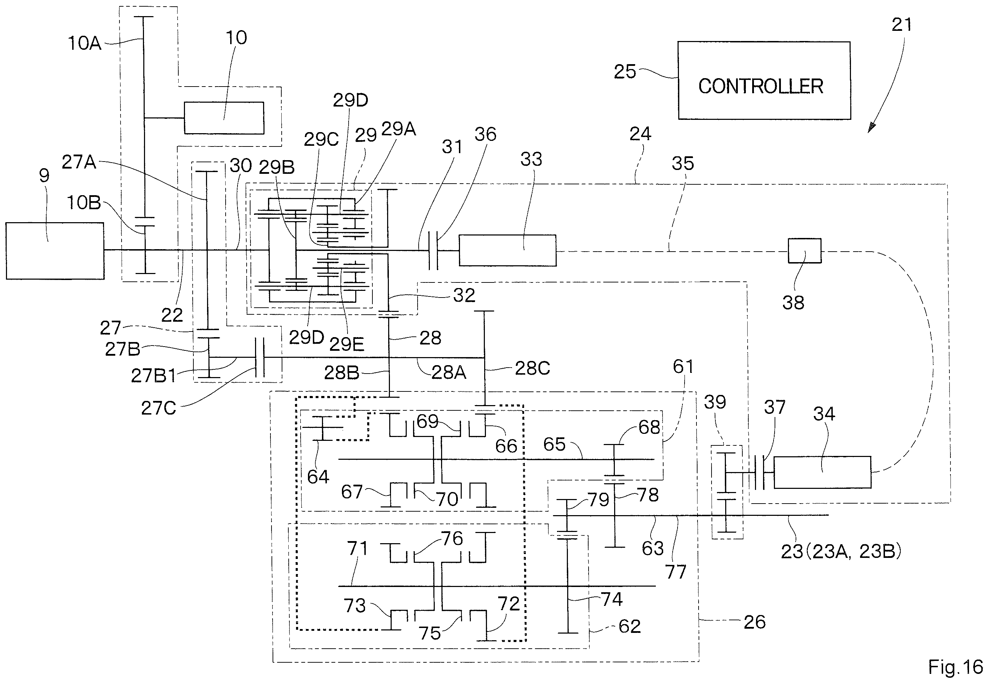

It should be noted that in the embodiment, the second variator 33 is connected via the third clutch 37 and the transmission 39 to the idler element 28 (idler shaft 28A). On the other hand, as shown in the fourth modification example in Fig. 16, the second variator 34 may be connected via the third clutch 37 and the transmission 39 to the output shaft 77 in the multistage speed-changing mechanism 26 (output shaft 23 in the speed-changing device 21).

Incidentally, it is considered a case of a speed-changing device in which six-speed is made possible. In this case, when the speed-changing device is configured so that the switching between the internal lockup and the external lockup is not performed, a sub-speed-changing mechanism of six-speed (multistage speed-changing mechanism) becomes necessary. On the other hand, when the speed-changing device is configured so that the switching between the internal lockup and the external lockup is performed, six-speed ($2 \times 3 = 6$) is made possible in a sub-speed-changing mechanism of three-speed (multistage speed-changing mechanism). Therefore, according to the configuration of performing the switching between the internal lockup and the external lockup, the number of speed stages (the number of shift stages) of the sub-speed-changing mechanism (multistage speed-changing mechanism) can be reduced, making it possible to achieve the downsizing and low cost of the sub-speed-changing mechanism (multistage speed-changing mechanism). In this case, however, for example, as shown in Table 1 and Table 2 described before, the speed change (switching) of the sub-speed-changing mechanism (multistage speed-changing mechanism) becomes necessary at the same time with the switching between the internal lockup and the external lockup, which makes the switching of the power transmission route very difficult.

There, it is considered a state where the power transmission by the internal lockup and the power transmission by the external lockup are performed at the same time as the switching between the internal lockup and the external lockup. In this case, the power generated by the engine 9 as the power source has a tendency of being transmitted via the direct joint mechanism 27 as the external lockup mechanism to the idler element 28 to be back from the idler element 28 via the planetary stepless speed-changing mechanism 24 to the engine 9. However, since a speed reduction ratio from the engine 9 to "the idler element 28 in a state of the internal lockup" is different from a speed reduction ratio from the engine 9 to "the idler element 28 in a state of the external lockup", a high load is applied to the engine 9 in that state. As a result, there is a possibility that the engine 9 stops and the rotation of the idler element 28 rapidly stops, causing the speed of the vehicle to be rapidly lowered.

Accordingly, performing the switching between the internal lockup and the external lockup, eventually performing the speed change (switching) of the sub-speed-changing mechanism (multistage speed-changing mechanism) at the same time as the switching tends to easily invite the slowdown and the rapid stop of the vehicle, which is a big issue. Therefore, in the embodiment, the switching between the internal lockup and the external lockup is smoothly performed, eventually the speed change (switching) of the sub-speed-changing mechanism (multistage speed-changing mechanism) can smoothly be performed. Because of this, the downsizing and the lowering cost of the multistage speed-changing mechanism are made possible. Hereinafter, an explanation will be made of the details of these points.

As shown in Fig. 7, the planetary stepless speed-changing mechanism 24 includes the planetary gear mechanism 29 and the hydrostatic stepless speed-changing mechanism 41. The pair of main pipelines 35A, 35B in the hydrostatic stepless speed-changing mechanism 41 are connected by the connecting pipeline 44. The first variable relief valve 38A, the second variable relief valve 38B, the first check valve 47 and the second check valve 48 are arranged in the connecting pipeline 44. Each setting pressure of the variable relief valves 38A, 38B (relief setting pressure, that is, relief start pressure) is controlled based upon command signals (command signals $W_A$, $W_B$) from the controller 25. The variable relief valves 38A, 38B correspond to communicating valves that can switch the communicating state and the blocking state between the pair of main pipelines 35A, 35B.

The controller 25 can cause the state of the variable relief valves 38A, 38B to be the blocking state, that is, the blocking state of blocking between the pair of main pipelines 35A, 35B by increasing each setting pressure of the variable relief valves 38A, 38B. The controller 25 can cause the state of the variable relief valves 38A, 38B to be the communicating state, that is, the communicating state of communicating between the pair of main pipelines 35A, 35B by decreasing the setting pressure of the variable relief valves 38A, 38B.

Each relief pressure of the variable relief valves 38A, 38B is usually set to a predetermined value at the high-pressure side (for example, from 35Mpa to 50Mpa). That is, in a case of transmitting the power via the planetary stepless speed-changing mechanism 24, the controller 25 sets each relief pressure of the variable relief valves 38A, 38B to a predetermined value at the high-pressure side (for example, from 35Mpa to 50Mpa). At this time, the operating fluid from the first hydraulic pump and motor 33 via the first main pipeline 35A toward the second hydraulic pump and motor 34, the operating fluid from the first hydraulic pump and motor 33 via the second main pipeline 35B toward the second hydraulic pump and motor 34, the operating fluid from the second hydraulic pump and motor 34 via the first main pipeline 35A toward the first hydraulic pump and motor 33 and the operating fluid from the second hydraulic pump and motor 34 via the second main pipeline 35B toward the first hydraulic pump and motor 33 can be sent without being bypassed in the middle by the connecting pipeline 44. As a result, the power transmission is made possible alternately between the first hydraulic pump and motor 33 and the second hydraulic pump and motor 34.

In addition, for example, when the pressure in the first main pipeline 35A is a high pressure (for example, 40MPa or more) equal to or more than a predetermined pressure and exceeds a relief pressure (a predetermined value at the high pressure side) of the first variable relief valve 38A, the operating fluid in the first main pipeline 35A flows via the connecting pipeline 44, the first variable relief valve 38A and the second check valve 48 to the second main pipeline 35B. When the pressure in the second main pipeline 35B is a high pressure (for example, 40MPa or more) equal to or more than a predetermined pressure and exceeds a relief pressure (a predetermined value at the high pressure side) of the second variable relief valve 38B, the operating fluid in the second main pipeline 35B flows via the connecting pipeline 44, the second variable relief valve 38B and the first check valve 47 to the first main pipeline 35A. As a result, the first hydraulic pump and motor 33 and the second hydraulic pump and motor 34 can be prevented from being damaged due to the pressure of the operating fluid being excessively high.

On the other hand, when the controller 25 causes the variable relief valves 38A, 38B to be in the communicating state (that is, when the communication between the pair of main pipelines 35A, 35B is established), the power transmission due to the hydraulic pressure in the hydrostatic stepless speed-changing mechanism 41 can be blocked. For example, the controller 25 can cause the operating fluid in the first main pipeline 35A to flow via the connecting pipeline 44, a first bypass pipeline 45, the first variable relief valve 38A, the connecting pipeline 44 and the second check valve 48 to the second main pipeline 35B by decreasing the relief pressure in the first variable relief valve 38A. Because of this, the operating fluid fed from the first hydraulic pump and motor 33 to the first main pipeline 35A bypasses the second hydraulic pump and motor 34 and is back to the first hydraulic pump and motor 33. As a result, the first hydraulic pump and motor 33 cannot transmit the power via the first main pipeline 35A to the second hydraulic pump and motor 34. Similarly, the operating fluid fed from the second hydraulic pump and motor 34 to the first main pipeline 35A bypasses the first hydraulic pump and motor 33 and is back to the second hydraulic pump and motor 34. As a result, the second hydraulic pump and motor 34 cannot transmit the power via the first main pipeline 35A to the first hydraulic pump and motor 33.

In addition, the controller 25 can cause the operating fluid in the second main pipeline 35B to flow via the connecting pipeline 44, a second bypass pipeline 46, the second variable relief valve 38B, the connecting pipeline 44 and the first check valve 47 to the first main pipeline 35A by decreasing the relief pressure in the second variable relief valve 38B. Because of this, the operating fluid fed from the first hydraulic pump and motor 33 to the second main pipeline 35B bypasses the second hydraulic pump and motor 34 and is back to the first hydraulic pump and motor 33. As a result, the first hydraulic pump and motor 33 cannot transmit the power via the second main pipeline 35B to the second hydraulic pump and motor 34. Similarly, the operating fluid fed from the second hydraulic pump and motor 34 to the second main pipeline 35B bypasses the first hydraulic pump and motor 33 and is back to the second hydraulic pump and motor 34. As a result, the second hydraulic pump and motor 34 cannot transmit the power via the second main pipeline 35B to the first hydraulic pump and motor 33.

In addition, for example, the controller can bypass the operating fluid in both directions between the first main pipeline 35A and the second main pipeline 35B by decreasing both the relief pressure of the first variable relief valve 38A and the relief pressure of the second variable relief valve 38B. In this case, the power cannot be transmitted in both directions between the first hydraulic pump and motor 33 and the second hydraulic pump and motor 34. It should be noted that it is not necessary to arrange both the first variable relief valve 38A and the second variable relief valve 38B, only one of them is disposed and the other is not required to be disposed. In addition, the first variable relief valve 38A and the second variable relief valve 38B each are not required to be configured of an electromagnetic relief valve, one of them is configured of an electromagnetic valve and the other may be configured of a relief valve of which a relief pressure is fixed (a fixed relief valve).

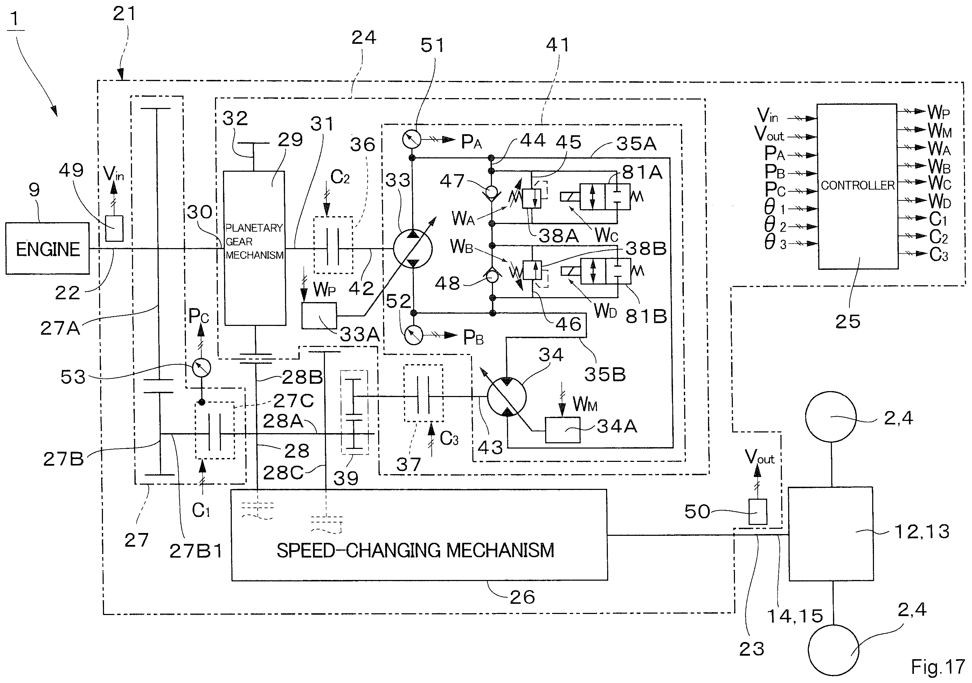

The hydrostatic stepless speed-changing mechanism 41 as shown in Fig. 7 uses the variable relief valves 38A, 38B as means of blocking the power transmission caused by the hydraulic pressure in the hydrostatic stepless speed-changing mechanism 41. On the other hand, as a fifth modification example as shown in Fig. 17, a first opening/closing valve 81A may be disposed parallel to the first variable relief valve 38A and a second opening/closing valve 81B may be disposed parallel to the second variable relief valve 38B. The first opening/closing valve 81A and the second opening/closing valve 81B switch the communicating state and the blocking state between the pair of main pipelines 35A, 35B. That is, in the fifth modification example as shown in Fig. 17, the first opening/closing valve 81A and the second opening/closing valve 81B switching the communicating state and the blocking state between the pair of main pipelines 35A, 35B are arranged between the pair of main pipelines 35A, 35B. The opening/closing valves 81A, 81B correspond to communicating valves that can switch the communicating state and the blocking state between the pair of main pipelines 35A, 35B.

That is, the first opening/closing valve 81A and the second opening/closing valve 81B can be switched to an opening position corresponding to the communicating state and a closing position corresponding to the blocking state. The switching between the first opening/closing valve 81A and the second opening/closing valve 81B is controlled based upon commands (command signal Wc, command signal Wd) from the controller 25. That is, the opening/closing valves 81A, 81B each are configured of an electric opening/closing valve (for example, an electromagnetic valve) that opens/closes based upon a command (command signal Wc, Wd) from the controller 25. In a case of this configuration, the communicating state between the pair of main pipelines 35A, 35B caused by decreasing the relief setting pressure of the first variable relief valve 38A can be achieved by opening the first opening/closing valve 81A. In addition, the communicating state between the pair of main pipelines 35A, 35B caused by decreasing the relief setting pressure of the second variable relief valve 38B can be achieved by opening the second opening/closing valve 81B.

That is, in the fifth modification example as shown in Fig. 17, the first opening/closing valve 81A is opened and the second opening/closing valve 81B is opened to establish the communicating state between the pair of main pipelines 35A, 35B, whereby it is possible to block the power transmission due to the hydraulic pressure in the hydrostatic stepless speed-changing mechanism 41. It should be noted that in a case of arranging the first opening/closing valve 81A and the second opening/closing valve 81B, the first variable relief valve 38A and the second variable relief valve 38B each may be changed to a relief valve of which a relief pressure is fixed (fixed relief valve). In addition, it is not necessary to arrange both of the first opening/closing valve 81A and the second opening/closing valve 81B and only one of them may be disposed.

Here, in a state of the internal lockup, the power is transmitted from the engine 9 via the planetary stepless speed-changing mechanism 24 and the multistage speed-changing mechanism 26 to the output shaft 23. The power transmitted from the engine 9 via the first connecting member 30 to the planetary gear mechanism 29 is transmitted to the third connecting member 32, whereas torque is generated in the second connecting member 31 to maintain the rotation of the planetary gear mechanism 29 to one degree of freedom. It is necessary to generate the torque of the first hydraulic pump 33 or to operate the brake mechanism 55 (Fig. 13) as a lockup mechanism at the internal lockup time for stopping the rotation of the second connecting member 31.

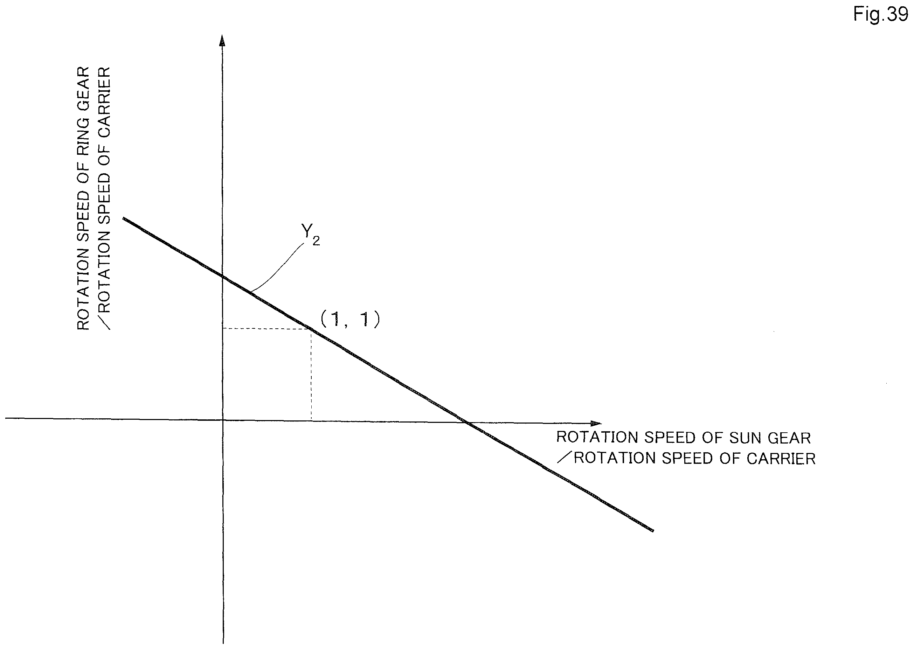

One degree of freedom, in a case of Fig. 9, means fixing a transmission gear ratio of the planetary gear mechanism 29 to a transmission gear ratio at the intersection point of Y1 line and a horizontal axis (rotation speed of first sun gear/rotation speed of carrier) or to a transmission gear ratio at the intersection point of Y1 line and a vertical axis (rotation speed of second sun gear/rotation speed of carrier). Similarly, in a case of Fig. 39 to be described later, one degree of freedom means fixing a transmission gear ratio of the planetary gear mechanism 29 to a transmission gear ratio at the intersection point of Y2 line and a horizontal axis (rotation speed of sun gear/rotation speed of carrier) or to a transmission gear ratio at the intersection point of Y2 line and a vertical axis (rotation speed of ring gear/rotation speed of carrier).

In a case of executing the internal lockup by the torque of the first hydraulic pump and motor 33, the controller 25 outputs a command signal $W_P$ so that the capacity of the first hydraulic pump and motor 33 amounts to be 10% to 100% and outputs a command signal $W_M$ so that the capacity of the second hydraulic pump and motor 34 amounts to be 0. The operating fluid generated by the rotation of the first hydraulic pump and motor 33 does not flow in the first main pipeline 35A and in the second main pipeline 35B due to no rotation of the second hydraulic pump and motor 34. On the other hand, as the first modification example as shown in Fig. 13, in a case of executing the internal lockup by the brake mechanism 55 as a lockup mechanism, the controller 25 engages the brake mechanism 55 to stop the rotation of the second connecting member 31.

Next, an explanation will be made of a case where each setting pressure of the variable relief valves 38A, 38B is high, that is, the variable relief valves 38A, 38B are in the blocking state.

First, an explanation will be made of a case where the engine 9 rotates in a clockwise direction from the engine 9 (power source) toward the direction of the output shaft 23 (axle) to give clockwise torque to the first connecting member 30. In this case, the clockwise torque operates to the second connecting member 31, causing a tendency of turning the first hydraulic pump and motor 33 in the clockwise direction. This is defined as "one direction". At this time, the operating fluid has a tendency of flowing in order of the first main pipeline 35A, the second hydraulic pump and motor 34 and the second main pipeline 35B from the first hydraulic pump and motor 33 to be back to the first hydraulic pump and motor 33. However, since the capacity of the second hydraulic pump and motor 34 is 0, the passing flow rate in the second hydraulic pump and motor 34 becomes extremely small. Therefore, the passing flow rate of the operating fluid in the first main pipeline 35A and the second main pipeline 35B is virtually 0. Because of this, even when the first hydraulic pump and motor 33 does not rotate, the counterclockwise torque can be given to the second connecting member 31.

On the other hand, an explanation will be made of a case where the engine 9 rotates in a clockwise direction from the engine 9 (power source) toward the direction of the output shaft 23 (axle) to give counterclockwise torque to the first connecting member 30. In this case, the counterclockwise torque operates to the second connecting member 31, causing a tendency of turning the first hydraulic pump and motor 33 in the counterclockwise direction. This is defined as "opposing direction". At this time, the operating fluid has a tendency of flowing in order of the second main pipeline 35B, the second hydraulic pump and motor 34 and the first main pipeline 35A from the first hydraulic pump and motor 33 to be back to the first hydraulic pump and motor 33. However, since the capacity of the second hydraulic pump and motor 34 is 0, the passing flow rate in the second hydraulic pump and motor 34 becomes extremely small. Therefore, the passing flow rate of the operating fluid in the second main pipeline 35B and the first main pipeline 35A is virtually 0. Because of this, even when the first hydraulic pump and motor 33 does not rotate, the clockwise torque can be given to the second connecting member 31.

Thus, the controller 25 causes both the first variable relief valve 38A and the second variable relief valve 38B to be in the blocking state, thus making it possible to cause the operating state of the first hydraulic pump and motor 33 to be a state of operating the torque (load) in both directions. In this case, the power transmission of the internal lockup is made possible in both "one direction" and "opposing direction".

Next, an explanation will be made of a case where when the setting pressure of the first variable relief valve 38A is high and the setting pressure of the second variable relief valve 38B is low, that is, the first variable relief valve 38A is in the blocking state and the second variable relief valve 38B is in the communicating state.

First, an explanation will be made of a case where the engine 9 rotates in a clockwise direction from the engine 9 (power source) toward the direction of the output shaft 23 (axle) to give clockwise torque to the first connecting member 30. In this case, the clockwise torque operates to the second connecting member 31, causing a tendency of turning the first hydraulic pump and motor 33 in the clockwise direction (one direction). At this time, the operating fluid has a tendency of flowing in order of the first main pipeline 35A, the second hydraulic pump and motor 34 and the second main pipeline 35B from the first hydraulic pump and motor 33 to be back to the first hydraulic pump and motor 33. However, since the capacity of the second hydraulic pump and motor 34 is 0, the passing flow rate in the second hydraulic pump and motor 34 becomes extremely small. Therefore, the passing flow rate of the operating fluid in the first main pipeline 35A and the second main pipeline 35B is virtually 0. Because of this, even when the first hydraulic pump and motor 33 does not rotate, the counterclockwise torque can be given to the second connecting member 31. That is, the power transmission of the internal lockup is made possible.

On the other hand, an explanation will be made of a case where the engine 9 rotates in a clockwise direction from the engine 9 (power source) toward the direction of the output shaft 23 (axle) to give counterclockwise torque to the first connecting member 30. In this case, the counterclockwise torque operates to the second connecting member 31, causing a tendency of turning the first hydraulic pump and motor 33 in the counterclockwise direction (opposing direction). At this time, the operating fluid flows from the first hydraulic pump and motor 33 via the second main pipeline 35B, the connecting pipeline 44, the second variable relief valve 38B and the first check valve 47 to the first main pipeline 35A to be back to the first hydraulic pump and motor 33. Because of this, the clockwise torque does not generate in the second connecting member 31. That is, the power transmission of the internal lockup is blocked.

Thus, the controller 25 causes the first variable relief valve 38A to be in the blocking state and the second variable relief valve 38B to be in the communicating state, thus making it possible to cause the operating state of the first hydraulic pump and motor 33 to be a state of operating the torque (load) in one direction and not operating the torque (load) in the opposing direction. In this case, the power transmission of the internal lockup is blocked in "opposing direction" and the power transmission of the internal lockup is made possible in "one direction".

Here, in a state of the internal lockup, the power is transmitted from the engine 9 via the planetary stepless speed-changing mechanism 24, the idler element 28 and the multistage speed-changing mechanism 26 to the output shaft 23. In a state of the external lockup, the power is transmitted from the engine 9 via the external lockup mechanism (direct joint mechanism 27), the idler element 28 and the multistage speed-changing mechanism 26 to the output shaft 23. When "a reduction gear ratio from the engine 9 to the idler element 28 in a state of the internal lockup" and "a reduction gear ratio from the engine 9 to the idler element 28 in a state of the external lockup" are compared, the reduction gear ratio in a state of the internal lockup is set to be greater. For example, in a case of the configuration as shown in Fig. 11 (configuration in Table 1 as described before), when the forward one-speed internal lockup Lf2 and the forward one-speed external lockup Lf3 are compared, the rotation of the output shaft 23 in the forward one-speed external lockup Lf3 is increased as compared to the rotation of the engine 9.

That is, when the internal lockup and the external lockup are operated simultaneously, the power generated in the engine 9 has a tendency of being transmitted via the external lockup mechanism (direct joint mechanism 27) to the idler element 28 to be back from the idler element 28 via the planetary stepless speed-changing mechanism 24 to the engine 9. However, since "a reduction gear ratio from the engine 9 to the idler element 28 in a state of the internal lockup" is different from "a reduction gear ratio from the engine 9 to the idler element 28 in a state of the external lockup", a high load is applied to the engine 9 as it is. Because of this, the engine 9 stops and the rotation of the idler element 28 rapidly stops, so that there is a possibility that the speed of the wheel loader 1 (vehicle) is rapidly lowered. Therefore, there is a major problem at the switching between the internal lockup and the external lockup.

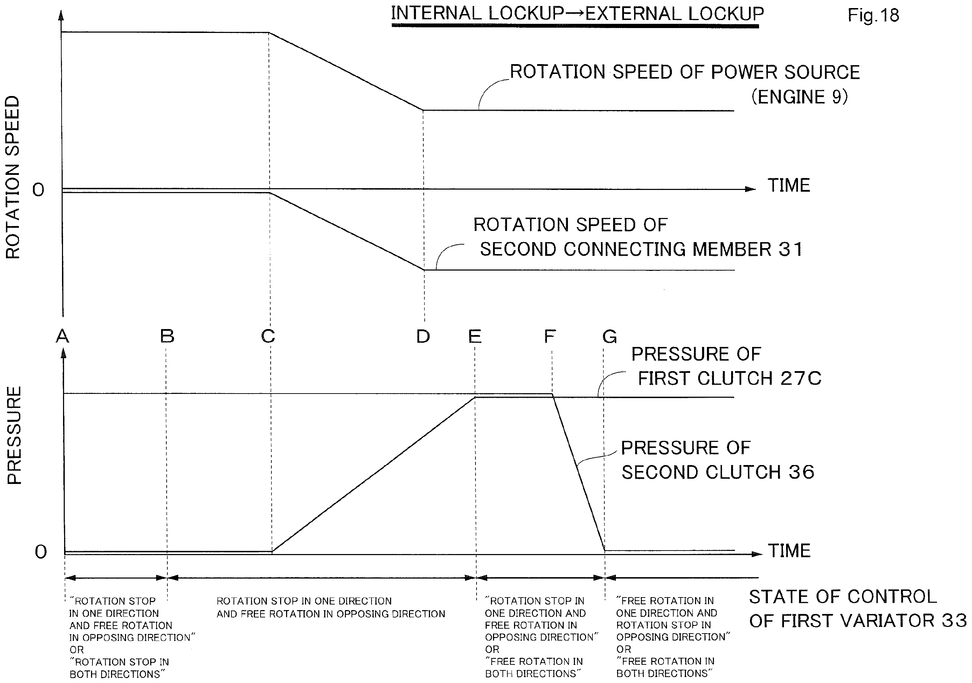

For solving this problem, it is required that the power transmission state of the internal lockup is made to be blocked "in the opposing direction" and the power transmission state of the internal lockup is made possible "in one direction". Fig. 18 is a characteristic diagram (time chart) showing an example of a change over time in a rotation speed of the engine 9 (power source), a rotation speed of the second connecting member 31, a pressure of the first clutch 27C and a pressure of the second clutch 36 at the switching from the "internal lockup" to the "external lockup". The first clutch 27C is a clutch (direct joint clutch and external lockup clutch) in the external lockup mechanism (direct joint mechanism 27). The second clutch 36 is a clutch for connection between the planetary gear mechanism 29 and the first hydraulic pump and motor 33.

The controller 25 controls the variable relief valves 38A, 38B to stop the rotation "in one direction" and release the rotation "in the opposing direction" of the operating state of the first hydraulic pump and motor 33 from time B to time E in Fig. 18. That is, the controller 25 causes the first variable relief valve 38A to be in the blocking state and the second variable relief valve 38B to be in the communicating state, thereby causing the operating state of the first hydraulic pump and motor 33 to be a state of operating the torque (load) in one direction and of not operating the torque (load) in the opposing direction. In this state, the controller 25 engages the first clutch 27 (increases pressure) from time C to time E in Fig. 18. Because of this, it is possible to avoid interference of power transmission between the internal lockup and the external lockup. In Fig. 18, the rotation speed of the engine 9 (power source) is lowered (a command for lowering the rotation speed is inputted to the engine 9) from time C to time D.

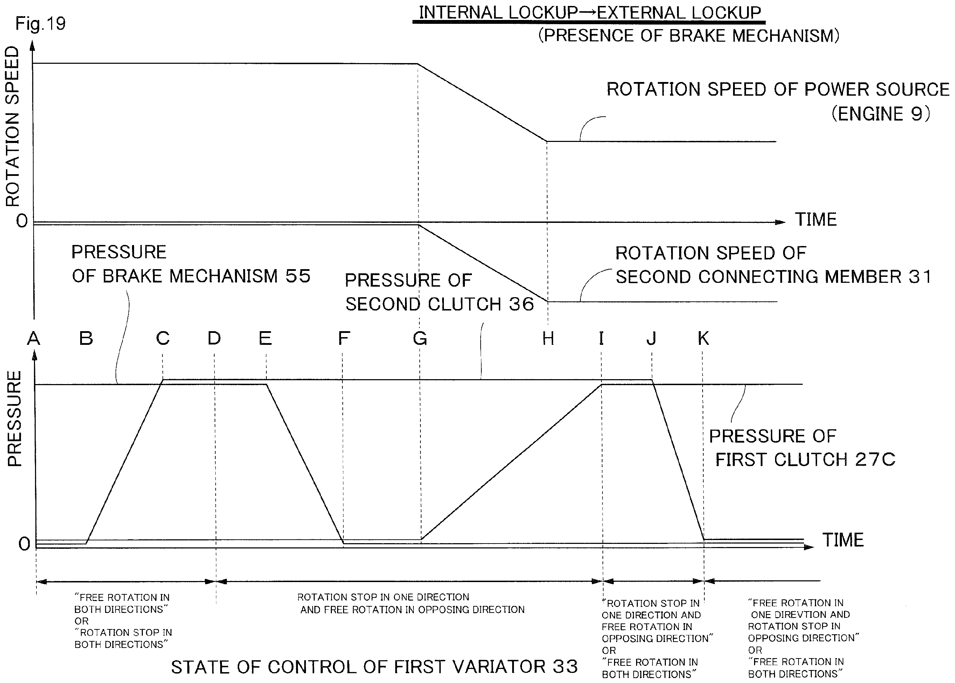

On the other hand, in a case of executing the internal lockup by the brake mechanism 55 as the first modification example as shown in Fig. 13, as shown in Fig. 19 the controller 25 releases the brake mechanism 55 (lowers pressure of) from time E to time F. In this case, from time D to time I in Fig. 19 the controller 25 controls the variable relief valves 38A, 38B to stop the rotation "in one direction" and release the rotation "in the opposing direction" of the operating state of the first hydraulic pump and motor 33. That is, the controller 25 causes the first variable relief valve 38A to be in the blocking state and the second variable relief valve 38B to be in the communicating state, thereby causing the operating state of the first hydraulic pump and motor 33 to be a state of operating the torque (load) in one direction and of not operating the torque (load) in the opposing direction. In this state, the controller 25 engages the first clutch 27C (increases pressure of) from time G to time I in Fig. 19.

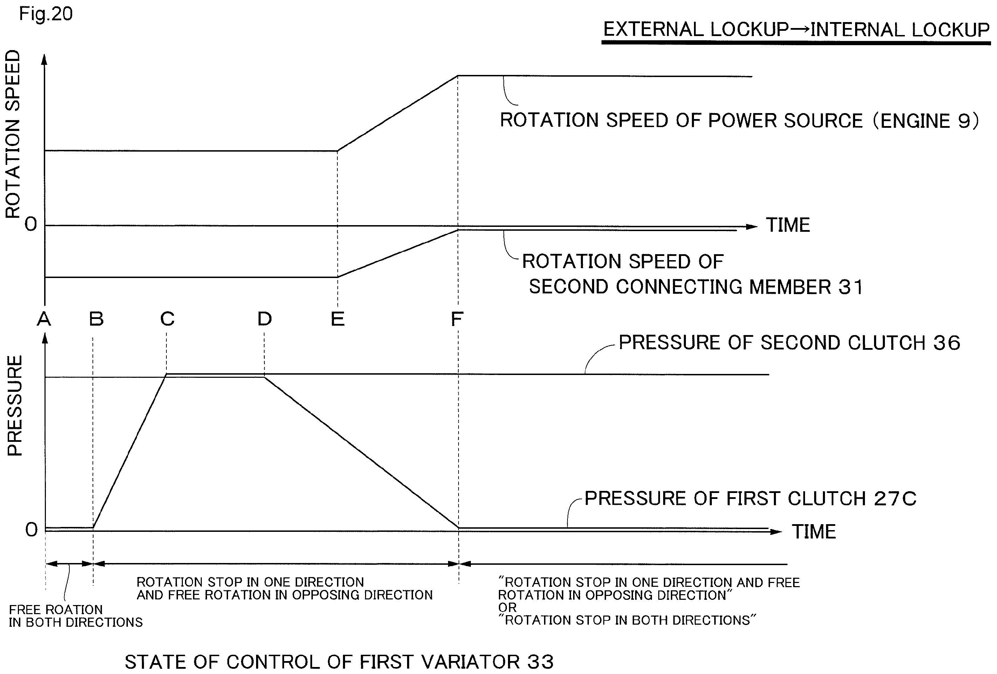

On the other hand, Fig. 20 is a characteristic diagram (time chart) showing an example of a change over time in a rotation speed of the engine 9 (power source), a rotation speed of the second connecting member 31, a pressure of the first clutch 27C and a pressure of the second clutch 36 at the switching from the external lockup to the internal lockup. The controller 25 controls the variable relief valves 38A, 38B to stop the rotation "in one direction" and release the rotation "in the opposing direction" of the operating state of the first hydraulic pump and motor 33 from time B to time F in Fig. 20. That is, the controller 25 causes the first variable relief valve 38A to be in the blocking state and the second variable relief valve 38B to be in the communicating state, thereby causing the operating state of the first hydraulic pump and motor 33 to be a state of operating the torque (load) in one direction and of not operating the torque (load) in the opposing direction. In this state, the controller 25 disengages the first clutch 27 (lowers pressure of) from time D to time F in Fig. 20. Because of this, it is possible to avoid the interference of power transmission between the internal lockup and the external lockup. In Fig. 20, the rotation speed of the engine 9 (power source) is increased (a command for increasing the rotation speed is inputted to the engine 9) from time E to time F.

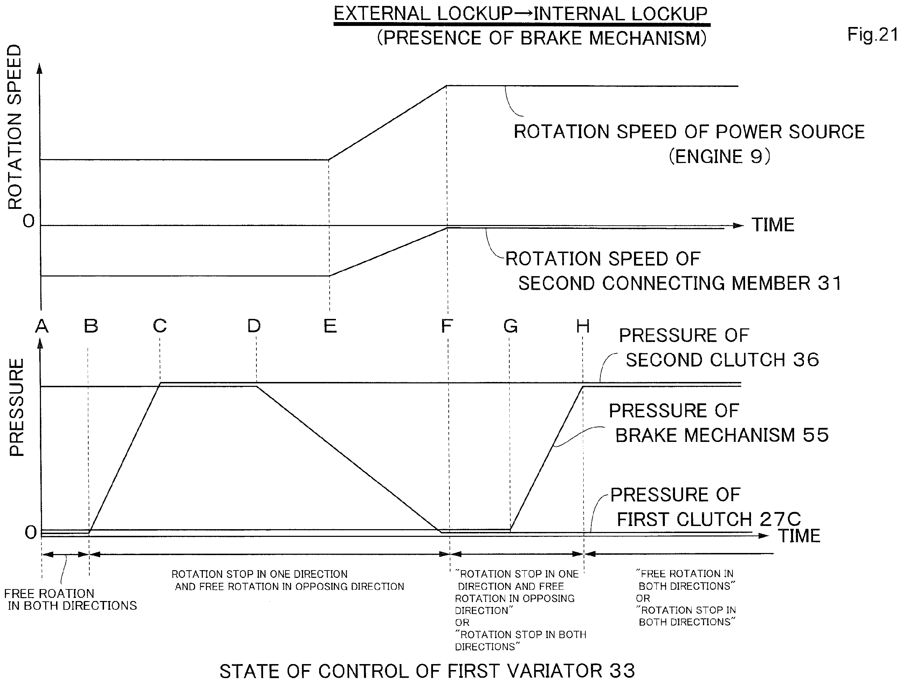

On the other hand, in a case of executing the internal lockup by the brake mechanism 55 as the first modification example as shown in Fig. 13, as shown in Fig. 21 the controller 25 controls the variable relief valves 38A, 38B to stop the rotation "in one direction" and release the rotation "in the opposing direction" of the operating state of the first hydraulic pump and motor 33 from time B to time F. That is, the controller 25 causes the first variable relief valve 38A to be in the blocking state and the second variable relief valve 38B to be in the communicating state, thereby causing the operating state of the first hydraulic pump and motor 33 to be a state of operating the torque (load) in one direction and of not operating the torque (load) in the opposing direction. In this state, the controller 25 releases the first clutch 27C (lowers pressure of) from time D to time F in Fig. 21. Thereafter, from time G to time H, the controller 25 engages the brake mechanism 55 (increases pressure of) to move completely to the internal lockup state.

Next, an explanation will be made of a case where the setting pressure of the first variable relief valve 38A is low and the setting pressure of the second variable relief valve 38B is high, that is, the first variable relief valve 38A is in the communicating state and the second variable relief valve 38B is in the blocking state.

First, an explanation will be made of a case where the engine 9 rotates in a clockwise direction from the engine 9 (power source) toward the direction of the output shaft 23 (axle) to give clockwise torque to the first connecting member 30. In this case, the clockwise torque operates to the second connecting member 31, causing a tendency of turning the first hydraulic pump and motor 33 in the clockwise direction (one direction). At this time, the operating fluid flows from the first hydraulic pump and motor 33 via the first main pipeline 35A, the connecting pipeline 44, the first variable relief valve 38A and the second check valve 48 to the second main pipeline 35B to be back to the first hydraulic pump and motor 33. Because of this, since the counterclockwise torque does not generate in the second connecting member 31, the first hydraulic pump and motor 33 rotates freely. That is, the power transmission of the internal lockup is blocked.

On the other hand, an explanation will be made of a case where the engine 9 rotates in a clockwise direction from the engine 9 (power source) toward the direction of the output shaft 23 (axle) to give counterclockwise torque to the first connecting member 30. In this case, the counterclockwise torque operates to the second connecting member 31, causing a tendency of turning the first hydraulic pump and motor 33 in the counterclockwise direction (opposing direction). At this time, the operating fluid has a tendency of flowing in order of the second main pipeline 35B, the second hydraulic pump and motor 34 and the first main pipeline 35A from the first hydraulic pump and motor 33 to be back to the first hydraulic pump and motor 33. However, since the capacity of the second hydraulic pump and motor 34 is 0, the passing flow rate in the second hydraulic pump and motor 34 becomes extremely small. Therefore, the passing flow rate of the operating fluid in the first main pipeline 35A and the second main pipeline 35B is virtually 0. Because of this, even when the first hydraulic pump and motor 33 does not rotate, the counterclockwise torque can be given to the second connecting member 31. That is, the power transmission of the internal lockup is made possible. Thus, the controller 25 causes the first variable relief valve 38A to be in the communicating state and the second variable relief valve 38B to be in the blocking state, thus making it possible to cause the operating state of the first hydraulic pump and motor 33 to be a state of operating the torque (load) in the opposing direction and of not operating the torque (load) in one direction. In this case, the power transmission of the internal lockup is made possible "in the opposing direction" and the power transmission of the internal lockup is blocked "in one direction".

However, for the switching between the internal lockup and the external lockup, it is required that the power transmission state of the internal lockup is blocked "in the opposing direction" and the power transmission state of the internal lockup is made possible "in one direction". Therefore, for the switching between the internal lockup and the external lockup, the relief pressure of the first variable relief valve 38A is required to be variable, but the relief pressure of the second variable relief valve 38B may be fixed.

Next, an explanation will be made of a case where when both the setting pressure of the first variable relief valve 38A and the setting pressure of the second variable relief valve 38B are low, that is, both the first variable relief valve 38A and the second variable relief valve 38B are in the communicating state.

In this case, both the clockwise torque and the counterclockwise torque cannot be generated in the second connecting member 31. That is, the controller 25 causes both the first variable relief valve 38A and the second variable relief valve 38B to be in the communicating state, thereby making it possible to cause the operating state of the first hydraulic pump and motor 33 to be a state of not operating the torque (load) in both directions. In this case, the internal lockup state is released in both "one direction" and "opposing direction".

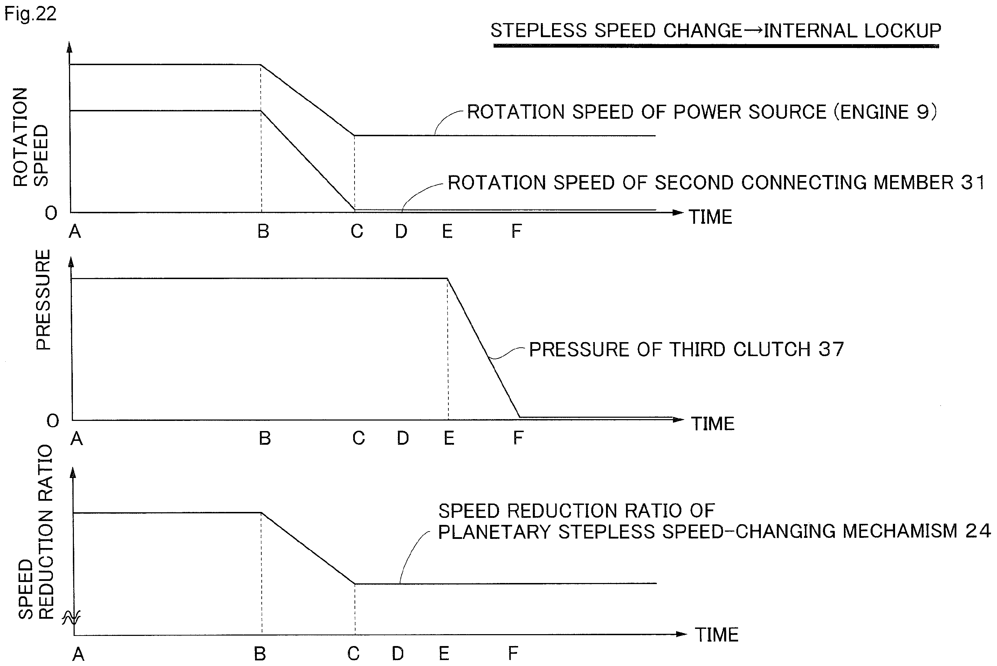

Next, an explanation will be made of a case where the power transmission state of the planetary stepless speed-changing mechanism 24 is switched from "stepless speed change" to "internal lockup", with reference to Fig. 22.

The switching from the stepless speed change to the internal lockup is expected in a case where the speed stages of the multistage speed-changing mechanism 26 are forward one-speed and backward one-speed in the configuration in Table 1 as described before, for example. In addition, the switching from the stepless speed change to the internal lockup is expected in a case where the speed stages of the multistage speed-changing mechanism 26 are forward one-speed, forward two-speed, forward three-speed and backward one-speed in the configuration in Table 2 as described before. Fig. 22 is a characteristic diagram (time chart) showing an example of a change over time in a rotation speed of the engine 9 (power source), a rotation speed of the second connecting member 31, a pressure of a third clutch 37 and a speed reduction ratio of the planetary stepless speed-changing mechanism 24 at the switching from "stepless speed change" to "internal lockup". The third clutch 37 is a clutch disposed between the second hydraulic pump and motor 34 and the idler element 28.

In a state of the stepless speed change from time A to time B in Fig. 22, the controller 25 engages the second clutch 36 and the third clutch 37 and disengages the first clutch 27C. In this state, the controller 25 adjusts the rotation speed of the first hydraulic pump and motor 33 and the rotation of the second connecting member 31 to obtain a desired speed reduction ratio. For the switching from the stepless speed change to the internal lockup, the controller 25 lowers the rotation speed of the first hydraulic pump and motor 33 to stop the rotation of the first hydraulic pump and motor 33 from time B to time C in Fig. 22. Because of this, the rotation of the second connecting member 31 is stopped. In addition, after time C in Fig. 22, the speed reduction ratio of the planetary stepless speed-changing mechanism 24 is constant and the power transmission stage changes from the stepless speed change to the internal lockup. The third clutch 37 disengages after time C for reduction of power loss. For example, the controller 25 disengages the third clutch 37 from time E to time F in Fig. 22. In Fig. 22, the rotation speed of the engine 9 (power source) is lowered from time B to time C (a command of lowering the rotation speed is inputted to the engine 9)

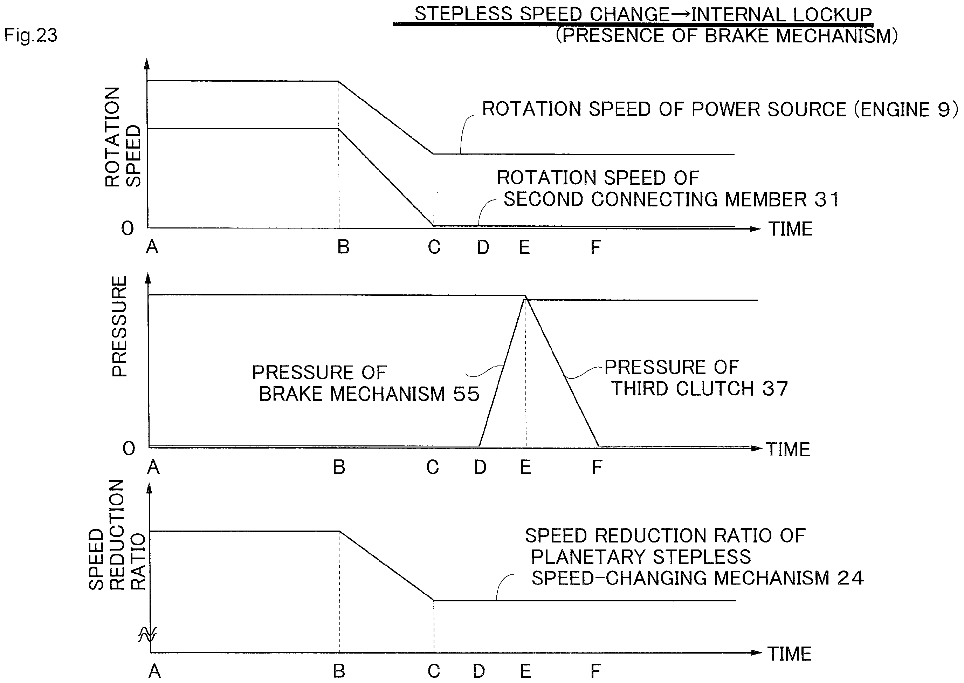

On the other hand, an explanation will be made of a case where in the configuration of executing the internal lockup by the brake mechanism 55 as the first modification example as shown in Fig. 13, the power transmission state of the planetary stepless speed-changing mechanism 24 is switched from "stepless speed change" to "internal lockup", with reference to Fig. 23.

In a state of the stepless speed change from time A to time B in Fig. 23, the controller 25 engages the second clutch 36 and the third clutch 37 and releases (lowers pressure of) the first clutch 27 and the brake mechanism 55. In this state, the controller 25 adjusts the rotation speed of the first hydraulic pump and motor 33 and the rotation of the second connecting member 31 to obtain a desired speed reduction ratio. For the switching from the stepless speed change to the internal lockup, the controller 25 lowers the rotation speed of the first hydraulic pump and motor 33 to stop the rotation of the first hydraulic pump and motor 33 from time B to time C in Fig. 23. Because of this, the rotation of the second connecting member 31 is stopped. The brake mechanism 55 starts the engagement (pressure increase) after time C in Fig. 23 to cause the power transmission state to be completely a state of the internal lockup. For example, the controller 25 engages (increases pressure of) the brake mechanism 55 from time D to time E in Fig. 23. After time C in Fig. 23, the speed reduction ratio of the planetary stepless speed-changing mechanism 24 is constant and the power transmission state changes from the stepless speed change to the internal lockup.

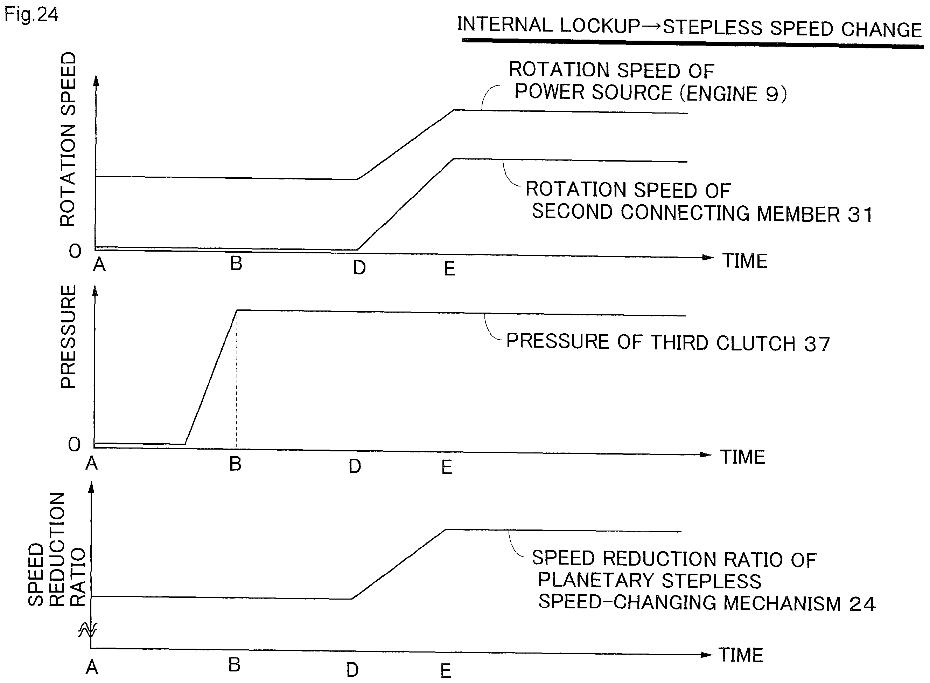

Next, an explanation will be made of a case of switching the power transmission state of the planetary stepless speed-changing mechanism 24 from "internal lockup" to "stepless speed change", with reference to Fig. 24. The switching from the internal lockup to the stepless speed change is expected in a case where the speed stages of the multistage speed-changing mechanism 26 are forward one-speed and backward one-speed in the configuration in Table 1 as described before, for example. In addition, the switching from the internal lockup to the stepless speed change is expected in a case where the speed stages of the multistage speed-changing mechanism 26 are forward one-speed, forward two-speed, forward three-speed and backward one-speed in the configuration in Table 2 as described before.

In a state of the internal lockup from time A to time D in Fig. 24, the controller 25 engages the second clutch 36 to stop the rotation of the first hydraulic pump and motor 33 then stop the rotation of the second connecting member 31. The first clutch 27C is disengaged. In a state of the internal lockup, the third clutch 37 may be disengaged or engaged. In a case where the third clutch 37 is disengaged, for the switching from the internal lockup to the stepless speed change, the controller 25 completes the engagement of the third clutch 37 until time B in Fig. 24. Thereafter, from time D to time E in Fig. 24, the controller 25 adjusts the rotation speed of the first hydraulic pump and motor 33 and the rotation of the second connecting member 31 to obtain a desired speed reduction ratio. Because of this, after time D in Fig. 24, the speed reduction ratio of the planetary stepless speed-changing mechanism 24 can continuously change and the power transmission state changes from the internal lockup to the stepless speed change. In Fig. 24, the rotation speed of the engine 9 (power source) increases from time D to time E (a command of increasing the rotation speed is inputted to the engine 9)

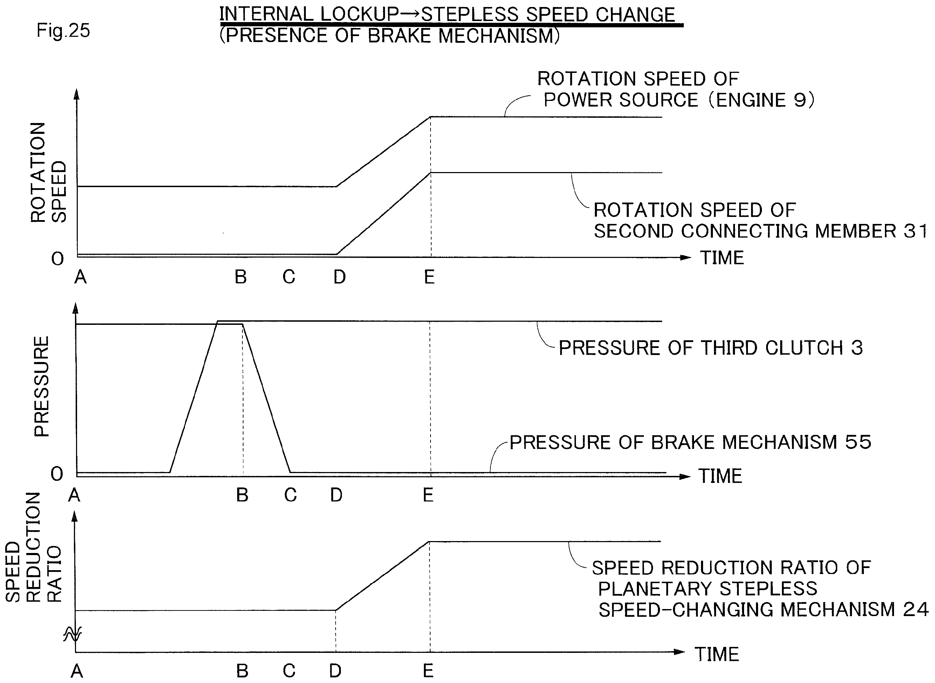

On the other hand, an explanation will be made of a case where in the configuration of executing the internal lockup by the brake mechanism 55 as the first modification example shown in Fig. 13, the power transmission state of the planetary stepless speed-changing mechanism 24 is switched from "internal lockup" to "stepless speed change", with reference to Fig. 25.

In a state of the internal lockup from time A to time D in Fig. 25, the controller 25 engages the second clutch 36 and engages (increases pressure of) the brake mechanism 55 to stop the rotation of the first hydraulic pump and motor 33 then stop the rotation of the second connecting member 31. The first clutch 27C is disengaged. In a state of the internal lockup, the third clutch 37 may be disengaged or engaged. In a case where the third clutch 37 is disengaged, for the switching from the internal lockup to the stepless speed change, the controller 25 completes the engagement of the third clutch 37 by time B in Fig. 25. The controller 25 releases (lowers pressure of) the brake mechanism 55 from time B to time C in Fig. 25. Thereafter, from time D to time E in Fig. 25, the controller 25 adjusts the rotation speed of the first hydraulic pump and motor 33 and the rotation of the second connecting member 31 to obtain a desired speed reduction ratio. Because of this, after time D in Fig. 25, the speed reduction ratio of the planetary stepless speed-changing mechanism 24 can continuously change and the power transmission state changes from the internal lockup to the stepless speed change.

Next, an explanation will be made of a case of switching the power transmission state of the planetary stepless speed-changing mechanism 24 from "internal lockup" to "external lockup", with reference to Fig. 18.

The switching from the internal lockup to the external lockup is expected in a case where the speed stages of the multistage speed-changing mechanism 26 are forward one-speed, forward two-speed, forward three-speed and backward one-speed in the configuration in Table 1 and Table 2 as described before, for example. In a state of the internal lockup from time A to time B in Fig. 18, the controller 25 engages the second clutch 36 and disengages the first clutch 27C. In addition, the controller 25 causes the control state of the first hydraulic pump and motor 33 to be "a state where the rotation is stopped in both directions (the torque is operated in both directions)" or "a state where the rotation is stopped in one direction and it is possible to rotate freely in the opposing direction (the torque is operated in one direction and the torque is not operated in the opposing direction)". For example, the controller 25 causes the first variable relief valve 38A to be in the blocking state and the second variable relief valve 38B to be in the blocking state or in the communicating state. Because of this, the second connecting member is stopped. In a state of the internal lockup, the third clutch 37 may be disengaged or engaged, but is preferably disengaged for reduction of power loss.

The controller 25 causes the control state of the first hydraulic pump and motor 33 to be "a state where the rotation is stopped in one direction and it is possible to rotate freely in the opposing direction (the torque is operated in one direction and the torque is not operated in the opposing direction)" from time B in Fig. 18 for the switching from the internal lockup to the external lockup. For example, the controller 25 causes the first variable relief valve 38A to be in the blocking state and the second variable relief valve 38B to be in the communicating state. "One direction" is a rotation direction of the second connecting member 31 for transmitting the power transmitted from the engine 9 via the first connecting member 30 to the planetary gear mechanism 29 to a third connecting member 32. As expressed by a characteristic line of the rotation speed of the second connecting member 31 in Fig. 18, "one direction" is a state where the rotation in a minus direction is allowed and the rotation in a plus direction is blocked. "One direction" corresponds to, for example, the rotation direction of the engine 9. It should be noted that time B in Fig. 18 may be time immediate before switching from the internal lockup to the external lockup or without any time between time A and time B the control state of the first hydraulic pump and motor 33 may be always "a state where the rotation is stopped in one direction and it is possible to rotate freely in the opposing direction (the torque is operated in one direction and the torque is not operated in the opposing direction)".

However, the wheel loader 1 quite often travels on rugged road surfaces. Therefore, variations of acceleration and deceleration from the road surfaces are transmitted from the output shaft 23 to the engine 9 to brake the engine 9, posing a problem that the vehicle speed is lowered. Therefore, in a state of the internal lockup, it is also preferable to perform the following control. That is, in a case where an operator depresses the accelerator pedal 8A and the power is transmitted in a direction for acceleration of the wheel loader 1, the control state of the first hydraulic pump and motor 33 is always caused to be "a state where the rotation is stopped in one direction and it is possible to rotate freely in the opposing direction (the torque is operated in one direction and the torque is not operated in the opposing direction)". On the other hand, in a case where an operator releases the depression of the accelerator pedal 8A to brake the engine 9 and therefore, the deceleration of the wheel loader 1 is required, the control state of the first hydraulic pump and motor 33 is caused to be "a state where the rotation is stopped in the opposing direction and it is possible to rotate freely in one direction (the torque is operated in the opposing direction and the torque is not operated in one direction)".

The controller 25 starts the engagement of the first clutch 27C from time C in Fig. 18 and completes the engagement at time E. Because of this, the power transmission state becomes the external lockup state after time E. The controller 25, after time E in Fig. 18, maintains the control state of the first hydraulic pump and motor 33 to "a state where the rotation is stopped in one direction and it is possible to rotate freely in the opposing direction (the torque is operated in one direction and the torque is not operated in the opposing direction)" or switches the control state of the first hydraulic pump and motor 33 to "a state where it is possible to rotate freely in both directions (the torque is not operated in both directions)". For example, the controller 25 causes the first variable relief valve 38A to be in the blocking state or in the communicating state and the second variable relief valve 38B to be in the communicating state. The controller 25, after time G in Fig. 18, causes the control state of the first hydraulic pump and motor 33 to be "a state where it is possible to rotate freely in both directions (the torque is not operated in both directions)" or "a state where the rotation is made possible in one direction and the rotation is stopped in the opposing direction (the torque is not operated in one direction and the torque is operated in the opposing direction)". For example, the controller 25 causes the first variable relief valve 38A to be in the communicating state and the second variable relief valve 38B to be in the blocking state or in the communicating state. The disengagement of the second clutch 36 is made possible after time E in Fig. 18. In a state of the external lockup, the second clutch 36 may be disengaged or engaged, but is preferably disengaged for reduction of power loss.

On the other hand, an explanation will be made of a case where in the configuration of executing the internal lockup by the brake mechanism 55 as the first modification example shown in Fig. 13, the power transmission state of the planetary stepless speed-changing mechanism 24 is switched from "internal lockup" to "external lockup", with reference to Fig. 19.

In a state of the internal lockup from time A to time B in Fig. 19, the controller 25 engages (increases pressure of) the brake mechanism 55 to stop the rotation of the second connecting member 31. The first clutch 27C is disengaged. In a state of the internal lockup, the third clutch 37 may be disengaged or engaged, but is preferably disengaged for reduction of power loss. The second clutch 36 may be disengaged or engaged. The controller 25, for the switching from "internal lockup" to "external lockup", starts the engagement of the second clutch 36 from time B in Fig. 19 and completes the engagement at time C. In a state where the second clutch 36 is started before time A, this operation is unnecessary.

The controller 25 causes the control state of the first hydraulic pump and motor 33 to be "a state where the rotation is stopped in one direction and it is possible to rotate freely in the opposing direction (the torque is operated in one direction and the torque is not operated in the opposing direction)" from time D in Fig. 19. Thereafter, the controller 25 releases (lowers pressure of) the brake mechanism 55 from time E to time F in Fig. 19. The controller 25 starts the engagement of the second clutch 36 from time G in Fig. 19 and completes the engagement at time I. Because of this, the power transmission state becomes a state of the external lockup after time I.

After time I in Fig. 19, the disengagement of the second clutch 36 is made possible. In a state of the external lockup, the second clutch 36 may be disengaged or engaged, but is preferably disengaged for reduction of power loss. In Fig. 19, the second clutch 36 is disengaged (is lowered in pressure) from time J to time K. The controller 25, after time I in Fig. 19, maintains the control state of the first hydraulic pump and motor 33 to "a state where the rotation is stopped in one direction and it is possible to rotate freely in the opposing direction (the torque is operated in one direction and the torque is not operated in the opposing direction)" or switches the control state of the first hydraulic pump and motor 33 to "a state where it is possible to rotate freely in both directions (the torque is not operated in both directions)". After time K in Fig. 19, the control state of the first hydraulic pump and motor 33 is caused to be "a state where it is possible to rotate freely in one direction and the rotation is stopped in the opposing direction (the torque is not operated in one direction and the torque is operated in the opposing direction)" or "a state where it is possible to rotate freely in both directions (the torque is not operated in both directions)".

Next, an explanation will be made of a case of switching the power transmission state of the planetary stepless speed-changing mechanism 24 from "external lockup" to "internal lockup", with reference to Fig. 20.

The switching from the external lockup to the internal lockup is expected in a case where the speed stages of the multistage speed-changing mechanism 26 are forward one-speed, forward two-speed, forward three-speed and backward one-speed in the configuration in Table 1 and Table 2 as described before, for example. In a state of the external lockup from time A to time B in Fig. 20, the controller 25 engages the first clutch 27C and disengages the second clutch 36. In addition, the controller 25 causes the control state of the first hydraulic pump and motor 33 to be "a state where it is possible to rotate freely in both directions (the torque is not operated in both directions)". In a state of the external lockup, the second clutch 36 and the third clutch 37 may be disengaged or engaged, but are preferably disengaged for reduction of power loss.

The controller 25 causes the control state of the first hydraulic pump and motor 33 to be "a state where the rotation is stopped in one direction and it is possible to rotate freely in the opposing direction (the torque is operated in one direction and the torque is not operated in the opposing direction)" for the switching from the external lockup to the internal lockup from time B to time F in Fig. 20. That is, as expressed by a characteristic line of the rotation speed of the second connecting member 31 in Fig. 20, the above state is a state where the rotation in a minus direction is allowed and the rotation in a plus direction is blocked. The controller 25 completes the engagement of the second clutch 36 from time B to time C. Because of this, the second connecting member 31 rotates together with the first hydraulic pump and motor 33. It should be noted that time B in Fig. 20 may be time immediate before switching from the external lockup to the internal lockup, and without any time from time A to time C the second clutch 36 may be always engaged as it is.

The controller 25 starts the disengagement of the first clutch 27C from time D in Fig. 20 and completes the disengagement at time F. Because of this, the switching from the external lockup state to the internal lockup state is completed. The controller 25, after time F in Fig. 20, maintains the control state of the first hydraulic pump and motor 33 to "a state where the rotation is stopped in one direction and it is possible to rotate freely in the opposing direction (the torque is operated in one direction and the torque is not operated in the opposing direction)" or switches the control state of the first hydraulic pump and motor 33 to "a state where the rotation is stopped in both directions (the torque is operated in both directions)".

On the other hand, an explanation will be made of a case where in the configuration of executing the internal lockup by the brake mechanism 55 as the first modification example shown in Fig. 13, the power transmission state of the planetary stepless speed-changing mechanism 24 is switched from "external lockup" to "internal lockup", with reference to Fig. 21.

In a state of the external lockup from time A to time B in Fig. 21, the controller 25 engages the first clutch 27C, disengages the second clutch 36 and releases (lowers pressure of) the brake mechanism 55. In addition, the controller 25 causes the control state of the first hydraulic pump and motor 33 to be "a state where it is possible to rotate freely in both directions (the torque is not operated in both directions)". In a state of the external lockup, the second clutch 36 and the third clutch 37 may be disengaged or engaged, but is preferably disengaged for reduction of power loss.

The controller 25 causes the control state of the first hydraulic pump and motor 33 to be "a state where the rotation is stopped in one direction and it is possible to rotate freely in the opposing direction (the torque is operated in one direction and the torque is not operated in the opposing direction)" from time B to time F in Fig. 21 for the switching from the external lockup to the internal lockup. That is, as expressed by a characteristic line of the rotation speed of the second connecting member 31 in Fig. 21, the above state is a state where the rotation in a minus direction is allowed and the rotation in a plus direction is blocked. The controller 25 completes the engagement of the second clutch 36 from time B to time C. Because of this, the second connecting member 31 rotates together with the first hydraulic pump and motor 33. It should be noted that time B in Fig. 21 may be time immediate before switching from the external lockup to the internal lockup, and without any time between time A and time C the second clutch 36 may be always engaged as is.

The controller 25 starts the disengagement of the first clutch 27C from time D in Fig. 21 and completes the disengagement at time F. The controller 25, at time F in Fig. 21, maintains the control state of the first hydraulic pump and motor 33 to "a state where the rotation is stopped in one direction and it is possible to rotate freely in the opposing direction (the torque is operated in one direction and the torque is not operated in the opposing direction)" or switches the control state of the first hydraulic pump and motor 33 to "a state where the rotation is stopped in both directions (the torque is operated in both directions)". The controller 25 engages (increases pressure of) the brake mechanism 55 to stop the rotation of the second connecting member 31 completely from time G to time H in Fig. 21. Because of this, the switching from the external lockup state to the internal lockup state is completed. After time H in Fig. 21, the control state of the first hydraulic pump and motor 33 may be "a state where the rotation is stopped in both directions (state where the torque is operated in both directions)" or "a state where it is possible to rotate freely (state where the torque is not operated in both directions)". For example, the controller 25 causes the first variable relief valve 38A and the second variable relief valve 38B to be in the blocking state or in the communicating state.

It should be noted that Fig. 18 to Fig. 25, and Fig. 33 and Fig. 34 to be described later show, as an example, a speed change (switch) in a state where a vehicle speed is held to be constant but not limited thereto, the speed change (switch) may be made in the middle of decelerating or accelerating.

Next, an explanation will be made of a speed change (switch) by the multistage speed-changing mechanism 26. As shown in Table 4 described before, the multistage speed-changing mechanism 26 can have forward one-speed, forward two-speed, forward three-speed and backward one-speed as a speed change (switch).

As to the speed change (switch), from forward one-speed to forward two-speed, from forward one-speed to forward three-speed, from forward one-speed to backward one-speed, from forward two-speed to forward one-speed, from forward two-speed to forward three-speed, from forward two-speed to backward one-speed, from forward three-speed to forward two-speed, from forward three-speed to forward one-speed, from forward three-speed to backward one-speed, from backward one-speed to forward one-speed, from backward one-speed to forward two-speed and from backward one-speed to forward three-speed are expected. The speed change of the multistage speed-changing mechanism 26, that is, the switch of the speed stage is performed according to the engagement and disengagement of a forward one-speed clutch 69, a backward one-speed clutch 70, a forward two-speed clutch 75 and a forward three-speed clutch 76 as shown in Table 4.

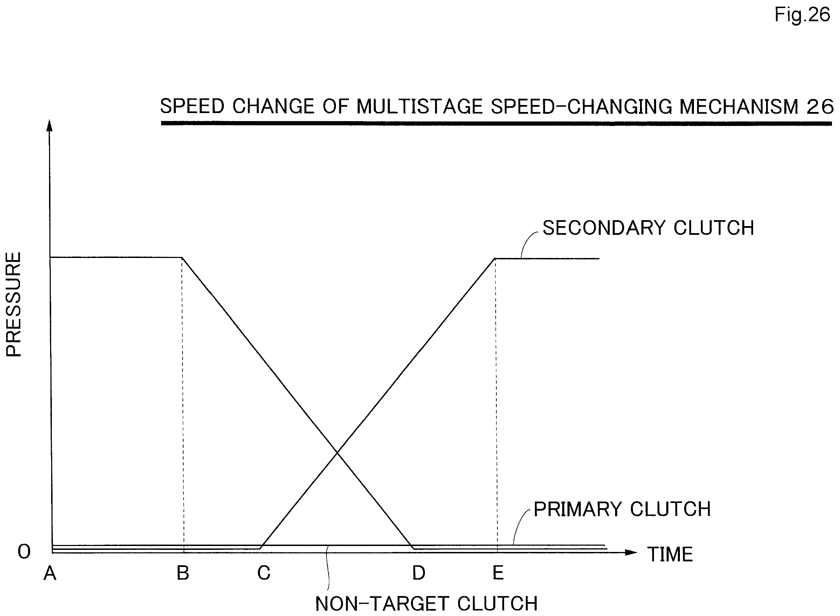

Fig. 26 is a characteristic diagram (time chart) showing an example of a change over time in pressure of a primary clutch (clutch switched from engagement to disengagement), in pressure of a secondary clutch (clutch switched from disengagement to engagement) and in pressure of a non-target clutch (clutch of disengagement as is) at the speed changing (switching of the speed stage) of the multistage speed-changing mechanism 26. It should be noted that at the speed-changing of the multistage speed-changing mechanism 26, a clutch engaged before this speed change is defined as a primary clutch, a clutch engaged after this speed change is defined as a secondary clutch and a clutch disengaged before and after this speed change is defined as a non-target clutch.

For example, in a case of performing a speed change from forward one-speed to forward two-speed, the forward one-speed clutch 69 acts as a primary clutch, the forward two-speed clutch 75 acts as a secondary clutch, and the backward one-speed clutch 70 and the forward three-speed clutch 76 act as non-target clutches. From time A to time B (that is, before speed change) in Fig. 26, the primary clutch is engaged and the secondary clutch is disengaged. The controller 25 decreases the pressure of the primary clutch from time B in Fig. 26. The controller 25 decreases the pressure of the primary clutch completely at time D in Fig. 26 to complete the disengagement of the primary clutch. The controller 25 increases the pressure of the secondary clutch from time C in Fig. 26. The controller 25 increases the pressure of the secondary clutch completely at time E in Fig. 26 to complete the disengagement of the primary clutch. Because of this, at time E in Fig. 26 the speed change of the multistage speed-changing mechanism 26 is completed. The non-target clutch is always disengaged before and after the speed change.

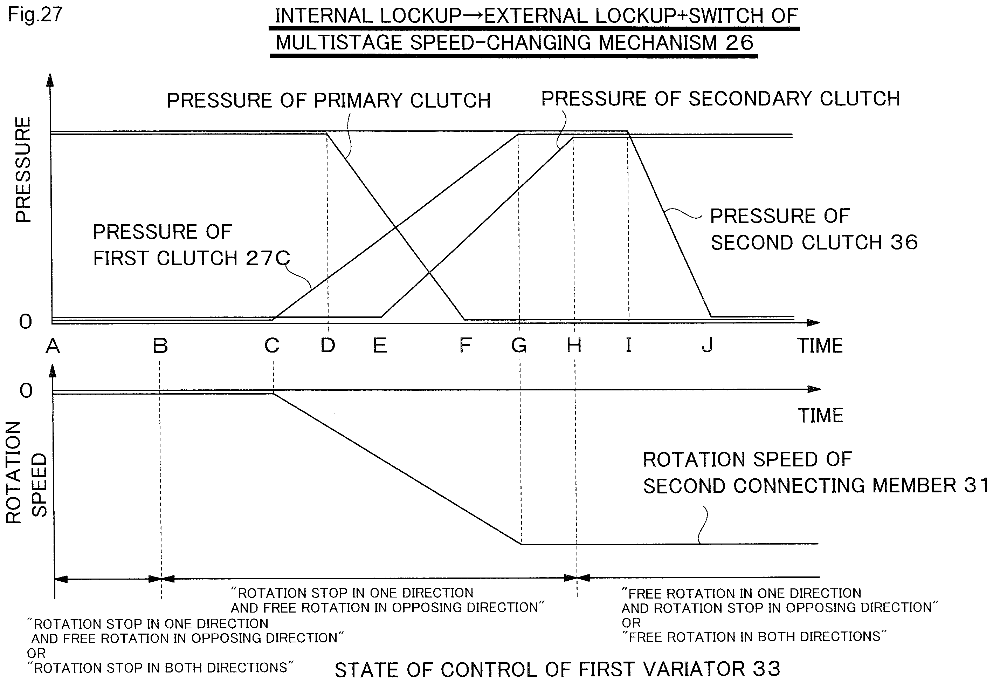

Next, an explanation will be made of the simultaneous switching of the planetary stepless speed-changing mechanism 24 and the multistage speed-changing mechanism 26. First, an explanation will be made of a case where the planetary stepless speed-changing mechanism 24 is switched from "internal lockup" to "external lockup" and the multistage speed-changing mechanism 26 is speed-changed (switched) with reference to Fig. 27.

As to the speed change (switch), for example, in the configuration in Table 1 and Table 2 as described before, from forward one-speed internal lockup to forward two-speed external lockup, from forward one-speed internal lockup to forward three-speed external lockup, from forward two-speed internal lockup to forward three-speed external lockup, from forward two-speed internal lockup to forward one-speed external lockup, from forward three-speed internal lockup to forward two-speed external lockup and from forward three-speed internal lockup to forward one-speed external lockup are expected. That is, this speed change (switch) corresponds to a case where the power transmission state as shown in Table 1 and Table 2 is not switched in order of Table 1 and Table 2 but the speed change (skip speed change) is made by partial skip. Fig. 27 is a characteristic diagram (time chart) showing an example of a change over time in pressure of the first clutch 27 in the planetary stepless speed-changing mechanism 24, in pressure of the second clutch 36, in pressure of the primary clutch (clutch switched from engagement to disengagement) in the multistage speed-changing mechanism 26, in pressure of the secondary clutch (clutch switched from disengagement to engagement) in the multistage speed-changing mechanism 26 and in the rotation speed of the second connecting member 31 at this speed change (switch).

In a state of the internal lockup from time A to time B in Fig. 27, the controller 25 engages the second clutch 36, disengages the first clutch 27C, engages the primary clutch and disengages the secondary clutch. In addition, the controller 25 causes the control state of the first hydraulic pump and motor 33 to be "a state where the rotation is stopped in both directions (the torque is operated in both directions)" or "a state where the rotation is stopped in one direction and it is possible to rotate freely in the opposing direction (the torque is operated in one direction and the torque is not operated in the opposing direction)". Because of this, the second connecting member 31 is stopped. In a state of the internal lockup, the third clutch 37 may be disengaged or engaged, but is preferably disengaged for reduction of power loss.

The controller 25 causes the control state of the first hydraulic pump and motor 33 to be "a state where the rotation is stopped in one direction and it is possible to rotate freely in the opposing direction (the torque is operated in one direction and the torque is not operated in the opposing direction)" from time B in Fig. 27 for the switching from the internal lockup to the external lockup. The controller 25, from time C in Fig. 27, starts the engagement of the first clutch 27C and completes the engagement at time G. Because of this, the second connecting member 31 starts to rotate in the opposing direction and the power transmission state becomes the external lockup state after time G. On the other hand, the controller 25, from time D in Fig. 27, starts the disengagement of the primary clutch and completes the disengagement at time F. That is, the controller 25 starts the pressure decrease of the primary clutch from time D and completes it at time F. The controller 25, from time E in Fig. 27, starts the engagement of the secondary clutch and completes the engagement at time H. That is, the controller 25 starts the pressure increase of the secondary clutch from time E and completes it at time H.

Thereafter, the controller 25 disengages the second clutch 36 from time I to time J in Fig. 27. That is, the controller 25 decreases the pressure of the second clutch 36 from time I to time J. The controller 25, after time H in Fig. 27, switches the control state of the first hydraulic pump and motor 33 to "a state where it is possible to rotate freely in one direction and the rotation is stopped in the opposing direction (the torque is not operated in one direction and the torque is operated in the opposing direction)" or "a state where it is possible to rotate freely in both directions (the torque is not operated in both directions)". The disengagement of the second clutch 36 is made possible after time H in Fig. 27. The second clutch 36 may be disengaged or engaged, but is preferably disengaged for reduction of power loss.

It should be noted that although omitted in illustration, the pressure of the non-target clutch (that is, the clutch other than the primary clutch and the secondary clutch) in the multistage speed-changing mechanism 26 is always lowered to 0 before and after the speed change (switch) (the non-target clutch is disengaged). In this way, in a case of switching the planetary stepless speed-changing mechanism 24 from "internal lockup" to "external lockup" and speed-changing (switching) the multistage speed-changing mechanism 26, the switch from "internal lockup" to "external lockup" of the planetary stepless speed-changing mechanism 24 starts prior to the speed change (switch) of the multistage speed-changing mechanism 26. That is, the pressure increase (engagement) of the first clutch 27C starts prior to the start of the pressure decrease (disengagement) of the primary clutch and the pressure increase (engagement) of the secondary clutch.

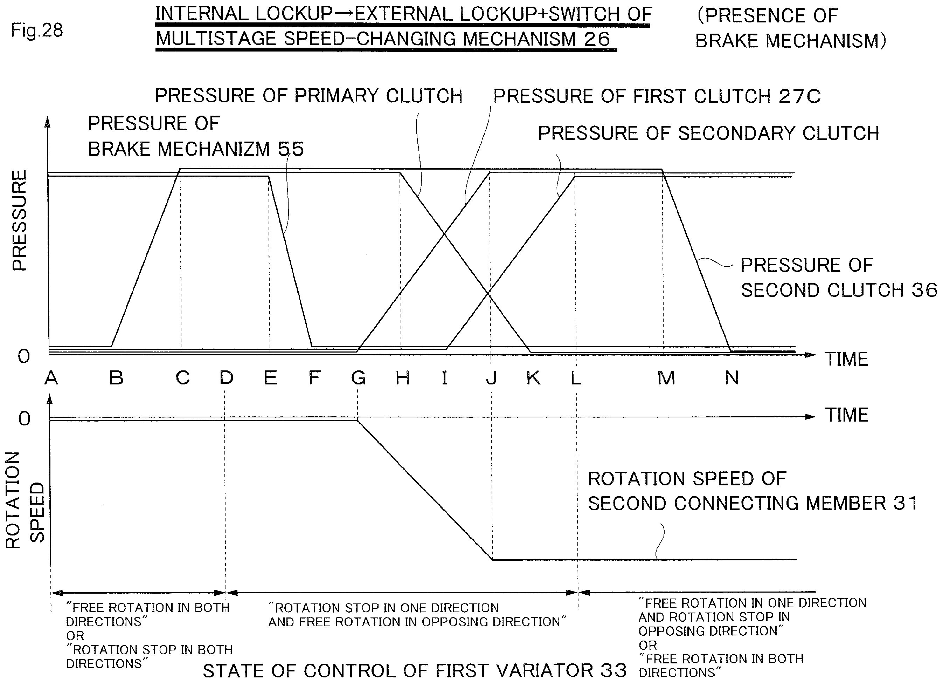

On the other hand, an explanation will be made of a case where in the configuration of executing the internal lockup by the brake mechanism 55 as the first modification example shown in Fig. 13, the power transmission state of the planetary stepless speed-changing mechanism 24 is switched from "internal lockup" to "external lockup" and the multistage speed-changing mechanism 26 is also speed-changed (switched) with reference to Fig. 28.

In a state of the internal lockup from time A to time B in Fig. 28, the controller 25 engages (increases pressure of) the brake mechanism 55 to stop the rotation of the second connecting member 31. The first clutch 27C is disengaged. In a state of the internal lockup, the third clutch 37 may be disengaged or engaged, but is preferably disengaged for reduction in power loss. The second clutch 36 may be disengaged or engaged. The control state of the first hydraulic pump and motor 33 may be "a state where the rotation is stopped in both directions (state where the torque is operated in both directions)" or "a state where it is possible to rotate freely in both directions (the torque is not operated in both directions)".

The controller 25, for the switching from "internal lockup" to "external lockup", starts the engagement (pressure increase) of the second clutch 36 from time B in Fig. 28 and completes the engagement (pressure increase) at time C. Thereafter, the controller 25 switches the control state of the first hydraulic pump and motor 33 to "a state where the rotation is stopped in one direction and it is possible to rotate freely in the opposing direction (the torque is operated in one direction and the torque is not operated in the opposing direction)" from time D in Fig. 28. The controller 25 releases (lowers pressure of) the brake mechanism 55 from time E to time F in Fig. 28. The controller 25 starts the engagement of the first clutch 27C from time G in Fig. 28 and completes the engagement at time J. Because of this, the second connecting member 31 starts to rotate in the opposing direction and the power transmission state becomes a state of the external lockup after time J. On the other hand, the controller 25 starts the disengagement of the primary clutch from time H in Fig. 28 and completes the disengagement at time K. That is, the controller 25 starts the pressure decrease of the primary clutch from time H and completes it at time K. The controller 25 starts the engagement of the secondary clutch from time I in Fig. 28 and completes the engagement at time L. That is, the controller 25 starts the pressure increase of the secondary clutch from time I and completes it at time L.

The controller 25 switches, after time L in Fig. 28, the control state of the first hydraulic pump and motor 33 to "a state where it is possible to rotate freely in one direction and the rotation is stopped in the opposing direction (the torque is not operated in one direction and the torque is operated in the opposing direction)" or "a state where it is possible to rotate freely in both directions (the torque is not operated in both directions)". The disengagement of the second clutch 36 is made possible after time L in Fig. 28. In Fig. 28, the controller 25 disengages the second clutch 36 from time M to time N in Fig. 28. That is, the controller 25 decreases the pressure of the second clutch 36 from time M to time N. The second clutch 36 may be disengaged or engaged, but is preferably disengaged for reduction in power loss.

It should be noted that although omitted in illustration, the pressure of the non-target clutch (that is, the clutch other than the primary clutch and the secondary clutch) in the multistage speed-changing mechanism 26 is always lowered to 0 before and after the speed change (switch) (the non-target clutch is disengaged). In this way, in a case of switching the planetary stepless speed-changing mechanism 24 from "internal lockup" to "external lockup" and speed-changing (switching) the multistage speed-changing mechanism 26, the switch from "internal lockup" to "external lockup" of the planetary stepless speed-changing mechanism 24 starts prior to the speed change (switch) of the multistage speed-changing mechanism 26. That is, the pressure increase (engagement) of the first clutch 27C starts prior to start of the pressure decrease (disengagement) of the primary clutch and the pressure increase (engagement) of the secondary clutch.

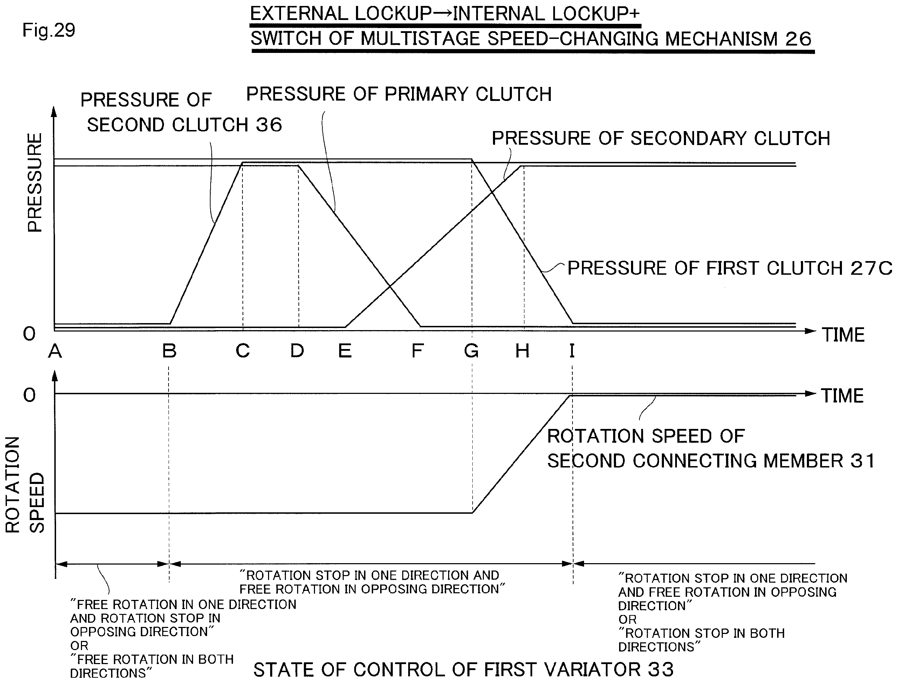

Next, an explanation will be made of a case where the planetary stepless speed-changing mechanism 24 is switched from "external lockup" to "internal lockup" and the multistage speed-changing mechanism 26 is also speed-changed (switched), with reference to Fig. 29.

As to the speed change (switch), for example, in the configuration in Table 1 and Table 2 as described before, a speed change from forward one-speed external lockup to forward two-speed internal lockup, a speed change from forward one-speed external lockup to forward three-speed internal lockup, a speed change from forward two-speed external lockup to forward three-speed internal lockup, a speed change from forward two-speed external lockup to forward one-speed internal lockup, a speed change from forward three-speed external lockup to forward two-speed internal lockup and a speed change from forward three-speed external lockup to forward one-speed internal lockup are expected.

In a state of the external lockup from time A to time B in Fig. 29, the controller 25 engages the first clutch 27C, disengages the second clutch 36, engages the primary clutch and disengages the secondary clutch. In addition, the controller 25 causes the control state of the first hydraulic pump and motor 33 to be "a state where it is possible to rotate freely in one direction and the rotation is stopped in the opposing direction (the torque is not operated in one direction and the torque is operated in the opposing direction)" or "a state where it is possible to rotate freely in both directions (the torque is not operated in both directions)". In a state of the external lockup, the second clutch 36 and the third clutch 37 may be disengaged or engaged, but are preferably disengaged for reduction in power loss.

The controller 25 causes the control state of the first hydraulic pump and motor 33 to be "a state where the rotation is stopped in one direction and it is possible to rotate freely in the opposing direction (the torque is operated in one direction and the torque is not operated in the opposing direction)" for the switching from the external lockup to the internal lockup from time B to time I in Fig. 29. The controller 25 completes the engagement of the second clutch 36 from time B to time C. Because of this, the second connecting member 31 rotates together with the first hydraulic pump and motor 33. It should be noted that time B in Fig. 29 may be time immediate before switching from the external lockup to the internal lockup, and without any time from time A to time C the second clutch 36 may be always engaged as is.

On the other hand, the controller 25 decreases the pressure of the primary clutch from time D to time F in Fig. 29 to disengage the primary clutch. In addition, the controller 25 increases the pressure of the secondary clutch from time E to time H in Fig. 29 to engage the secondary clutch. The first clutch 27C starts the disengagement from time G in Fig. 29 and completes the disengagement at time I. Because of this, the rotation of the second connecting member 31 is stopped. The controller 25, after time I in Fig. 29, switches the control state of the first hydraulic pump and motor 33 to "a state where the rotation is stopped in one direction and it is possible to rotate freely in the opposing direction (the torque is operated in one direction and the torque is not operated in the opposing direction)" or "a state where the rotation is stopped in both directions (the torque is operated in both directions)". Because of this, the speed change (switch) is completed.

It should be noted that although omitted in illustration, the pressure of the non-target clutch (that is, the clutch other than the primary clutch and the secondary clutch) in the multistage speed-changing mechanism 26 is always lowered to 0 before and after the speed change (switch) (the non-target clutch is disengaged). In this way, in a case of switching the planetary stepless speed-changing mechanism 24 from "external lockup" to "internal lockup" and speed-changing (switching) the multistage speed-changing mechanism 26, the speed change (switch) of the multistage speed-changing mechanism 26 starts prior to the switch from "external lockup" to "internal lockup" of the planetary stepless speed-changing mechanism 24. That is, the pressure decrease (disengagement) of the primary clutch and the pressure increase (engagement) of the secondary clutch start prior to the start of the pressure decrease (disengagement) of the first clutch 27C.

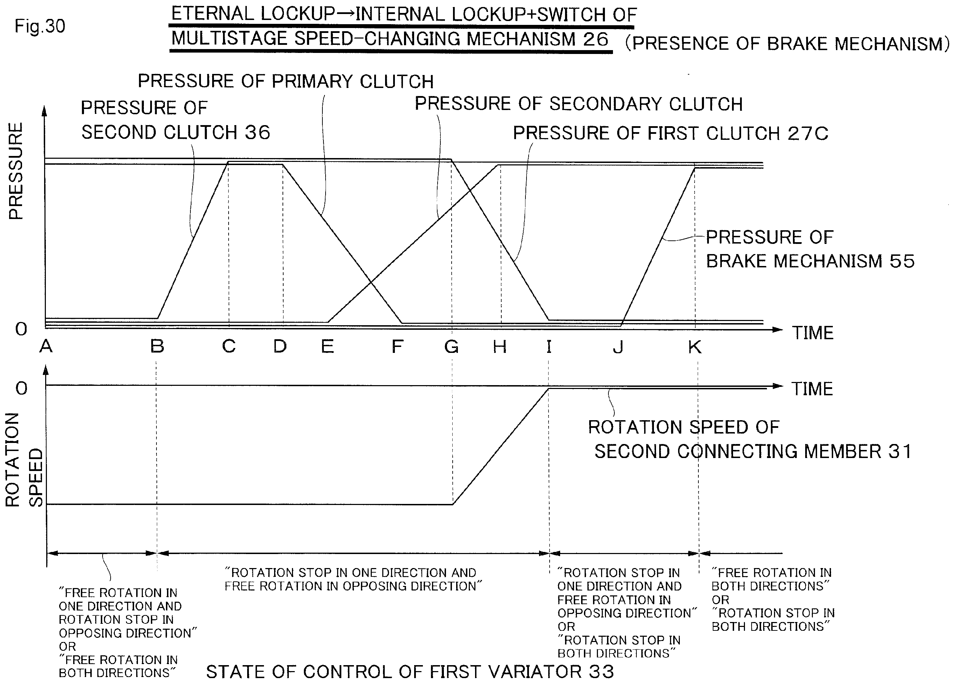

On the other hand, an explanation will be made of a case where in the configuration of executing the internal lockup by the brake mechanism 55 as the first modification example as shown in Fig. 13, the power transmission state of the planetary stepless speed-changing mechanism 24 is switched from "external lockup" to "internal lockup" and the multistage speed-changing mechanism 26 is speed-changed (switched) as well, with reference to Fig. 30.

In a state of the external lockup from time A to time B in Fig. 30, the controller 25 engages the first clutch 27C, disengages the second clutch 36, releases the brake mechanism 55, engages the primary clutch and disengages the secondary clutch. In addition, the controller 25 causes the control state of the first hydraulic pump and motor 33 to be "a state where it is possible to rotate freely in one direction and the rotation is stopped in the opposing direction (the torque is not operated in one direction and the torque is operated in the opposing direction)" or "a state where it is possible to rotate freely in both directions (the torque is not operated in both directions)". In a state of the external lockup, the second clutch 36 and the third clutch 37 may be disengaged or engaged, but are preferably disengaged for reduction in power loss.

The controller 25 causes the control state of the first hydraulic pump and motor 33 to be "a state where the rotation is stopped in one direction and it is possible to rotate freely in the opposing direction (the torque is operated in one direction and the torque is not operated in the opposing direction)" for the switching from the external lockup to the internal lockup from time B to time I in Fig. 30. The controller 25 completes the engagement of the second clutch 36 from time B to time C. Because of this, the second connecting member 31 rotates together with the first hydraulic pump and motor 33. It should be noted that time B in Fig. 30 may be time immediately before switching from the external lockup to the internal lockup, and without any time from time A to time C the second clutch 36 may be always engaged as is.

On the other hand, the controller 25 decreases the pressure of the primary clutch from time D to time F in Fig. 30 to disengage the primary clutch. In addition, the controller 25 increases the pressure of the secondary clutch from time E to time H in Fig. 30 to engage the secondary clutch. The first clutch 27C starts the disengagement from time G in Fig. 30 and completes the disengagement at time I. Because of this, the rotation of the second connecting member 31 is stopped. The controller 25, after time I in Fig. 30, switches the control state of the first hydraulic pump and motor 33 to "a state where the rotation is stopped in one direction and it is possible to rotate freely in the opposing direction (the torque is operated in one direction and the torque is not operated in the opposing direction)" or "a state where the rotation is stopped in both directions (the torque is operated in both directions)". Because of this, the speed change (switch) is completed. Thereafter, the controller 25 increases the pressure of the brake mechanism 55 from time J to time K in Fig. 30 to engage the brake mechanism 55. After time K in Fig. 30, the control state of the first hydraulic pump and motor 33 may be "a state where the rotation is stopped in both directions (the torque is operated in both directions)" or "a state where it is possible to rotate freely in both directions (the torque is not operated in both directions)".

It should be noted that although omitted in illustration, the pressure of the non-target clutch (that is, the clutch other than the primary clutch and the secondary clutch) in the multistage speed-changing mechanism 26 is always lowered to 0 before and after the speed change (switch) (the non-target clutch is disengaged). In this way, in a case of switching the planetary stepless speed-changing mechanism 24 from "external lockup" to "internal lockup" and speed-changing (switching) the multistage speed-changing mechanism 26, the speed change (switch) of the multistage speed-changing mechanism 26 starts prior to the switch from "external lockup" to "internal lockup" of the planetary stepless speed-changing mechanism 24. That is, the pressure decrease (disengagement) of the primary clutch and the pressure increase (engagement) of the secondary clutch start prior to start of the pressure decrease (disengagement) of the first clutch 27C.

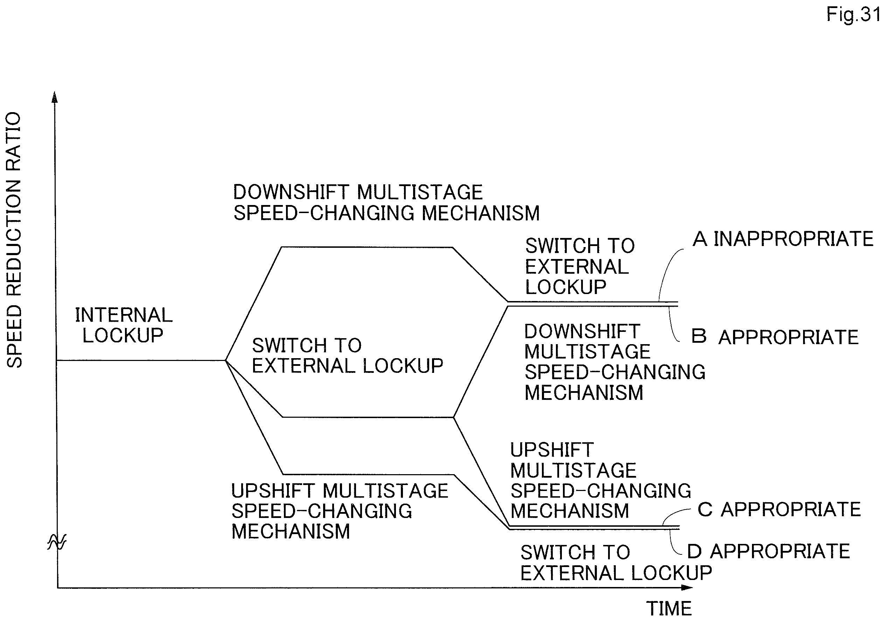

Next, an explanation will be made of the reason why in a case where the planetary stepless speed-changing mechanism 24 is switched from "internal lockup" to "external lockup" and the multistage speed-changing mechanism 26 as well is speed-changed (switched), the switch of the planetary stepless speed-changing mechanism 24 starts prior to the speed change (switch) of the multistage speed-changing mechanism 26, with reference to Fig. 31.

A vertical axis in Fig. 31 corresponds to a speed reduction ratio from the engine 9 as a power source to the output shaft 23 and a horizontal axis corresponds to time. In addition, characteristic lines A, B, C and D in Fig. 31 show transition of four kinds of transmission gear ratios that differentiate switching timing from the internal lockup to the external lockup and speed-changing (switching) timing of the multistage speed-changing mechanism 26 respectively. The characteristic line A in Fig. 31 shows a case where the multistage speed-changing mechanism 26 is downshifted in a case of the internal lockup and thereafter, the internal lockup is switched to the external lockup. In this case, the speed reduction ratio increases once and thereafter, decreases. This speed change is inappropriate since disruption of the power transmission from the engine 9 as the power source to the output shaft 23 tends to be easily large.

The characteristic line B in Fig. 31 shows a case where the internal lockup is switched to the external lockup and thereafter, the multistage speed-changing mechanism 26 is downshifted. In this case, the speed reduction ratio decreases once and thereafter, increases. This speed change is appropriate since the disruption of the power transmission from the engine 9 as the power source to the output shaft 23 becomes small. That is, although the characteristic line A and the characteristic line B are finally changed to the same speed reduction ratio, the degree of the power disruption differs largely from each other. Therefore, in a case where the planetary stepless speed-changing mechanism 24 is switched from "internal lockup" to "external lockup" and the multistage speed-changing mechanism 26 as well is speed-changed (switched), it is important to start the switching from the internal lockup to the external lockup prior to the speed change (switch) of the multistage speed-changing mechanism 26.

The characteristic line C in Fig. 31 shows a case where the internal lockup is switched to the external lockup and thereafter, the multistage speed-changing mechanism 26 is upshifted. In this case, the speed reduction ratio continuously decreases. This speed change is appropriate since the disruption of the power transmission from the engine 9 as the power source to the output shaft 23 becomes small. The characteristic line D in Fig. 31 shows a case where the multistage speed-changing mechanism 26 is upshifted in a case of the internal lockup and thereafter, the internal lockup is switched to the external lockup. In this case also, the speed reduction ratio continuously decreases. This speed change is appropriate since the disruption of the power transmission from the engine 9 as the power source to the output shaft 23 becomes small. It should be noted that since the characteristic line C and the characteristic line D are finally changed to the same speed reduction ratio, it is alright to select any one thereof.

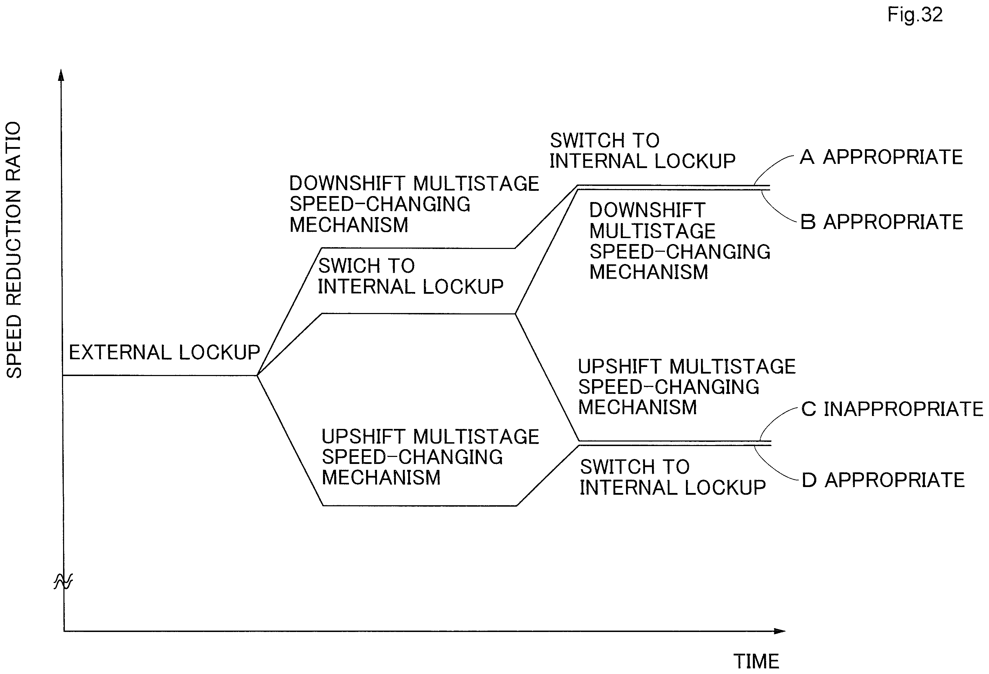

Next, an explanation will be made of the reason why in a case where the planetary stepless speed-changing mechanism 24 is switched from "external lockup" to "internal lockup" and the multistage speed-changing mechanism 26 as well is speed-changed (switched), the speed change (switch) of the multistage speed-changing mechanism 26 starts prior to the switch of the planetary stepless speed-changing mechanism 24, with reference to Fig. 32.

A vertical axis in Fig. 32 corresponds to a speed reduction ratio from the engine 9 as the power source to the output shaft 23 and a horizontal axis corresponds to time. In addition, characteristic lines A, B, C and D in Fig. 32 show transition of four kinds of transmission gear ratios that differentiate switching timing from the external lockup to the internal lockup and speed-changing (switching) timing of the multistage speed-changing mechanism 26 respectively. The characteristic line A in Fig. 32 shows a case where the multistage speed-changing mechanism 26 is downshifted in a case of the external lockup and thereafter, the external lockup is switched to the internal lockup. In this case, the speed reduction ratio increases gradually. This speed change, although the disruption of the power transmission from the engine 9 as the power source to the output shaft 23 tends to be easily large, is appropriate because of no avoiding means.

The characteristic line B in Fig. 32 shows a case where the external lockup is switched to the internal lockup and thereafter, the multistage speed-changing mechanism 26 is downshifted. In this case, the speed reduction ratio increases gradually. This speed change, although the disruption of the power transmission from the engine 9 as the power source to the output shaft 23 tends to be easily large, is appropriate because of no avoiding means. It should be noted that since the characteristic line A and the characteristic line B are finally changed to the same speed reduction ratio, it is alright to choose any one thereof. The characteristic line C in Fig. 32 shows a case where the external lockup is switched to the internal lockup and thereafter, the multistage speed-changing mechanism 26 is upshifted. In this case, the speed reduction ratio increases once and thereafter decreases. This speed change, since the disruption of the power transmission from the engine 9 as the power source to the output shaft 23 tends to be easily large, is inappropriate.

The characteristic line D in Fig. 32 shows a case where the multistage speed-changing mechanism 26 is upshifted in a state of the external lockup and thereafter, the external lockup is switched to the internal lockup. In this case, the speed reduction ratio decreases and thereafter, increases. This speed change, since the disruption of the power transmission from the engine 9 as the power source to the output shaft 23 becomes small, is appropriate. That is, although the characteristic line C and the characteristic line D are finally changed to the same speed reduction ratio, the degree of the power disruption differs largely from each other. Therefore, in a case where the external lockup is switched to the internal lockup and the multistage speed-changing mechanism 26 is upshifted, it is important to start the speed change (switch) of the multistage speed-changing mechanism 26 prior to the switching from the internal lockup to the external lockup.

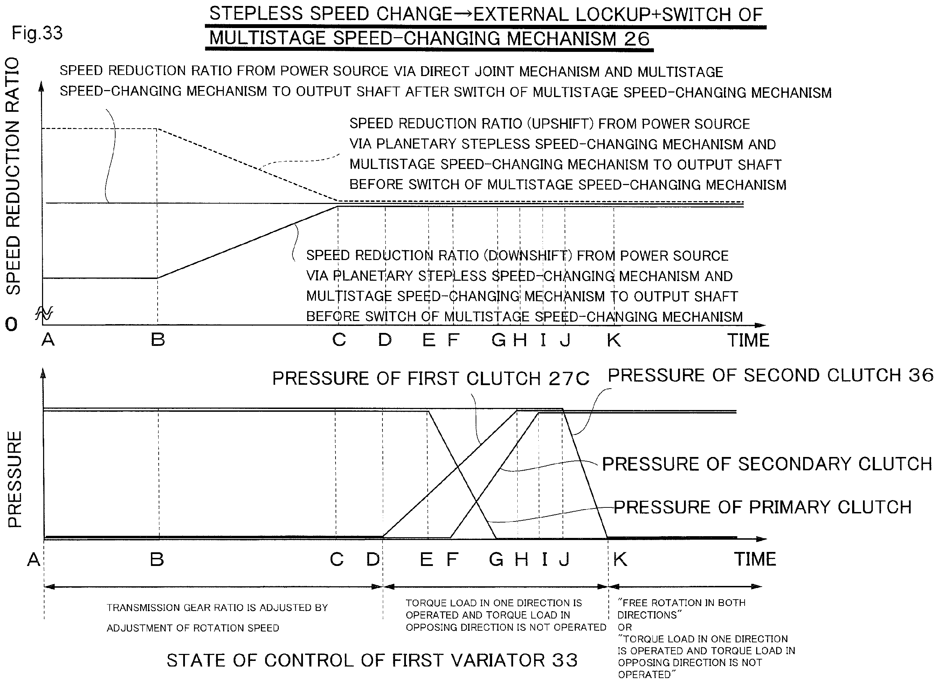

Next, an explanation will be made of a case where the planetary stepless speed-changing mechanism 24 is switched from "stepless speed change" to "external lockup" and the multistage speed-changing mechanism 26 is also speed-changed (switched), with reference to Fig. 33.

This speed change (switch), for example, according to the configuration in Table 1 and Table 2 as described before, is expected to include a speed change from forward three-speed stepless speed change to forward two-speed external lockup, a speed change from forward three-speed stepless speed change to forward one-speed external lockup and a speed change from forward two-speed stepless speed change to forward one-speed external lockup. Fig. 33 is a characteristic diagram (time chart) showing an example of a change over time in a speed reduction ratio from the engine 9 as the power source to the output shaft 23, in pressure of the first clutch 27C (lockup clutch) in the planetary stepless speed-changing mechanism 24, in pressure of the second clutch 36, in pressure of the primary clutch (clutch switching from engagement to disengagement) in the multistage speed-changing mechanism 26 and in pressure of the secondary clutch (clutch switching from disengagement to engagement) in the multistage speed-changing mechanism 26 at the speed changing.

In a state of the stepless speed change from time A to time B in Fig. 33, the controller 25 engages the second clutch 36 and the third clutch 37 and disengages the first clutch 27C. In this state, the controller 25 adjusts the rotation speed of the first hydraulic pump and motor 33 and the rotation of the second connecting member 31 to obtain a desired speed reduction ratio. For the switching from the state of the stepless speed change, the speed reduction ratio from the engine 9 via the planetary stepless speed-changing mechanism 24 to the output shaft 23 is adjusted by adjusting the rotation speed of the first hydraulic pump and motor 33. In this case, a speed reduction ratio from the engine 9 via the planetary stepless speed-changing mechanism 24 in a state before the switching of the multistage speed-changing mechanism 26 to the output shaft 23 is caused to be close to a speed reduction ratio from the engine 9 via the direct joint mechanism 27 in a state after the switching of the multistage speed-changing mechanism 26 to the output shaft 23. At this time, the former speed reduction ratio is not required to be in agreement with the latter speed reduction ratio completely and has only to be closer to the latter speed reduction ratio. In contrast, it is inappropriate that the former speed reduction ratio exceeds the latter speed reduction ratio. The operation for causing the former speed reduction ratio to be close to the latter speed reduction ratio is performed between time B and time C in Fig. 33.

It should be noted that a solid line S of the speed reduction ratio in Fig. 33 shows a case where the former speed reduction ratio from the engine 9 via the planetary stepless speed-changing mechanism 24 in a state before the switching of the multistage speed-changing mechanism 26 to the output shaft 23 is smaller as compared to the latter speed reduction ratio from the engine 9 via the direct joint mechanism 27 in a state after the switching of the multistage speed-changing mechanism 26 to the output shaft 23. On the other hand, there are some cases where the relationship between the former and latter speed reduction ratios becomes reversely larger. A broken line B of the speed reduction ratio in Fig. 33 shows a case where the former speed reduction ratio from the engine 9 via the planetary stepless speed-changing mechanism 24 in a state before the switching of the multistage speed-changing mechanism 26 to the output shaft 23 is larger as compared to the latter speed reduction ratio from the engine 9 via the direct joint mechanism 26 in a state after the switching of the multistage speed-changing mechanism 26 to the output shaft 23.

The controller 25 causes the control state of the first hydraulic pump and motor 33 to be "a state where the torque is operated in one direction and the torque is not operated in the opposing direction" from time D in Fig. 33. Because of this, preparation for switching from the stepless speed change to the external lockup is made only by an operation for increasing the pressure of the first clutch 27C. The controller 25 increases the pressure of the first clutch 27C from time D in Fig. 33 and completes the engagement of the first clutch 27C at time H. The controller 25 decreases the pressure of the primary clutch from time E in Fig. 33 and completes the disengagement of the primary clutch at time G. In addition, the controller 25 increases the pressure of the secondary clutch from time F in Fig. 33 and completes the engagement of the secondary clutch at time I. After time I in Fig. 33, the second clutch 36 and the third clutch 37 may be disengaged. In Fig. 33, the pressure of the second clutch 36 (and the third clutch 37) is decreased from J and the disengagement of the second clutch 36 (and the third clutch 37) is completed at time K.

After time K in Fig. 33, the control state of the first hydraulic pump and motor 33 may be "a state where it is possible to rotate freely in both directions (the torque is not operated in both directions)" or "a state where the torque is operated in one direction and the torque is not operated in the opposing direction". In this way, in a case where the planetary stepless speed-changing mechanism 24 is switched from "stepless speed change" to "external lockup" and the multistage speed-changing mechanism 26 is speed-changed (switched), first, the transmission gear ratio of the planetary stepless speed-changing mechanism 24 is changed to be close to a speed reduction ratio after speed change completion of the multistage speed-changing mechanism 26. Thereafter, the switch from "stepless speed change" to "external lockup" of the planetary stepless speed-changing mechanism 24 starts and then, the speed change (switch) of the multistage speed-changing mechanism 26 starts. That is, the pressure increase (engagement) of the first clutch 27C starts and then, the pressure decrease (disengagement) of the primary clutch and the pressure increase (engagement) of the secondary clutch start.

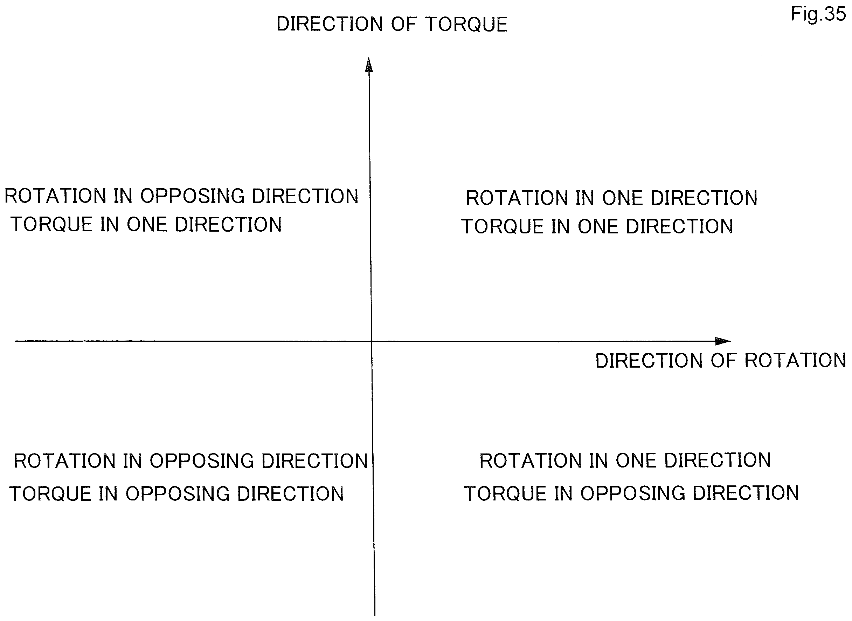

It should be noted that the controller 25 causes the control state of the first hydraulic pump and motor 33 to be "a state where a torque load is operated in one direction and a torque load is not operated in the opposing direction" from time D to time K in Fig. 33. That is, the controller 25 executes the control in an operating direction of the torque regardless of the rotation direction of the first hydraulic pump and motor 33. As shown in Fig. 35, the first hydraulic pump and motor 33 has four states composed of a state of rotating in one direction and transmitting torque in one direction, a state of rotating in one direction and transmitting torque in the opposing direction, a state of rotating in the opposing direction and transmitting torque in one direction and a state of rotating in the opposing direction and transmitting torque in the opposing direction.

The first hydraulic pump and motor 33 is in a state of rotating in one direction and transmitting torque in one direction from time D to time K in Fig. 33. This speed change, since a change in a rotation speed of the engine 9 as the power source is small in the middle of switching the clutches (the first clutch 27C, the second clutch 36, the primary clutch and the secondary clutch), can shorten time necessary for the switching of the clutches to reduce a change in output torque from the output shaft 23. Because of this, it is possible to improve the operability of the wheel loader 1 and the ride comfort.

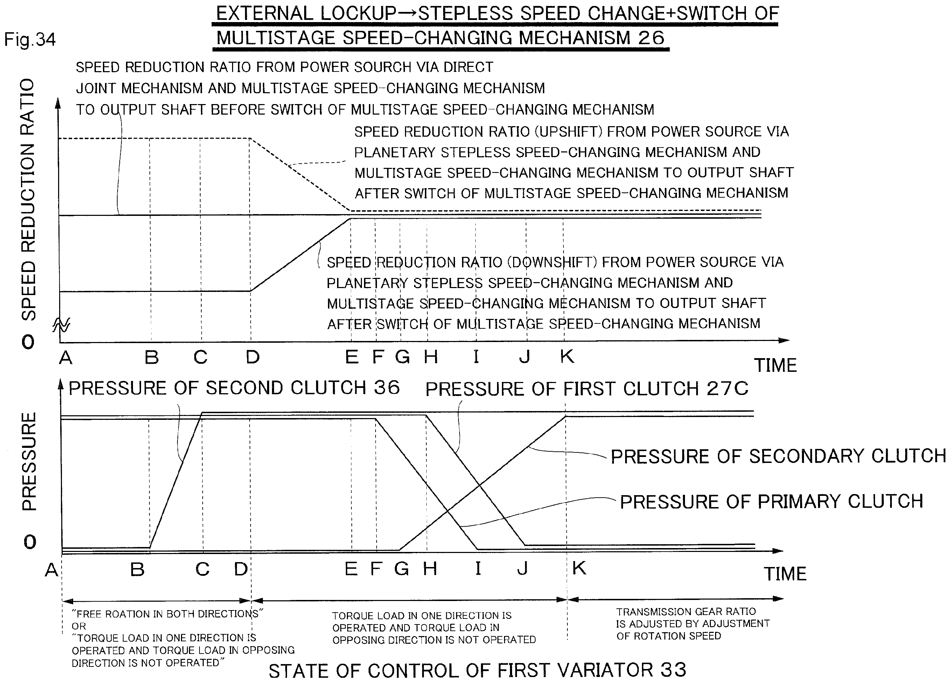

Next, an explanation will be made of a case where the planetary stepless speed-changing mechanism 24 is switched from "external lockup" to "stepless speed change" and the multistage speed-changing mechanism 26 is also speed-changed (switched), with reference to Fig. 34.

This speed change (switch), for example, according to the configuration in Table 2 as described before, is expected to include a speed change from forward one-speed external lockup to forward two-speed stepless speed change, a speed change from forward one-speed external lockup to forward three-speed stepless speed change, a speed change from forward one-speed external lockup to backward one-speed stepless speed change, a speed change from forward two-speed external lockup to forward three-speed stepless speed change, a speed change from forward two-speed external lockup to forward one-speed stepless speed change, a speed change from forward two-speed external lockup to backward one-speed stepless speed change, a speed change from forward three-speed external lockup to forward two-speed stepless speed change, a speed change from forward three-speed external lockup to forward one-speed stepless speed change and a speed change from forward three-speed external lockup to backward one-speed stepless speed change.

In a state of the external lockup from time A to time B in Fig. 34, the controller 25 engages the first clutch 27C and disengages the second clutch 36. In addition, the controller 25 causes the control state of the first hydraulic pump and motor 33 to be "a state where it is possible to rotate freely in both directions (the torque is not operated in both directions)" or "a state where the torque is operated in one direction and the torque is not operated in the opposing direction". In a state of the external lockup, the second clutch 36 and the third clutch 37 may be disengaged or engaged, but are preferably disengaged for reduction in power loss.

The controller 25, from time B to time C, completes the engagement of the second clutch 36 and the third clutch 37. Because of this, the second connecting member 31 and the first hydraulic pump and motor 33 rotate together and the power transmission between the second hydraulic pump and motor 34 and the idler element 28 (idler shaft 28A) is made possible. The controller 25 adjusts the rotation speed of the first hydraulic pump and motor 33 to adjust the speed reduction ratio from the engine 9 via the planetary stepless speed-changing mechanism 24 to the output shaft 23. In this case, a speed reduction ratio from the engine 9 via the planetary stepless speed-changing mechanism 24 in a state after the switching of the multistage speed-changing mechanism 26 to the output shaft 23 is caused to be close to a speed reduction ratio from the engine 9 via the direct joint mechanism 27 in a state before the switching of the multistage speed-changing mechanism 26 to the output shaft 23. At this time, the former speed reduction ratio is not required to be in agreement with the latter speed reduction ratio completely and the former speed reduction ratio has only to be close to the latter speed reduction ratio. In contrast, it is inappropriate that the former speed reduction ratio exceeds the latter speed reduction ratio. The operation for causing the former speed reduction ratio to be close to the latter speed reduction ratio is performed from time D to time E in Fig. 34.

The controller 25 causes the control state of the first hydraulic pump and motor 33 to be "a state where the torque is operated in one direction and the torque is not operated in the opposing direction" from time D to time K in Fig. 34. Because of this, the preparation for switching from the external lockup to the stepless speed change is made only by an operation for decreasing the pressure of the first clutch 27C. The controller 25 decreases the pressure of the primary clutch from time F in Fig. 34 and completes the disengagement of the primary clutch at time I. In addition, the controller 25 increases the pressure of the secondary clutch from time G in Fig. 34 and completes the engagement of the secondary clutch at time K.

The controller 25 decreases the pressure of the first clutch 27C from time H in Fig. 34 and completes the disengagement of the secondary clutch 27C at time J. After time K in Fig. 34, the control state of the first hydraulic pump and motor 33 becomes a state for adjusting the speed reduction ratio of the planetary stepless speed-changing mechanism 24 by adjusting the rotation speed. That is, the controller 25 adjusts the rotation speed of the first hydraulic pump and motor 33 and the rotation of the second connecting member 31 to obtain a desired speed reduction ratio.

In this way, in a case where the planetary stepless speed-changing mechanism 24 is switched from "external lockup" to "stepless speed change" and the multistage speed-changing mechanism 26 is speed-changed (switched), first, the transmission gear ratio of the planetary stepless speed-changing mechanism 24 is changed to be close to a speed reduction ratio after speed change completion of the multistage speed-changing mechanism 26. Thereafter, the speed change (switch) of the multistage speed-changing mechanism 26 starts, and then the switch from "external lockup" to "stepless speed change of the planetary stepless speed-changing mechanism 24 starts. That is, the pressure decrease (disengagement) of the primary clutch and the pressure increase (engagement) of the secondary clutch start, and then the pressure decrease (disengagement) of the first clutch 27C starts.

This speed change, since a change in a rotation speed of the engine 9 as the power source is small in the middle of switching the clutches (the first clutch 27C, the second clutch 36, the primary clutch and the secondary clutch), can shorten time necessary for the switching of the clutches to reduce a change in output torque from the output shaft 23. Because of this, it is possible to improve the operability of the wheel loader 1 and the ride comfort.

Next, an explanation will be made in more detail of a relation between the communicating state and blocking state of the variable relief valves 38A, 38B and the rotation direction and the direction of a torque load of the first hydraulic pump and motor 33, with reference to Fig. 7.

First, an explanation will be made of a case when each setting pressure of both the first variable relief valve 38A and the second variable relief valve 38B is high, that is, both the first variable relief valve 38A and the second variable relief valve 38B are in the blocking state.

First, an explanation will be made of a case where the engine 9 (power source) rotates in a clockwise direction from the engine 9 toward the direction of the output shaft 23 (axle) to give clockwise torque to the first connecting member 30 and the second connecting member 31 rotates in the clockwise direction (one direction). In this case, the clockwise torque operates to the second connecting member 31 and the first hydraulic pump and motor 33 generates a torque load in the clockwise direction (one direction). At this time, the operating fluid has a tendency of flowing in order of the first main pipeline 35A, the second hydraulic pump and motor 34 and the second main pipeline 35B from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the second hydraulic pump and motor 34 is made smaller as compared to that of the first hydraulic pump and motor 33. Because of this, the first main pipeline 35A is higher in pressure as compared to the second main pipeline 35B, enabling the torque load in one direction to operate to the first hydraulic pump and motor 33. That is, the first hydraulic pump and motor 33 rotates in one direction, making it possible to cause the torque load to operate in one direction.

An explanation will be made of a case where the engine 9 (power source) rotates in a clockwise direction from the engine 9 toward the direction of the output shaft 23 (axle) to give counterclockwise torque to the first connecting member 30 and the second connecting member 31 rotates in the clockwise direction (one direction). In this case, the counterclockwise torque operates to the second connecting member 31 and the first hydraulic pump and motor 33 generates a torque load in the counterclockwise direction (opposing direction). At this time, the operating fluid has a tendency of flowing in order of the first main pipeline 35A, the second hydraulic pump and motor 34 and the second main pipeline 35B from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the first hydraulic pump and motor 33 is made smaller as compared to that of the second hydraulic pump and motor 34. Because of this, the second main pipeline 35B is higher in pressure as compared to the first main pipeline 35A, enabling the torque load in the opposing direction to operate to the first hydraulic pump and motor 33. That is, the first hydraulic pump and motor 33 rotates in one direction, making it possible to cause the torque load to operate in the opposing direction.

An explanation will be made of a case where the engine 9 (power source) rotates in a clockwise direction from the engine 9 toward the direction of the output shaft 23 (axle) to give clockwise torque to the first connecting member 30 and the second connecting member 31 rotates in the counterclockwise direction (opposing direction). In this case, the clockwise torque operates to the second connecting member 31 and the first hydraulic pump and motor 33 generates a torque load in the clockwise direction (one direction). At this time, the operating fluid has a tendency of flowing in order of the second main pipeline 35B, the second hydraulic pump and motor 34 and the first main pipeline 35A from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the second hydraulic pump and motor 34 is made smaller as compared to that of the first hydraulic pump and motor 33. Because of this, the first main pipeline 35A is higher in pressure as compared to the second main pipeline 35B, enabling the torque load in one direction to operate to the first hydraulic pump and motor 33. That is, the first hydraulic pump and motor 33 rotates in the opposing direction, making it possible to cause the torque load to operate in one direction.

An explanation will be made of a case where the engine 9 (power source) rotates in a clockwise direction from the engine 9 toward the direction of the output shaft 23 (axle) to give counterclockwise torque to the first connecting member 30

EP 4 782 726 A1

and the second connecting member 31 rotates in the counterclockwise direction (opposing direction). In this case, the counterclockwise torque operates to the second connecting member 31 and the first hydraulic pump and motor 33 generates a torque load in the counterclockwise direction (opposing direction). At this time, the operating fluid has a tendency of flowing in order of the second main pipeline 35B, the second hydraulic pump and motor 34 and the first main pipeline 35A from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the first hydraulic pump and motor 33 is made smaller as compared to that of the second hydraulic pump and motor 34. Because of this, the second main pipeline 35B is higher in pressure as compared to the first main pipeline 35A, enabling the torque load in the opposing direction to operate to the first hydraulic pump and motor 33. That is, the first hydraulic pump and motor 33 rotates in the opposing direction, making it possible to cause the torque load to operate in the opposing direction.

Next, an explanation will be made of a case when the setting pressure of the first variable relief valve 38A is low and when the setting pressure of the second variable relief valve 38B is high, that is, the first variable relief valve 38A is in the communicating state and the second variable relief valve 38B is in the blocking state.

First, an explanation will be made of a case where the engine 9 (power source) rotates in a clockwise direction from the engine 9 toward the direction of the output shaft 23 (axle) to give clockwise torque to the first connecting member 30 and the second connecting member 31 rotates in the clockwise direction (one direction). In this case, the clockwise torque operates to the second connecting member 31 and the first hydraulic pump and motor 33 generates a torque load in the clockwise direction (one direction). At this time, the operating fluid has a tendency of flowing in order of the first main pipeline 35A, the second hydraulic pump and motor 34 and the second main pipeline 35B from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the second hydraulic pump and motor 34 is made smaller as compared to that of the first hydraulic pump and motor 33. Because of this, the first main pipeline 35A is higher in pressure as compared to the second main pipeline 35B, which will cause the torque load in one direction to operate to the first hydraulic pump and motor 33. However, since the first variable relief valve 38A is in the communicating state, the operating fluid flows into the second main pipeline 35B in order of the first main pipeline 35A, the connecting pipeline 44, the first bypass pipeline 45, the variable relief valve 38A and the second check valve 48. Therefore, the first main pipeline 35A will not be higher in pressure as compared to the second main pipeline 35B. That is, the first hydraulic pump and motor 33 rotates in one direction, which enables the torque load not to operate in one direction.

An explanation will be made of a case where the engine 9 (power source) rotates in a clockwise direction from the engine 9 toward the direction of the output shaft 23 (axle) to give counterclockwise torque to the first connecting member 30 and the second connecting member 31 rotates in the clockwise direction (one direction). In this case, the counterclockwise torque operates to the second connecting member 31 and the first hydraulic pump and motor 33 generates a torque load in the counterclockwise direction (opposing direction). At this time, the operating fluid has a tendency of flowing in order of the first main pipeline 35A, the second hydraulic pump and motor 34 and the second main pipeline 35B from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the first hydraulic pump and motor 33 is made smaller as compared to that of the second hydraulic pump and motor 34. Because of this, the second main pipeline 35B is higher in pressure as compared to the first main pipeline 35A, which enables the torque load in the opposing direction to operate to the first hydraulic pump and motor 33. That is, the first hydraulic pump and motor 33 rotates in one direction, which enables the torque load to operate in the opposing direction.

An explanation will be made of a case where the engine 9 (power source) rotates in a clockwise direction from the engine 9 toward the direction of the output shaft 23 (axle) to give clockwise torque to the first connecting member 30 and the second connecting member 31 rotates in the counterclockwise direction (opposing direction). In this case, the clockwise torque operates to the second connecting member 31 and the first hydraulic pump and motor 33 generates a torque load in the clockwise direction (one direction). At this time, the operating fluid has a tendency of flowing in order of the second main pipeline 35B, the second hydraulic pump and motor 34 and the first main pipeline 35A from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the second hydraulic pump and motor 34 is made smaller as compared to that of the first hydraulic pump and motor 33. Because of this, the first main pipeline 35A is higher in pressure as compared to the second main pipeline 35B, which will cause the torque load in one direction to operate to the first hydraulic pump and motor 33. However, since the first variable relief valve 38A is in the communicating state, the operating fluid flows into the second main pipeline 35B in order of the first main pipeline 35A, the connecting pipeline 44, the first bypass pipeline 45, the first variable relief valve 38A and the second check valve 48. Therefore, the first main pipeline 35A will not be higher in pressure as compared to the second main pipeline 35B. That is, the first hydraulic pump and motor 33 rotates in the opposing direction, which enables the torque load not to operate in one direction.

An explanation will be made of a case where the engine 9 (power source) rotates in a clockwise direction from the engine 9 toward the direction of the output shaft 23 (axle) to give counterclockwise torque to the first connecting member 30 and the second connecting member 31 rotates in the counterclockwise direction (opposing direction). In this case, the counterclockwise torque operates to the second connecting member 31 and the first hydraulic pump and motor 33 generates a torque load in the counterclockwise direction (opposing direction). At this time, the operating fluid has a tendency of flowing in order of the second main pipeline 35B, the second hydraulic pump and motor 34 and the first main pipeline 35A from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the first hydraulic pump and motor 33 is made smaller as compared to that of the second hydraulic pump and motor 34. Because of this, the second main pipeline 35B is higher in pressure as compared to the first main pipeline 35A, which enables the torque load in the opposing direction to operate to the first hydraulic pump and motor 33. That is, the first hydraulic pump and motor 33 rotates in the opposing direction, which enables the torque load to operate in the opposing direction.

Next, an explanation will be made of a case when the setting pressure of the first variable relief valve 38A is high and the setting pressure of the second variable relief valve 38B is low, that is, the first variable relief valve 38A is in the blocking state and the second variable relief valve 38B is in the communicating state.

First, an explanation will be made of a case where the engine 9 (power source) rotates in a clockwise direction from the engine 9 toward the direction of the output shaft 23 (axle) to give clockwise torque to the first connecting member 30 and the second connecting member 31 rotates in the clockwise direction (one direction). In this case, the clockwise torque operates to the second connecting member 31 and the first hydraulic pump and motor 33 generates a torque load in the clockwise direction (one direction). At this time, the operating fluid has a tendency of flowing in order of the first main pipeline 35A, the second hydraulic pump and motor 34 and the second main pipeline 35B from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the second hydraulic pump and motor 34 is made smaller as compared to that of the first hydraulic pump and motor 33. Because of this, the first main pipeline 35A is higher in pressure as compared to the second main pipeline 35B, which enables the torque load in one direction to operate to the first hydraulic pump and motor 33. That is, the first hydraulic pump and motor 33 rotates in one direction, which enables the torque load to operate in one direction.

An explanation will be made of a case where the engine 9 (power source) rotates in a clockwise direction from the engine 9 toward the direction of the output shaft 23 (axle) to give counterclockwise torque to the first connecting member 30 and the second connecting member 31 rotates in the clockwise direction (one direction). In this case, the counterclockwise torque operates to the second connecting member 31 and the first hydraulic pump and motor 33 generates a torque load in the counterclockwise direction (opposing direction). At this time, the operating fluid has a tendency of flowing in order of the first main pipeline 35A, the second hydraulic pump and motor 34 and the second main pipeline 35B from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the first hydraulic pump and motor 33 is made smaller as compared to that of the second hydraulic pump and motor 34. Because of this, the second main pipeline 35B is higher in pressure as compared to the first main pipeline 35A, which will cause the torque load in the opposing direction to operate to the first hydraulic pump and motor 33. However, since the second variable relief valve 38B is in the communicating state, the operating fluid flows into the first main pipeline 35A in order of the second main pipeline 35B, the connecting pipeline 44, the second bypass pipeline 46, the second variable relief valve 38B and the first check valve 47. Therefore, the second main pipeline 35B will not be higher in pressure as compared to the first main pipeline 35A. That is, the first hydraulic pump and motor 33 rotates in one direction, which enables the torque load not to operate in the opposing direction.

An explanation will be made of a case where the engine 9 (power source) rotates in a clockwise direction from the engine 9 toward the direction of the output shaft 23 (axle) to give clockwise torque to the first connecting member 30 and the second connecting member 31 rotates in the counterclockwise direction (opposing direction). In this case, the clockwise torque operates to the second connecting member 31 and the first hydraulic pump and motor 33 generates a torque load in the clockwise direction (one direction). At this time, the operating fluid has a tendency of flowing in order of the second main pipeline 35B, the second hydraulic pump and motor 34 and the first main pipeline 35A from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the second hydraulic pump and motor 34 is made smaller as compared to that of the first hydraulic pump and motor 33. Because of this, the first main pipeline 35A is higher in pressure as compared to the second main pipeline 35B, which enables the torque load in one direction to operate to the first hydraulic pump and motor 33. That is, the first hydraulic pump and motor 33 rotates in the opposing direction, which enables the torque load to operate in one direction.

An explanation will be made of a case where the engine 9 (power source) rotates in a clockwise direction from the engine 9 toward the direction of the output shaft 23 (axle) to give counterclockwise torque to the first connecting member 30 and the second connecting member 31 rotates in the counterclockwise direction (opposing direction). In this case, the counterclockwise torque operates to the second connecting member 31 and the first hydraulic pump and motor 33 generates a torque load in the counterclockwise direction (opposing direction). At this time, the operating fluid has a tendency of flowing in order of the second main pipeline 35B, the second hydraulic pump and motor 34 and the first main pipeline 35A from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the first hydraulic pump and motor 33 is made smaller as compared to that of the second hydraulic pump and motor 34. Because of this, the second main pipeline 35B is higher in pressure as compared to the first main pipeline 35A, which will cause the torque load in the opposing direction to operate to the first hydraulic pump and motor 33. However, since the second variable relief valve 38B is in the communicating state, the operating fluid flows into the first main pipeline 35A in order of the second main pipeline 35B, the connecting pipeline 44, the second bypass pipeline 46, the second variable relief valve 38B and the first check valve 47. Therefore, the second main pipeline 35B is not to be higher in pressure as compared to the first main pipeline 35A. That is, the first hydraulic pump and motor 33 rotates in the opposing direction, which enables the torque load not to operate in the opposing direction.

Next, an explanation will be made of a case when each setting pressure of both the first variable relief valve 38A and the second variable relief valve 38B is low, that is, both the first variable relief valve 38A and the second variable relief valve 38B are in the communicating state.

First, an explanation will be made of a case where the engine 9 (power source) rotates in a clockwise direction from the engine 9 toward the direction of the output shaft 23 (axle) to give clockwise torque to the first connecting member 30 and the second connecting member 31 rotates in the clockwise direction (one direction). In this case, the clockwise torque operates to the second connecting member 31 and the first hydraulic pump and motor 33 generates a torque load in the clockwise direction (one direction). At this time, the operating fluid has a tendency of flowing in order of the first main pipeline 35A, the second hydraulic pump and motor 34 and the second main pipeline 35B from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the second hydraulic pump and motor 34 is made smaller as compared to that of the first hydraulic pump and motor 33. Because of this, the first main pipeline 35A is higher in pressure as compared to the second main pipeline 35B, which will cause the torque load in one direction to operate to the first hydraulic pump and motor 33. However, since the first variable relief valve 38A is in the communicating state, the operating fluid flows into the second main pipeline 35B in order of the first main pipeline 35A, the connecting pipeline 44, the first bypass pipeline 45, the first variable relief valve 38A and the second check valve 48. Therefore, the first main pipeline 35A will not be higher in pressure as compared to the second main pipeline 35B. That is, the first hydraulic pump and motor 33 rotates in one direction, which enables the torque load not to operate in one direction.

An explanation will be made of a case where the engine 9 (power source) rotates in a clockwise direction from the engine 9 toward the direction of the output shaft 23 (axle) to give counterclockwise torque to the first connecting member 30 and the second connecting member 31 rotates in the clockwise direction (one direction). In this case, the counterclockwise torque operates to the second connecting member 31 and the first hydraulic pump and motor 33 generates a torque load in the counterclockwise direction (opposing direction). At this time, the operating fluid has a tendency of flowing in order of the first main pipeline 35A, the second hydraulic pump and motor 34 and the second main pipeline 35B from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the first hydraulic pump and motor 33 is made smaller as compared to that of the second hydraulic pump and motor 34. Because of this, the second main pipeline 35B is higher in pressure as compared to the first main pipeline 35A, which will cause the torque load in the opposing direction to operate to the first hydraulic pump and motor 33. However, since the second variable relief valve 38B is in the communicating state, the operating fluid flows into the first main pipeline 35A in order of the second main pipeline 35B, the connecting pipeline 44, the second bypass pipeline 46, the second variable relief valve 38B and the first check valve 47. Therefore, the second main pipeline 35B is not to be higher in pressure as compared to the first main pipeline 35A. That is, the first hydraulic pump and motor 33 rotates in one direction, which enables the torque load not to operate in the opposing direction.

An explanation will be made of a case where the engine 9 (power source) rotates in a clockwise direction from the engine 9 toward the direction of the output shaft 23 (axle) to give clockwise torque to the first connecting member 30 and the second connecting member 31 rotates in the counterclockwise direction (opposing direction). In this case, the clockwise torque operates to the second connecting member 31 and the first hydraulic pump and motor 33 generates a torque load in the clockwise direction (one direction). At this time, the operating fluid has a tendency of flowing in order of the second main pipeline 35B, the second hydraulic pump and motor 34 and the first main pipeline 35A from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the second hydraulic pump and motor 34 is made smaller as compared to that of the first hydraulic pump and motor 33. Because of this, the first main pipeline 35A is higher in pressure as compared to the second main pipeline 35B, which will cause the torque load in one direction to operate to the first hydraulic pump and motor 33. However, since the first variable relief valve 38A is in the communicating state, the operating fluid flows into the second main pipeline 35B in order of the first main pipeline 35A, the connecting pipeline 44, the first bypass pipeline 45, the first variable relief valve 38A and the second check valve 48. Therefore, the first main pipeline 35A is not to be higher in pressure as compared to the second main pipeline 35B. That is, the first hydraulic pump and motor 33 rotates in the opposing direction, which enables the torque load not to operate in one direction.

An explanation will be made of a case where the engine 9 (power source) rotates in a clockwise direction from the engine 9 toward the direction of the output shaft 23 (axle) to give counterclockwise torque to the first connecting member 30 and the second connecting member 31 rotates in the counterclockwise direction (opposing direction). In this case, the counterclockwise torque operates to the second connecting member 31 and the first hydraulic pump and motor 33 generates a torque load in the counterclockwise direction (opposing direction). At this time, the operating fluid has a tendency of flowing in order of the second main pipeline 35B, the second hydraulic pump and motor 34 and the first main pipeline 35A from the first hydraulic pump and motor 33 to be back to the first hydraulic pump and motor 33. In this case, by adjusting a discharge capacity per one rotation of the first hydraulic pump and motor 33 and the second hydraulic pump and motor 34, a discharge flow rate of the first hydraulic pump and motor 33 is made smaller as compared to that of the second hydraulic pump and motor 34. Because of this, the second main pipeline 35B is higher in pressure as compared to the first main pipeline 35A, which will cause the torque load in the opposing direction to operate to the first hydraulic pump and motor 33. However, since the second variable relief valve 38B is in the communicating state, the operating fluid flows into the first main pipeline 35A in order of the second main pipeline 35B, the connecting pipeline 44, the second bypass pipeline 46, the second variable relief valve 38B and the first check valve 47. Therefore, the second main pipeline 35B will not be higher in pressure as compared to the first main pipeline 35A. That is, the first hydraulic pump and motor 33 rotates in the opposing direction, which enables the torque load not to operate in the opposing direction.

As described above, according to the first embodiment, the speed-changing device 21 includes the input shaft 22 (input member), the output shaft 23 (output member), the planetary stepless speed-changing mechanism 24, the direct joint mechanism 27, the idler element 28 and the multistage speed-changing mechanism 26. The input shaft 22 rotates by the power source (engine 9) mounted on the vehicle (wheel loader 1). The output shaft 23 outputs the rotation to the traveling device (front axle 12 and/or rear axle 13) in the vehicle. The planetary stepless speed-changing mechanism 24 is disposed between the input shaft 22 and the output shaft 23. The planetary stepless speed-changing mechanism 24 speed-changes the rotation of the input shaft 22-side, which is transmitted to the output shaft 23-side. The direct joint mechanism 27 transmits the rotation of the input shaft 22-side to the output shaft 23-side by bypassing the planetary stepless speed-changing mechanism 24. The idler element 28 mechanically connects the output side of the planetary stepless speed-changing mechanism 24 and the output side of the direct joint mechanism 27. The multistage speed-changing mechanism 26 gradually speed-changes the rotation of the planetary stepless speed-changing mechanism 24 at the output side by switching the transmission route of the meshing of gears.

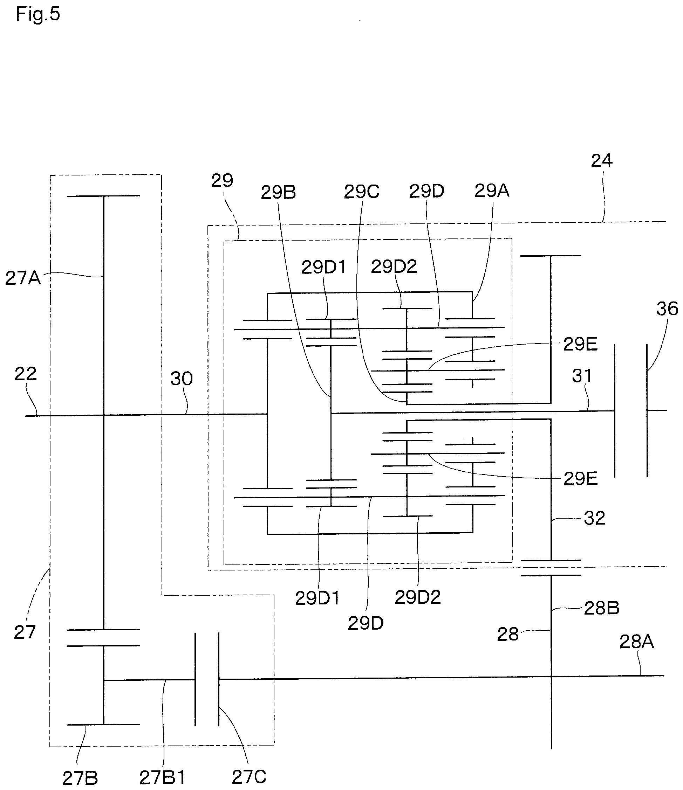

The direct joint mechanism 27 is provided with the first clutch 27C (direct joint clutch) disposed between the input shaft 22 and the idler element 28. The planetary stepless speed-changing mechanism 24 includes the planetary gear mechanism 29 (planetary mechanism), the first variator 33 (first hydraulic pump and motor 33) and the second variator 34 (second hydraulic pump and motor 34). The planetary gear mechanism 29 includes, for example, as shown in Fig. 4 and in Fig. 5, three members of a carrier 29A (first member) connected to the input shaft 22-side, a first sun gear 29B (second member) as the output side and a second sun gear 29C (third member) that is connected to the idler element 28 and is the output side different from the first sun gear 29B. In this case, the carrier 29A (first member) is connected via the first connecting member 30 to the input shaft 22. The first sun gear 29B (second member) is connected via the second connecting member 31 and the second clutch 36 to the first variator 33. The second sun gear 29C (third member) is connected via the third connecting member 32 to the idler element 28 (first idler gear 28B).

The first variator 33 is connected to the first sun gear 29B in the planetary gear mechanism 29. The transmission of power is made possible between the second variator 34 and the first variator 33. In addition, the speed-changing device 21 is provided with the controller 25. The controller 25 controls the rotation speed of the first variator 33 and the engagement/disengagement of the first clutch 27C.

The controller 25 can switch the speed-changing device 21 to three power transmission states composed of a first power transmission state, a second power transmission state and a third power transmission state. In the first power transmission state, the first clutch 27C is disengaged and the rotation speed of the first variator 33 is changed, thus changing the rotation speed of the first sun gear 29B. The first power transmission state of this kind is a state (stepless speed change) in which the rotation motion with two degrees of freedom is performed between the carrier 29A, the first sun gear 29B and the second sun gear 29C and the power transmitted from the engine 9 to the planetary stepless speed-changing mechanism 24 is transmitted to the multistage speed-changing mechanism 26.

In the second power transmission state, the first clutch 27C is disengaged and the rotation of the first variator 33 is stopped, thus stopping the rotation speed of the first sun gear 29B. The second power transmission state of this kind is a state (internal lockup) in which the rotation motion with one degree of freedom is performed between the carrier 29A, the first sun gear 29B and the second sun gear 29C and the power transmitted from the engine 9 to the planetary stepless speed-changing mechanism 24 is transmitted to the multistage speed-changing mechanism 26. In the third power transmission state, the first clutch 27C is engaged. The third power transmission state of this kind is a state (external lockup) in which the power transmitted from the engine 9 to the direct joint mechanism 27 by bypassing the planetary stepless speed-changing mechanism 24 is transmitted to the multistage speed-changing mechanism 26.

In this way, according to the first embodiment, the speed-changing device 21 can be switched to the three power transmission states composed of the first power transmission state (stepless speed change), the second power transmission state (internal lockup) and the third power transmission state (external lockup). Therefore, the number of the speed stages (the number of speed change stages) of the multistage speed-changing mechanism 26 can be decreased as compared to the configuration in which this switch cannot be performed (for example, the configuration of the internal lockup only). Because of this, the downsizing and lowering cost of the multistage speed-changing mechanism 26 can be achieved. In addition, since the power loss of the multistage speed-changing mechanism 26 can be reduced, the transmission efficiency of the speed-changing device 21 as a whole can be improved. In addition, the controller 25 can switch the second power transmission state (internal lockup) and the third power transmission state (external lockup) according to the rotation speed of the output shaft 23. That is, the controller 25 is connected to a second speed detector 50 for detecting the rotation speed (output rotation speed $V_{out}$) and the rotation direction of the output shaft 23. The rotation speed (output rotation speed $V_{out}$) of the output shaft 23 corresponds to the vehicle speed of the wheel loader 1. As shown in Fig. 11 and in Table 1 or in Fig. 12 and in Table 2, the controller 25 can switch the second power transmission state (internal lockup) and the third power transmission state (external lockup) according to the rotation speed (output rotation speed $V_{out}$) of the output shaft 23. Therefore, it is possible to smoothly perform the switching of the second power transmission state (internal lockup) and the third power transmission state (external lockup).

According to the first embodiment, the multistage speed-changing mechanism 26 is provided with a plurality of transmission routes arranged between the idler element 28 and the output shaft 23 and the number of times in the meshing of gears is the same for each of the transmission routes (for example, the odd number of times). For example, the multistage speed-changing mechanism 26 is provided with a low range shaft unit 61 as a first output transmission route (forward one-speed power transmission route) and a high range shaft unit 62 as a second output transmission route (forward two-speed power transmission route) and a third output transmission route (forward three-speed power transmission route). The plurality of transmission routes each have a different rotation speed ratio for transmitting the rotation of the idler element 28 to the output shaft 23. For example, the first output transmission route (forward one-speed) of the low range shaft unit 61, the second output transmission route (forward two-speed) of the high range shaft unit 62 and the third output transmission route (forward three-speed) of the high range shaft unit 62 each have a rotation speed ratio different from each other.

On top of that, the controller 25 performs a simultaneous speed change of at least one of a first simultaneous speed change and a second simultaneous speed change. The first simultaneous speed change, at the switching from the third power transmission state (external lockup) to the second power transmission state (internal lockup), is a speed change for also performing a change of the plurality of transmission routes in the multistage speed-changing mechanism 26. The second simultaneous speed change, at the switching from the second power transmission state (internal lockup) to the third power transmission state (external lockup) is a speed change for also performing a change of the plurality of transmission routes in the multistage speed-changing mechanism 26. According to the first embodiment, the first simultaneous speed change is performed as shown in Fig. 29 and Fig. 30 and the second simultaneous speed change is performed as shown in Fig. 27 and Fig. 28. Therefore, the time required for the speed change can be made short.

According to the first embodiment, the controller 25, at the switching from the second power transmission state (internal lockup) to the third power transmission state (external lockup) or at the switching from the third power transmission state (external lockup) to the second power transmission state (internal lockup), causes the power transmission state to be the fourth power transmission state. The fourth power transmission state is a state (asymmetric state) of differentiating a load of the first variator 33 to the rotation in one direction from a load of the first variator 33 to the rotation in the opposing direction. The controller 25 can cause the power transmission state to be the fourth power transmission state by differentiating the setting pressure of the first variable relief valve 38A from the setting pressure of the second variable relief valve 38B.

The controller 25 causes the power transmission state to be the fourth power transmission state to differentiate the torque transmissible from the power source (engine 9) via the planetary stepless speed-changing mechanism 24 to the multistage speed-changing mechanism 26 from the torque transmissible from the multistage speed-changing mechanism 26 via the planetary stepless speed-changing mechanism 24 to the power source (engine 9). The fourth power transmission state as described above is caused to, for example, a state where the load is given to the rotation in one direction of the first variator 33 and the load is not given to the rotation in the opposing direction of the first variator 33. That is, the controller 25 causes the first variable relief valve 38A to be in the blocking state and the second variable relief valve 38B to be in the communicating state, thereby causing the operation state of the first hydraulic pump and motor 33 to be a state where the torque (load) is operated in one direction and the torque (load) is not operated in the opposing direction.

Because of this, the switching of the second power transmission state (internal lockup) and the third power transmission state (external lockup) can be smoothly performed.

According to the first embodiment, the controller 25, at the time of performing the first simultaneous speed change, starts the change of the plurality of transmission routes in the multistage speed-changing mechanism 26 prior to the start of the switch from the third power transmission state (external lockup) to the second power transmission state (internal lockup). That is, as shown in Fig. 29 or Fig. 30, the controller 25 starts the pressure decrease (disengagement) of the primary clutch and the pressure increase (engagement) of the secondary clutch prior to the start of the pressure decrease (disengagement) of the first clutch 27C. Because of this, the first simultaneous speed change can be smoothly performed.

According to the first embodiment, the controller 25, at the time of performing the second simultaneous speed change, starts the switch from the second power transmission state (internal lockup) to the third power transmission state (external lockup) prior to the start of the change of the plurality of transmission routes in the multistage speed-changing mechanism 26. That is, as shown in Fig. 27 or Fig. 28, the controller 25 starts the pressure increase (engagement) of the first clutch 27C prior to the start of the pressure decrease (disengagement) of the primary clutch and the pressure increase (engagement) of the secondary clutch. Because of this, the second simultaneous speed change can be smoothly performed.

According to the first embodiment, the controller 25 performs a simultaneous speed change of at least one of the third simultaneous speed change and the fourth simultaneous speed change. The third simultaneous speed change, at the switching from the first power transmission state (stepless speed change) to the third power transmission state (external lockup), is a speed change for also performing the change of the plurality of transmission routes in the multistage speed-changing mechanism 26. The fourth simultaneous speed change, at the switching from the third power transmission state (external lockup) to the first power transmission state (stepless speed change), is a speed change for also performing the change of the plurality of transmission routes in the multistage speed-changing mechanism 26. According to the first embodiment, for example, the third simultaneous speed change is performed as shown in Fig. 33 and the fourth simultaneous speed change is performed as shown in Fig. 34. Therefore, the time required for the speed change can be shortened.

According to the first embodiment, the controller 25, at the time of performing the third simultaneous speed change, starts the switch from the first power transmission state (stepless speed change) to the third power transmission state (external lockup) prior to the start of the change of the plurality of transmission routes in the multistage speed-changing mechanism 26. That is, as shown in Fig. 33, the controller 25 starts the pressure increase (engagement) of the first clutch 27C prior to the start of the pressure decrease (disengagement) of the primary clutch and the pressure increase (engagement) of the secondary clutch. Because of this, the third simultaneous speed change can be smoothly performed.

According to the first embodiment, the controller 25, at the time of performing the fourth simultaneous speed change, starts the change of the plurality of transmission routes in the multistage speed-changing mechanism 26 prior to the start of the switch from the third power transmission state (external lockup) to the first power transmission state (stepless speed change). That is, as shown in Fig. 34, the controller 25 starts the pressure decrease (disengagement) of the primary clutch and the pressure increase (engagement) of the secondary clutch prior to the start of the pressure decrease (disengagement) of the first clutch 27C. Because of this, the fourth simultaneous speed change can be smoothly performed.

According to the first embodiment, the controller 25, at the switching from the first power transmission state (stepless speed change) to the third power transmission state (external lockup) or at the switching from the third power transmission state (external lockup) to the first power transmission state (stepless speed change), causes the power transmission state to be the fourth power transmission state.

Because of this, the controller 25 differentiates the torque transmissible from the power source (engine 9) via the planetary stepless speed-changing mechanism 24 to the multistage speed-changing mechanism 26 from the torque transmissible from the multistage speed-changing mechanism 26 via the planetary stepless speed-changing mechanism 24 to the power source (engine 9). The fourth power transmission state as described above is caused to, for example, a state where the load is given to the rotation in one direction of the first variator 33 and the load is not given to the rotation in the opposing direction of the first variator 33. That is, the controller 25 causes the first variable relief valve 38A to be in the blocking state and the second variable relief valve 38B to be in the communicating state, thereby causing the operation state of the first hydraulic pump and motor 33 to be a state where the torque (load) is operated in one direction and the torque (load) is not operated in the opposing direction. Because of this, the switching of the first power transmission state (stepless speed change) and the third power transmission state (external lockup) can be smoothly performed.

According to the first embodiment, as shown in Fig. 33, the controller 25, at the time of performing the third simultaneous speed change, controls the rotation speed of the first variator 33 to adjust the speed reduction ratio from the power source (engine 9) to the output shaft 23. In this case, the controller 25 causes, before the third simultaneous speed change, a speed reduction ratio from the power source (engine 9) to the output shaft 23 in the first power transmission state (stepless speed change) before the third simultaneous speed change to be close to a speed reduction ratio from the power source (engine 9) to the output shaft 23 in the third power transmission state (external lockup) after the third simultaneous speed change. In this way, the controller 25 causes the speed reduction ratio from the power source (engine 9) to the output shaft 23 in the first power transmission state (stepless speed change) to be close to the speed reduction ratio from the power source (engine 9) to the output shaft 23 in the third power transmission state (external lockup), and then performs the switch of the power transmission route in the multistage speed-changing mechanism 26. Therefore, the third simultaneous speed change can be smoothly performed also in terms of this aspect.

According to the first embodiment, as shown in Fig. 34, the controller 25, at the time of performing the fourth simultaneous speed change, controls the rotation speed of the first variator 33 to adjust the speed reduction ratio from the power source (engine 9) to the output shaft 23. In this case, the controller 25 causes, before the fourth simultaneous speed change, a speed reduction ratio from the power source (engine 9) to the output shaft 23 in the third power transmission state (external lockup) before the fourth simultaneous speed change to be close to a speed reduction ratio from the power source (engine 9) to the output shaft 23 in the first power transmission state (stepless speed change) after the fourth simultaneous speed change. In this way, the controller 25 causes the speed reduction ratio from the power source (engine 9) to the output shaft 23 in the third power transmission state (external lockup) to be close to the speed reduction ratio from the power source (engine 9) to the output shaft 23 in the first power transmission state (stepless speed change), and then performs the switch of the power transmission route in the multistage speed-changing mechanism 26. Therefore, the fourth simultaneous speed change can be smoothly performed also in terms of this aspect.

According to the first embodiment, the speed-changing device 21 is provided with the multistage speed-changing mechanism 26 disposed between a third member (that is, a member connected via the third connecting member 32 to the idler element 28, for example, the second sun gear 29C) in the planetary gear mechanism 29 (planetary mechanism) and the output shaft 23 (output member). The multistage speed-changing mechanism 26 is provided with the forward one-speed power transmission route (low range shaft unit 61) as the first output transmission route, the forward two-speed power transmission route (high range shaft unit 62) as the second output transmission route and the forward three-speed power transmission route (high range shaft unit 62) as the third output transmission route. In addition, the multistage speed-changing mechanism 26 is provided with the backward one-speed power transmission route (low range shaft unit 61) between the idler element 28 and the output shaft 23 as the reverse rotation route of which the number of times in the meshing of gears is different from that of the first, second and third output transmission routes as normal rotation routes (for example, zero or the even number of times). When a backward one-speed gear 67 and a low range shaft 65 are jointed (engaged) by a backward one-speed clutch 70, a first idler gear 28B, a counter gear 64, the backward one-speed gear 67, the low range shaft 65, a low range gear 68, a low range output gear 78 and an output shaft 77 (output shaft 23) rotate together. The number of times in the meshing of gears is the even number of times at the time of transmitting the power transmitted from the planetary stepless speed-changing mechanism 24 or the direct joint mechanism 27 to the idler element 28 to the output shaft 77 (output shaft 23) when the backward one-speed clutch 70 is engaged.

On the other hand, when a forward one-speed gear 66 and the low range shaft 65 are jointed (engaged) by a forward one-speed clutch 69, a second idler gear 28C, the forward one-speed gear 66, the low range shaft 65, the low range gear 68, the low range output gear 78 and the output shaft 77 (output shaft 23) rotate together. The number of times in the meshing of gears is the odd number of times at the time of transmitting the power transmitted to the idler element 28 by the planetary stepless speed-changing mechanism 24 or the direct joint mechanism 27 to the output shaft 77 (output shaft 23) when the forward one-speed clutch 69 is engaged. In addition, when a forward two-speed gear 72 and a high range shaft 71 are jointed (engaged) by a forward two-speed clutch 75, the second idler gear 28C, the forward two-speed gear 72, the high range shaft 71, a high range gear 74, a high range output gear 79 and the output shaft 77 (output shaft 23) rotate together. The number of times in the meshing of gears is the odd number of times at the time of transmitting the power transmitted to the idler element 28 by the planetary stepless speed-changing mechanism 24 or the direct joint mechanism 27 to the output shaft 77 (output shaft 23) when the forward two-speed clutch 75 is engaged.

In addition, when a forward three-speed gear 73 and the high range shaft 71 are jointed (engaged) by a forward three-speed clutch 76, the first idler gear 28B, the forward three-speed gear 73, the high range shaft 71, the high range gear 74, the high range output gear 79 and the output shaft 77 (output shaft 23) rotate together. The number of times in the meshing of gears is the odd number of times at the time of transmitting the power transmitted to the idler element 28 by the planetary stepless speed-changing mechanism 24 or the direct joint mechanism 27 to the output shaft 77 (output shaft 23) when the forward three-speed clutch 76 is engaged. That is, the multistage speed-changing mechanism 26 can reverse the travel direction of the wheel loader 1 (vehicle) by switching a reverse rotation mode (backward mode) in which the backward one-speed clutch 70 is engaged and a normal rotation mode (forward mode) in which the forward one-speed clutch 69, the forward two-speed clutch 75 or the forward three-speed clutch 76 is engaged. Therefore, the speed-changing device 21 can reverse the rotation direction of the load (output shaft 23).

It should be noted that in the first modification example as shown in Fig. 13, the brake mechanism 55 (brake) is disposed in the second connecting member 31 linked to the first variator 33. Because of this, in the first modification example, the brake mechanism 55 (brake) is connected to a second member in the planetary gear mechanism 29 (planetary mechanism) (that is, a member connected via the second connected member 31 to the first variator 33, for example, the first sun gear 29B). The controller 25 maintains the second power transmission state (internal lockup) by engaging the brake mechanism 55 (brake). Therefore, the rotation speed of the second connecting member 31 (resultantly, the second member of the planetary gear mechanism 29) can be maintained to zero by the brake mechanism 55 without maintaining the rotation speed of the second connecting member 31 (resultantly, the second member of the planetary gear mechanism 29) to zero by the first variator 33. Because of this, for example, in a case where the first variator 33 is an electric motor, the rotation speed can be maintained to zero without continuing to supply the electric power to the first variator 33. As a result, the loss at the time of the second power transmission state (internal lockup) can be reduced.

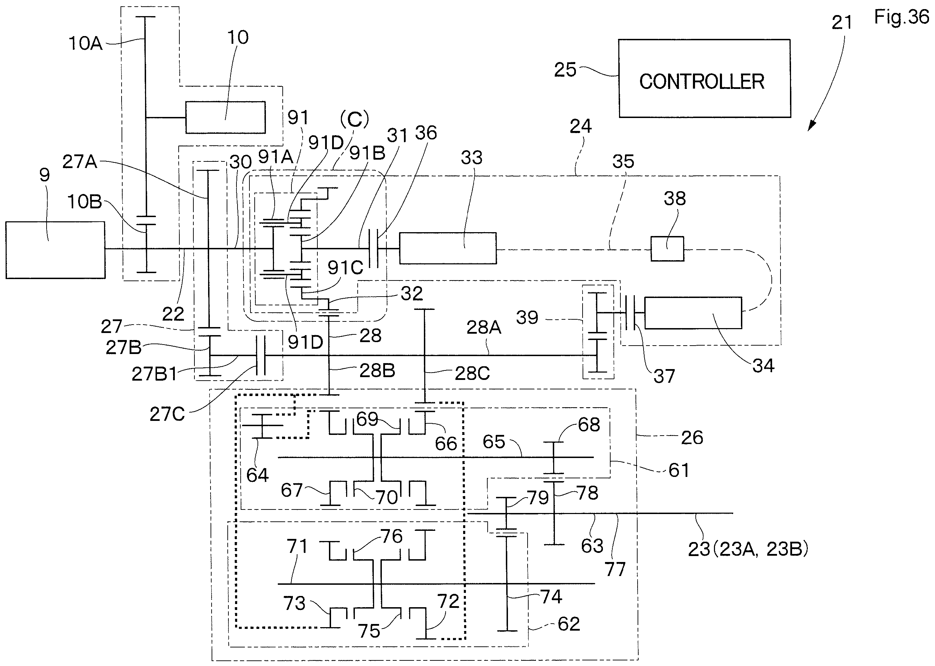

Next, Fig. 36 to Fig. 39 show a second embodiment. The second embodiment is characterized in that a planetary gear mechanism is configured of a carrier, a sun gear and a ring gear. It should be noted that in the second embodiment, components identical to those in the first embodiment are referred to as the identical reference numerals, and an explanation thereof is omitted.

In the first embodiment, the explanation is made by taking as an example a case where the planetary gear mechanism 29 in the planetary stepless speed-changing mechanism 24 is configured of the carrier and the two sun gears. On the other hand, in the second embodiment a planetary gear mechanism 91 in the planetary stepless speed-changing mechanism 24 is configured of a carrier 91A, a sun gear 91B and a ring gear 91C. Table 5 as described below shows a combination of configuration elements (the carrier, the sun gear and the ring gear) of the planetary gear mechanism 91. In any case, the power transmission is made possible. "No. 2-A" in Table 5 is the most preferable from a point of view that the transmission efficiency of the planetary stepless speed-changing mechanism 24 can be improved, the maximum absorption torque of the first variator 33 can be reduced, and the entirety of the planetary stepless speed-changing mechanism 24 can be configured to be downsized and lightweighting.

[Table 5]

| No. | First member linked to power source | Second member linked to first variator | Third member linked to idler element | Number of Figure |
|---|---|---|---|---|
| 12-A I | carrier | sun gear | ring gear | IFig. 36 (second embodiment) |
| 2-B | ring gear | carrier | sun gear | Fig. 40 (sixth modification example) |
| 2-C | carrier | ring gear | sun gear | Fig. 41 (seventh modification example) |
| 2-D | ring gear | sun gear | carrier | Omitted in illustration |
| 2-E | sun gear | ring gear | carrier | Omitted in illustration |
| 2-F | sun gear | carrier | ring gear | Omitted in illustration |

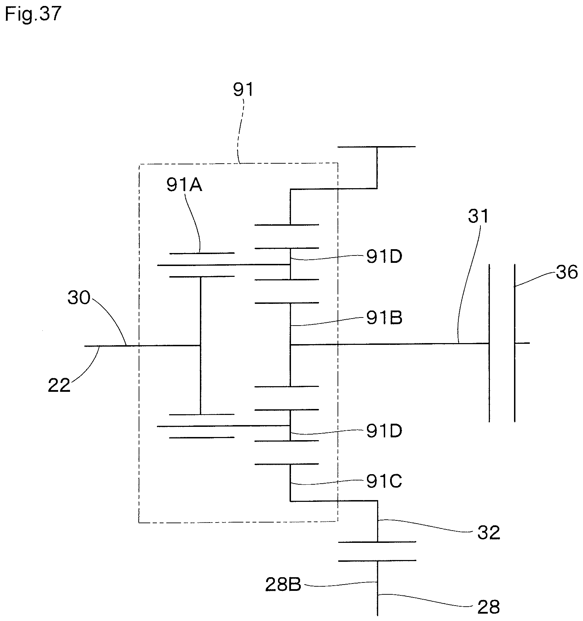

As shown in Fig. 36 and Fig. 37, in the second embodiment (that is, No. 2-A in Table 5) the planetary gear mechanism 91 is provided with the carrier 91A corresponding to a first member, the sun gear 91B corresponding to a second member, the ring gear 91C corresponding to a third member and a planet gear 91D. It should be noted that the power transmission of the sun gear 91B, the ring gear 91C and the planet gear 91D may be performed not by the meshing of gears but by friction of a roller (an outer peripheral surface), for example.

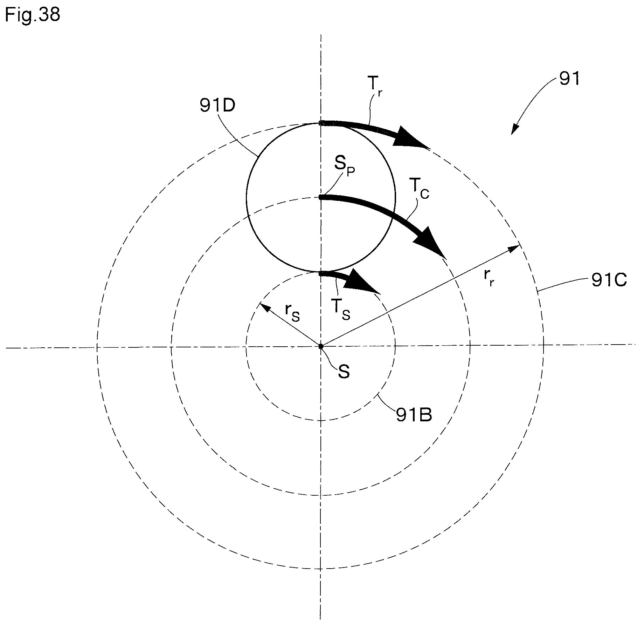

The engine 9 (input shaft 22) is connected via the first connecting member 30 to the carrier 91A. The sun gear 91B is connected via the second connecting member 31 to the first variator 33. The ring gear 91C is connected via the third connecting member 32 to the idler element 28 (first idler gear 28B). The sun gear 91B is meshed with the planet gear 91D. The planet gear 91D is meshed with the ring gear 91C. A rotating axis Sp (Fig. 38) of the planet gear 91D is supported on the carrier 91A. Therefore, the planet gear 91D rotates on its own axis while revolving about a center axis S (Fig. 38) of the planetary gear mechanism 91.

Next, an explanation will be made of an operation of the planetary gear mechanism 91 configured of the carrier 91A, the sun gear 91B and the ring gear 91C. The following is established in all conditions of "No. 2-A", "No. 2-B", "No. 2-C", "No. 2-D", "No. 2-E" and "No. 2-F" in Table 5.

First, an explanation will be made of distribution of torque between three members (the carrier 91A, the sun gear 91B and the ring gear 91C) in the planetary gear mechanism 91. Fig. 38 is a cross section showing the planetary gear mechanism 91 as viewed from the power source side. The carrier 91A, the sun gear 91B and the ring gear 91C are arranged concentrically. That is, the center axes S (rotation center axes) of the carrier 91A, the sun gear 91B and the ring gear 91C are in agreement. The planet gear 91D is arranged to contact an outer periphery of the sun gear 91B and an inner periphery of the ring gear 91C. The planet gear 91D is meshed with the sun gear 91B and the ring gear 91C. The carrier 91A, the sun gear 91B and the ring gear 91C are, for establishing the meshing of the respective gears, supported on a casing of the planetary stepless speed-changing mechanism 24 to be capable of rotating about the center axis S and to be incapable of moving in the other direction. The planet gear 91D is supported on the carrier 91A to be capable of rotating about the rotating axis Sp as the center axis of the planet gear 91D and to be incapable of moving in the other direction. The planet gear 91D rotates about the center axis Sp of the planet gear 91D while revolving about the center axis S of the carrier 91A.

The limiting condition of the planetary gear mechanism 91 lies, as shown in Fig. 38, in that the sun gear 91B, the ring gear 91C and the planet gear 91D are required to be meshed. In addition, for securing the strength of gears, it is necessary to make a diameter of the planet gear 91D large. That is, the limiting condition of the planetary gear mechanism 91 lies in that a meshing radius rs of the sun gear 91B becomes significantly smaller than a meshing radius rr of the ring gear 91C. "No. 2-A" in Table 5 is configured such that the carrier 91A is connected to the first connecting member 30 linked to the engine 9 (power source). Therefore, torque Tc of the carrier 91A is torque that the engine 9 can generate. The sun gear 91B is connected to the second connecting member 31 linked to the first variator 33. Therefore, torque Ts of the sun gear 91B is torque that the first variator 33 can generate. The ring gear 91C is connected to the third connecting member 32 linked to the idler element 28. Therefore, torque Tr of the ring gear 91C is a torque reaction receiving from the first idler gear 28B.

A ratio of the torque Ts of the sun gear 91B, the torque Tr of the ring gear 91C and the torque Tc of the carrier 91A is constant during the time when the planetary stepless speed-changing mechanism 24 is transmitting the power. The controller 25 outputs signals for controlling the first variator 33 based upon this principle and controls the torque of the second connecting member 31 (for example, the sun gear 91B) linked to the first variator 33. That is, the controller 25 controls the torque of the second connecting member 31 (for example, the sun gear 91B) by controlling the first variator 33. Because of this, the controller 25 indirectly controls the torque of the first connecting member 30 (for example, the carrier 91A) linked to the engine 9 and the torque of the third connecting member 32 (for example, the sun gear 91C) linked to the idler element 28. As a result, the transmission torque can be controlled between the first connecting member 30 (for example, the carrier 91A) linked to the engine 9 and the third connecting member 32 (for example, the ring gear 91C) linked to the idler element 28.

Fig. 39 shows a relation of rotation speeds of the planetary gear mechanism 91. There is assumed that the rotation speed of the carrier 91A is constant. In this case, when the rotation speed of the ring gear 91C is made high, the rotation speed of the sun gear 91B is made low. In contrast, when the rotation speed of the ring gear 91C is made low, the rotation speed of the sun gear 91B is made high. The controller 25 outputs signals for controlling the first variator 33 based upon this principle and controls the rotation speed of the second connecting member 31 (for example, the sun gear 91B) linked to the first variator 33. That is, the controller 25 controls the rotation speed of the second connecting member 31 (for example, the sun gear 91B) by controlling the first variator 33. Because of this, the controller 25 indirectly controls the rotation speed of the first connecting member 30 (for example, the carrier 91A) linked to the engine 9 and the rotation speed of the third connecting member 32 (for example, the ring gear 91C) linked to the idler element 28. As a result, the speed change ratio can be controlled between the first connecting member 30 (for example, the carrier 91A) linked to the engine 9 and the third connecting member 32 (for example, the ring gear 91C) linked to the idler element 28.

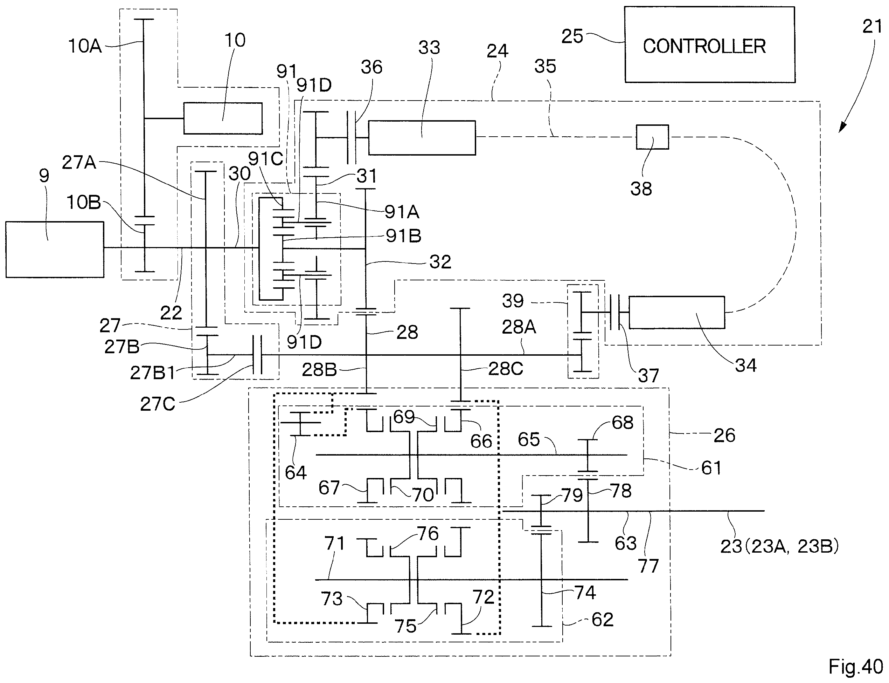

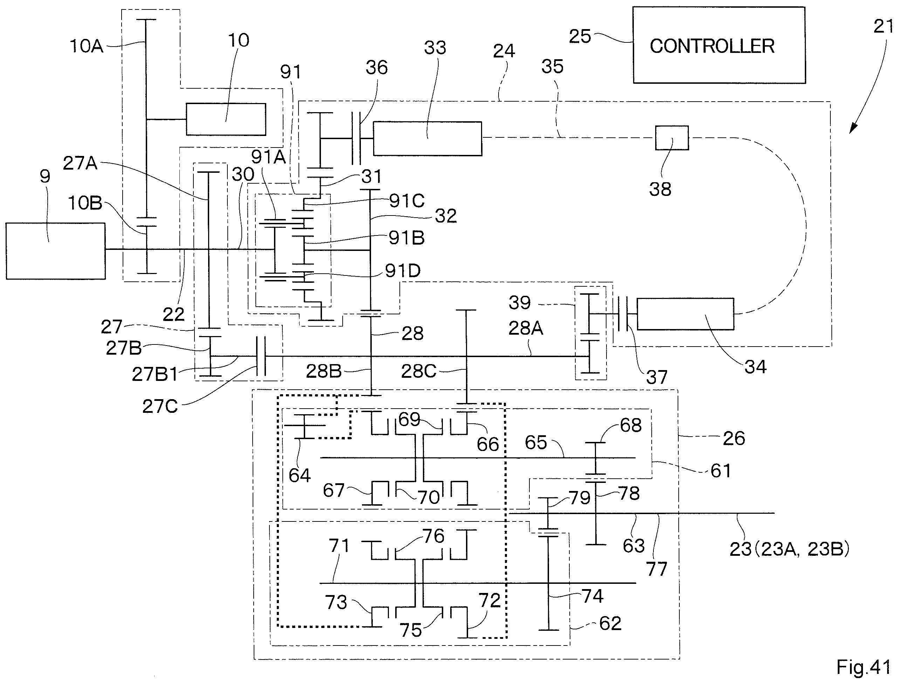

It should be noted that as the sixth modification example (No. 2-B in Table 5) as shown in Fig. 40, the planetary gear mechanism 91 may cause the ring gear 91C to be connected to the first connecting member 30 as a member linked to the engine 9, cause the carrier 91A to be connected to the second connecting member 31 as a member linked to the first variator 33 and cause the sun gear 91B to be connected to the third connecting member 32 as a member linked to the idler element 28. In addition, as the seventh modification example (No. 2-C in Table 5) as shown in Fig. 41, the planetary gear mechanism 91 may cause the carrier 91A to be connected to the first connecting member 30, cause the ring gear 91C to be connected to the second connecting member 31 and cause the sun gear 91B to be connected to the third connecting member 32. Further, although omitted in illustration, the planetary gear mechanism 91 may cause the carrier 91A, the sun gear 91B and the ring gear 91C to be connected to the first connecting member 30, the second connecting member 31 and the third connecting member 32 respectively as shown in "No. 2-D", "No. 2-E" or "No. 2-F" in Table 5.

The second embodiment is provided with the planetary gear mechanism 91 as described above, and a basic operation thereof is not particularly different from that of the first embodiment as described above. That is, the second embodiment, also as similar to the first embodiment, can be switched to three power transmission states composed of the first power transmission state (stepless speed change), the second power transmission state (internal lockup) and the third power transmission state (external lockup). Therefore, as compared to the configuration in which this switch cannot be performed (for example, the configuration with the internal lockup only), the number of the speed stages of the multistage speed-changing mechanism 26 (the number of shift stages) can be reduced. Because of this, the multistage speed-changing mechanism 26 can be downsized and lowered in costs. In addition, since the power loss of the multistage speed-changing mechanism 26 can be reduced, the transmission efficiency of the speed-changing device 21 as a whole can be improved.

It should be noted that in the first embodiment, the second variator 34 is connected to the idler element 28 (specifically, the idler shaft 28A as a rotation element) disposed between the planetary gear mechanism 29 and the multistage speed-changing mechanism 26. On the other hand, although omitted in illustration, the second variator 34 may be connected to rotation elements arranged between the input shaft 22 (input member) and the power source (engine 9),

rotation elements configuring the multistage speed-changing mechanism 26, rotation elements arranged between the multistage speed-changing mechanism 26 and the output shaft 23 (output member), the output shaft 23 (output member) or rotation elements arranged between the output shaft 23 and the traveling device (front axle 12 and rear axle 13).

That is, the first embodiment is configured so that the second variator 34 is connected closer to the output shaft 23 (output member) than the planetary gear mechanism 29, in other words, the second variator 34 is connected between the planetary gear mechanism 29 and the output shaft 23. On the other hand, for example, the second variator 34 may be connected to the input gear 27A in the direct joint mechanism 27 disposed in the input shaft 22 (input member). That is, the second variator 34 may be connected between the planetary gear mechanism 29 and the input shaft 22 (input member). In this way, the second variator 34 may be connected closer to the engine 9 (power source) than the planetary gear mechanism 29. In addition, for example, the second variator 34 may be connected to the lockup gear 27B in the direct connecting mechanism 27. For example, the second variator 34 may be connected to the third connecting member 32. For example, the second variator 34 may be connected to the first idler gear 28B of the idler element 28. The second variator 34 may be connected to the second idler gear 28C of the idler element 28.

For example, the second variator 34 may be connected to the high range gear 74 in the multistage speed-changing mechanism 26. For example, the second variator 34 may be connected to the low range gear 68 in the multistage speed-changing mechanism 26. For example, the second variator 34 may be connected to the high range output gear 79 in the multistage speed-changing mechanism 26. For example, the second variator 34 may be connected to the low range output gear 78 in the multistage speed-changing mechanism 26. For example, the second variator 34 may be connected to the output shaft 77 of the multistage speed-changing mechanism 26 (output shaft 23 in the speed-changing device 21). For example, the second variator 34 may be connected closer to the load side (front axle 12-side and rear axle 13-side) than the output shaft 23 in the speed-changing device 21. For example, the second variator 34 may be connected to the front axle 12, the rear axle 13, the front propeller shaft 14 or the rear propeller shaft 15. The above-mentioned arrangement can be similarly applied to the second embodiment and the respective modification examples.

In the first embodiment the explanation is made by taking the planetary gear mechanism 29 as the planetary mechanism configuring the planetary stepless speed-changing mechanism 24, as an example. That is, in the first embodiment the explanation is made by taking a case where the planetary member in the planetary mechanism is configured of the planetary gear. However, not limited thereto, the planetary member in the planetary mechanism may be configured of a member other than a gear, such as a planetary roller and the like. This arrangement can be similarly applied to the second embodiment and the respective modification examples.

In the first embodiment the explanation is made by taking the speed-changing device 21 provided with the multistage speed-changing mechanism 26 and the direct joint mechanism 27, as an example. However, not limited thereto, the multistage speed-changing mechanism 26 and/or the direct joint mechanism 27 may be omitted in the speed-changing device 21 as needed. These arrangements can be similarly applied to the second embodiment and the respective modification examples.

The first embodiment is explained by taking a case where the speed-changing device 21 is mounted on the wheel loader 1 as an example. However, not limited thereto, the speed-changing device 21 may be mounted on working vehicles (construction machines) of hydraulic excavators, hydraulic cranes, dump trucks, forklifts and the like other than the wheel loader. In addition, the speed-changing device 21, not limited to the working vehicles, can be applied widely as speed-changing devices incorporated in various vehicles of automobiles, railway vehicles and the like, or various industrial machines and general machinery. This is similarly applied to the second embodiment and the respective modification examples.

In addition, the respective embodiments and the respective modification examples as described above are simply exemplified and without mentioning, a partial replacement and combination of components shown in the different embodiments and in the different modification examples are made possible.

## DESCRIPTION OF REFERENCE NUMERALS

1: WHEEL LOADER (VEHICLE)
9: ENGINE (POWER SOURCE)
12: FRONT AXLE: (TRAVELING DEVICE)
13: REAR AXLE (TRAVELING DEVICE)
21: SPEED-CHANGING DEVICE
22: INPUT SHAFT (INPUT MEMBER)
23, 23A, 23B, 77: OUTPUT SHAFT (OUTPUT MEMBER)
24: PLANETARY STEPLESS SPEED-CHANGING MECHANISM
25: CONTROLLER

26: MULTISTAGE SPEED-CHANGING MECHANISM (SUB SPEED-CHANGING MECHANISM)
27: DIRECT JOINT MECHANISM (EXTERNAL LOCKUP MECHANISM)
27C: FIRST CLUTCH (DIRECT JOINT CLUTCH)
28: IDLER ELEMENT
29: PLANETARY GEAR MECHANISM (PLANETARY MECHANISM)
29A: CARRIER (FIRST MEMBER, SECOND MEMBER OR THIRD MEMBER)
29B: FIRST SUN GEAR (FIRST MEMBER, SECOND MEMBER OR THIRD MEMBER)
29C: SECOND SUN GEAR (FIRST MEMBER, SECOND MEMBER OR THIRD MEMBER)
33: FIRST HYDRAULIC PUMP AND MOTOR (FIRST VARIATOR)
34: SECOND HYDRAULIC PUMP AND MOTOR (SECOND VARIATOR)
36: SECOND CLUTCH
37: THIRD CLUTCH
55: BRAKE MECHANISM
61: LOW RANGE SHAFT UNIT (FIRST OUTPUT TRANSMISSION ROUTE, TRANSMISSION ROUTE)
62: HIGH RANGE SHAFT UNIT (SECOND OUTPUT TRANSMISSION ROUTE, THIRD OUTPUT TRANSMISSION ROUTE, TRANSMISSION ROUTE)
91: PLANETARY GEAR MECHANISM (PLANETARY MECHANISM)
91A: CARRIER (FIRST MEMBER, SECOND MEMBER OR THIRD MEMBER)
91B: SUN GEAR (FIRST MEMBER, SECOND MEMBER OR THIRD MEMBER)
91C: RING GEAR (FIRST MEMBER, SECOND MEMBER OR THIRD MEMBER)

**Claims**

1. A speed-changing device comprising:

an input shaft that is rotated by a power source mounted on a vehicle;
an output shaft that outputs the rotation to a traveling device in the vehicle;
a planetary stepless speed-changing mechanism that is disposed between the input shaft and the output shaft to change the rotation of the input shaft side, which is transmitted to the output shaft side;
a direct joint mechanism that transmits the rotation of the input shaft side to the output shaft side by bypassing the planetary stepless speed-changing mechanism;
an idler element that mechanically connects an output side of the planetary stepless speed-changing mechanism and an output side of the direct joint mechanism; and
a multistage speed-changing mechanism that gradually changes rotation of the output side of the planetary stepless speed-changing mechanism by switching a transmission route of the meshing of gears, wherein
the direct joint mechanism includes a direct joint clutch disposed between the input shaft and the idler element, and
the planetary stepless speed-changing mechanism includes:

a planetary mechanism including three members of a first member connected to the input shaft side, a second member as the output side and a third member that is connected to the idler element and is an output side different from the second member;
a first variator connected to the second member in the planetary mechanism; and
a second variator that transmits power between the first variator and the second variator, **characterized by** including:
a controller configured to control a rotation speed of the first variator and engagement/disengagement of the direct joint clutch, wherein the controller switches a power transmission state to three power transmission states composed of:

a first power transmission state in which the controller disengages the direct joint clutch and changes the rotation speed of the first variator, whereby a rotation speed of the second member is changed and a rotation motion with two degrees of freedom is performed between the first member, the second member and the third member, and power transmitted to the planetary stepless speed-changing mechanism from the power source is transmitted to the multistage speed-changing mechanism;
a second power transmission state in which the controller disengages the direct joint clutch and stops rotation of the first variator, whereby rotation of the second member is stopped and a rotation motion with one degree of freedom is performed between the first member, the second member and the third member, and power transmitted to the planetary stepless speed-changing mechanism from the power source is transmitted to the multistage speed-changing mechanism; and

a third power transmission state in which the controller engages the direct joint clutch, whereby power transmitted to the direct joint mechanism from the power source by bypassing the planetary stepless speed-changing mechanism is transmitted to the multistage speed-changing mechanism.

2. The speed-changing device according to claim 1, wherein

the multistage speed-changing mechanism is provided with a plurality of transmission routes arranged between the idler element and the output shaft, wherein the number of times in the meshing of gears is the same for each of the plurality of transmission routes,
the plurality of transmission routes each have a different rotation speed ratio for transmitting the rotation of the idler element to the output shaft, and
the controller is configured to perform at least one of:

a first simultaneous speed change in which at the switching from the third power transmission state to the second power transmission state, a change of the plurality of transmission routes in the multistage speed-changing mechanism is also performed; and
a second simultaneous speed change in which at the switching from the second power transmission state to the third power transmission state, a change of the plurality of transmission routes in the multistage speed-changing mechanism is also performed.

3. The speed-changing device according to claim 1, further comprising:

a brake connected to the second member in the planetary mechanism, wherein
the controller maintains the second power transmission state by engaging the brake to the second member.

4. The speed-changing device according to claim 1, wherein
the controller, at the switching from the second power transmission state to the third power transmission state or at the switching from the third power transmission state to the second power transmission state, causes the power transmission state to be a fourth power transmission state of differentiating a load of the first variator to the rotation in one direction from a load of the first variator to the rotation in the opposing direction, thereby differentiating torque transmissible from the power source via the planetary stepless speed-changing mechanism to the multistage speed-changing mechanism from torque transmissible from the multistage speed-changing mechanism via the planetary stepless speed-changing mechanism to the power source.

5. The speed-changing device according to claim 4, wherein
the fourth power transmission state is caused to be a state where a load is given to the rotation in one direction of the first variator and a load is not given to the rotation in the opposing direction of the first variator.

6. The speed-changing device according to claim 2, wherein
the controller, at the time of performing the first simultaneous speed change, starts the change of the plurality of transmission routes in the multistage speed-changing mechanism prior to start of the switch from the third power transmission state to the second power transmission state.

7. The speed-changing device according to claim 2, wherein
the controller, at the time of performing the second simultaneous speed change, starts the switch from the second power transmission state to the third power transmission state prior to start of the change of the plurality of transmission routes in the multistage speed-changing mechanism.

8. The speed-changing device according to claim 1, wherein

the multistage speed-changing mechanism is provided with a plurality of transmission routes arranged between the idler element and the output shaft, wherein the number of times in the meshing of gears is the same for each of the plurality of transmission routes,

the plurality of transmission routes each have a different rotation speed ratio for transmitting rotation of the idler element to the output shaft, and

the controller is configured to perform at least one of:

a third simultaneous speed change in which at the switching from the first power transmission state to the third power transmission state, a change of the plurality of transmission routes in the multistage speed-changing mechanism is also performed; and

a fourth simultaneous speed change in which at the switching from the third power transmission state to the first power transmission state, the change of the plurality of transmission routes in the multistage speed-changing mechanism is also performed.

9. The speed-changing device according to claim 8,
wherein
the controller, at the time of performing the third simultaneous speed change, starts the switch from the first power transmission state to the third power transmission state prior to the start of the change of the plurality of transmission routes in the multistage speed-changing mechanism.

10. The speed-changing device according to claim 8,
wherein
the controller, at the time of performing the fourth simultaneous speed change, starts the change of the plurality of transmission routes in the multistage speed-changing mechanism prior to the start of the switch from the third power transmission state to the first power transmission state.

11. The speed-changing device according to claim 1,
wherein
the controller, at the switching from the first power transmission state to the third power transmission state or at the switching from the third power transmission state to the first power transmission state, causes the power transmission state to the fourth power transmission state of differentiating a load of the first variator to the rotation in one direction from a load of the first variator to the rotation in the opposing direction, thereby differentiating torque transmissible from the power source via the planetary stepless speed-changing mechanism to the multistage speed-changing mechanism from torque transmissible from the multistage speed-changing mechanism via the planetary stepless speed-changing mechanism to the power source.

12. The speed-changing device according to claim 8,
wherein
the controller, at the time of performing the third simultaneous speed change, controls the rotation speed of the first variator, thereby causing a speed reduction ratio from the power source to the output shaft in the first power transmission state to be close to a speed reduction ratio from the power source to the output shaft in the third power transmission state, and then performing the switch of the power transmission route in the multistage speed-changing mechanism.

13. The speed-changing device according to claim 8,
wherein
the controller, at the time of performing the fourth simultaneous speed change, controls the rotation speed of the first variator, thereby causing a speed reduction ratio from the power source to the output shaft in the third power transmission state to be close to a speed reduction ratio from the power source to the output shaft in the first power transmission state, and then performing the switch of the power transmission route in the multistage speed-changing mechanism.

Fig.1

EP 4 782 726 A1

Fig.2

21

22

23A

23B

Fig.3

CONTROLLER

EP 4 782 726 A1

49

Fig.4

CONTROLLER

EP 4 782 726 A1

Fig.5

Fig.6

EP 4 782 726 A1

Fig.7

Fig.8

Fig.9

ROTATION SPEED OF SECOND SUN GEAR
/ROTATION SPEED OF CARRIER

$Y_1$

$(1, 1)$

ROTATION SPEED OF FIRST SUN GEAR
/ROTATION SPEED OF CARRIER

EP 4 782 726 A1

Fig.10

Fig.11

Fig.12

Fig.13

EP 4 782 726 A1

CONTROLLER

Fig.14

EP 4 782 726 A1

CONTROLLER

Fig.15

CONTROLLER

Fig.16

Fig.17

INTERNAL LOCKUP→EXTERNAL LOCKUP　　Fig.18

ROTATION SPEED

0

ROTATION SPEED OF POWER SOURCE (ENGINE 9)

TIME

ROTATION SPEED OF SECOND CONNECTING MEMBER 31

A　B　C　D　E　F　G

PRESSURE

0

PRESSURE OF FIRST CLUTCH 27C

PRESSURE OF SECOND CLUTCH 36

TIME

"ROTATION STOP IN ONE DIRECTION AND FREE ROTATION IN OPPOSING DIRECTION" OR "ROTATION STOP IN BOTH DIRECTIONS"

ROTATION STOP IN ONE DIRECTION AND FREE ROTATION IN OPPOSING DIRECTION

"ROTATION STOP IN ONE DIRECTION AND FREE ROTATION IN OPPOSING DIRECTION" OR "FREE ROTATION IN BOTH DIRECTIONS"

"FREE ROTATION IN ONE DIRECTION AND ROTATION STOP IN OPPOSING DIRECTION" OR "FREE ROTATION IN BOTH DIRECTIONS"

STATE OF CONTROL OF FIRST VARIATOR 33

Fig.19

ROTATION SPEED OF POWER SOURCE
(ENGINE 9)

ROTATION SPEED OF
SECOND CONNECTING MEMBER 31

PRESSURE
OF BRAKE MECHANISM 55

PRESSURE OF
SECOND CLUTCH 36

PRESSURE OF
FIRST CLUTCH 27C

"FREE ROTATION IN
BOTH DIRECTIONS"
OR
"ROTATION STOP IN
BOTH DIRECTIONS"

ROTATION STOP IN ONE DIRECTION
AND FREE ROTATION IN OPPOSING DIRECTION

"ROTATION STOP IN
ONE DIRECTION AND
FREE ROTATION IN
OPPOSING DIRECTION"
OR
"FREE ROTATION IN
BOTH DIRECTIONS"

"FREE ROTATION IN
ONE DIREVTION AND
ROTATION STOP IN
OPPOSING DIRECTION"
OR
"FREE ROTATION IN
BOTH DIRECTIONS"

STATE OF CONTROL OF FIRST VARIATOR 33

EP 4 782 726 A1

Fig.20

EXTERNAL LOCKUP→INTERNAL LOCKUP

ROTATION SPEED OF POWER SOURCE (ENGINE 9)

ROTATION SPEED OF
SECOND CONNECTING MEMBER 31

PRESSURE OF SECOND CLUTCH 36

PRESSURE OF FIRST CLUTCH 27C

FREE ROATION
IN BOTH DIRECTIONS

ROTATION STOP IN ONE DIRECTION
AND FREE ROTATION IN OPPOSING DIRECTION

"ROTATION STOP IN ONE DIRECTION AND FREE
ROTATION IN OPPOSING DIRECTION"
OR
"ROTATION STOP IN BOTH DIRECTIONS"

STATE OF CONTROL OF FIRST VARIATOR 33

EP 4 782 726 A1

## EXTERNAL LOCKUP→INTERNAL LOCKUP
### (PRESENCE OF BRAKE MECHANISM)

Fig.21

ROTATION SPEED OF POWER SOURCE
(ENGINE 9)

TIME

ROTATION SPEED OF
SECOND CONNECTING MEMBER 31

A  B  C  D  E  F  G  H

PRESSURE OF
SECOND CLUTCH 36

PRESSURE OF
BRAKE MECHANISM 55

PRESSURE OF
FIRST CLUTCH 27C

TIME

FREE ROATION
IN BOTH DIRECTIONS

ROTATION STOP IN ONE DIRECTION
AND FREE ROTATION IN OPPOSING DIRECTION

"ROTATION STOP IN ONE
DIRECTION AND FREE
ROTATION IN OPPOSING
DIRECTION"
OR
"ROTATION STOP IN BOTH
DIRECTIONS"

"FREE ROTATION IN
BOTH DIRECTIONS"
OR
"ROTATION STOP IN
BOTH DIRECTIONS"

STATE OF CONTROL OF FIRST VARIATOR 33

Fig.22

STEPLESS SPEED CHANGE→INTERNAL LOCKUP

ROTATION SPEED OF POWER SOURCE (ENGINE 9)

ROTATION SPEED OF SECOND CONNECTING MEMBER 31

PRESSURE OF THIRD CLUTCH 37

SPEED REDUCTION RATIO OF
PLANETARY STEPLESS SPEED-CHANGING MECHAMISM 24

Fig.23

ROTATION SPEED OF POWER SOURCE (ENGINE 9)

ROTATION SPEED OF
SECOND CONNECTING MEMBER 31

PRESSURE OF
BRAKE MECHANISM 55

PRESSURE OF
THIRD CLUTCH 37

SPEED REDUCTION RATIO OF
PLANETARY STEPLESS
SPEED-CHANGING MECHANISM 24

EP 4 782 726 A1

Fig.24

INTERNAL LOCKUP→STEPLESS SPEED CHANGE

Fig.25

## INTERNAL LOCKUP→STEPLESS SPEED CHANGE
## (PRESENCE OF BRAKE MECHANISM)

ROTATION SPEED OF
POWER SOURCE (ENGINE 9)

ROTATION SPEED OF
SECOND CONNECTING MEMBER 31

PRESSURE OF THIRD CLUTCH 3

PRESSURE OF BRAKE MECHANISM 55

SPEED REDUCTION RATIO OF
PLANETARY STEPLESS
SPEED-CHANGING MECHANISM 24

Fig.26

SPEED CHANGE OF MULTISTAGE SPEED-CHANGING MECHANISM 26

EP 4 782 726 A1

Fig.27

## INTERNAL LOCKUP→EXTERNAL LOCKUP+SWITCH OF
## MULTISTAGE SPEED-CHANGING MECHANISM 26

PRESSURE OF PRIMARY CLUTCH     PRESSURE OF SECONDARY CLUTCH

PRESSURE OF
FIRST CLUTCH 27C

PRESSURE OF
SECOND CLUTCH 36

PRESSURE

0

A     B     C     D     E     F     G     H     I     J     TIME

ROTATION SPEED

0

TIME

ROTATION SPEED OF
SECOND CONNECTING MEMBER 31

"ROTATION STOP IN ONE DIRECTION
AND FREE ROTATION IN OPPOSING DIRECTION"

"ROTATION STOP IN ONE DIRECTION
AND FREE ROTATION IN OPPOSING DIRECTION"
OR
"ROTATION STOP IN BOTH DIRECTIONS"

"FREE ROTATION IN ONE DIRECTION
AND ROTATION STOP IN OPPOSING DIRECTION"
OR
"FREE ROTATION IN BOTH DIRECTIONS"

STATE OF CONTROL OF FIRST VARIATOR 33

EP 4 782 726 A1

Fig.28

INTERNAL LOCKUP→EXTERNAL LOCKUP+SWITCH OF
MULTISTAGE SPEED-CHANGING MECHANISM 26

(PRESENCE OF
BRAKE MECHANISM)

PRESSURE OF PRIMARY CLUTCH   PRESSURE OF FIRST CLUTCH 27C

PRESSURE OF
BRAKE MECHANIZM 55

PRESSURE OF SECONDARY CLUTCH

PRESSURE OF
SECOND CLUTCH 36

PRESSURE

0

TIME

A   B   C   D   E   F   G   H   I   J   K   L   M   N

TIME

0

ROTATION SPEED OF
SECOND CONNECTING MEMBER 31

ROTATION SPEED

"FREE ROTATION IN BOTH
DIRECTIONS"
OR
"ROTATION STOP IN BOTH
DIRECTIONS"

"ROTATION STOP IN ONE DIRECTION
AND FREE ROTATION IN OPPOSING DIRECTION"

"FREE ROTATION IN ONE DIRECTION
AND ROTATION STOP IN
OPPOSING DIRECTION"
OR
"FREE ROTATION IN BOTH
DIRECTIONS"

STATE OF CONTROL OF FIRST VARIATOR 33

Fig.29

EXTERNAL LOCKUP→INTERNAL LOCKUP+
SWITCH OF MULTISTAGE SPEED-CHANGING MECHANISM 26

PRESSURE OF PRIMARY CLUTCH

PRESSURE OF
SECOND CLUTCH 36

PRESSURE OF SECONDARY CLUTCH

PRESSURE

PRESSURE OF FIRST CLUTCH 27C

0

A    B    C    D    E    F    G    H    I    → TIME

0    → TIME

ROTATION SPEED OF
SECOND CONNECTING MEMBER 31

ROTATION SPEED

"ROTATION STOP IN ONE DIRECTION AND
FREE ROTATION IN OPPOSING DIRECTION"

"FREE ROTATION IN ONE DIRECTION
AND ROTATION STOP IN
OPPOSING DIRECTION"
OR
"FREE ROTATION IN BOTH
DIRECTIONS"

"ROTATION STOP IN ONE DIRECTION
AND FREE ROTATION IN OPPOSING
DIRECTION"
OR
"ROTATION STOP IN BOTH
DIRECTIONS"

STATE OF CONTROL OF FIRST VARIATOR 33

EP 4 782 726 A1

Fig.30

PRESSURE OF PRIMARY CLUTCH

PRESSURE OF
SECOND CLUTCH 36

PRESSURE OF SECONDARY CLUTCH

PRESSURE OF FIRST CLUTCH 27C

PRESSURE OF
BRAKE MECHANISM 55

PRESSURE

0

A  B  C  D  E  F  G  H  I  J  K  TIME

ROTATION SPEED

0  TIME

ROTATION SPEED OF
SECOND CONNECTING MEMBER 31

"FREE ROTATION IN
ONE DIRECTION AND
ROTATION STOP IN
OPPOSING DIRECTION"
OR
"FREE ROTATION IN
BOTH DIRECTIONS"

"ROTATION STOP IN ONE DIRECTION AND
FREE ROTATION IN OPPOSING DIRECTION"

"ROTATION STOP IN
ONE DIRECTION AND
FREE ROTATION IN
OPPOSING DIRECTION"
OR
"ROTATION STOP IN
BOTH DIRECTIONS"

"FREE ROTATION IN
BOTH DIRECTIONS"
OR
"ROTATION STOP IN
BOTH DIRECTIONS"

STATE OF CONTROL OF FIRST VARIATOR 33

EP 4 782 726 A1

Fig.31

Fig.32

## Fig.33

**Upper graph — SPEED REDUCTION RATIO vs TIME**

SPEED REDUCTION RATIO FROM POWER SOURCE VIA DIRECT JOINT MECHANISM AND MULTISTAGE SPEED-CHANGING MECHANISM TO OUTPUT SHAFT AFTER SWITCH OF MULTISTAGE SPEED-CHANGING MECHANISM

SPEED REDUCTION RATIO (UPSHIFT) FROM POWER SOURCE VIA PLANETARY STEPLESS SPEED-CHANGING MECHANISM AND MULTISTAGE SPEED-CHANGING MECHANISM TO OUTPUT SHAFT BEFORE SWITCH OF MULTISTAGE SPEED-CHANGING MECHANISM

SPEED REDUCTION RATIO (DOWNSHIFT) FROM POWER SOURCE VIA PLANETARY STEPLESS SPEED-CHANGING MECHANISM AND MULTISTAGE SPEED-CHANGING MECHANISM TO OUTPUT SHAFT BEFORE SWITCH OF MULTISTAGE SPEED-CHANGING MECHANISM

Axis labels: SPEED REDUCTION RATIO (vertical), TIME (horizontal)
Time markers: A  B  C  D  E  F  G  H  I  J  K  TIME

**Lower graph — PRESSURE vs TIME**

PRESSURE OF FIRST CLUTCH 27C    PRESSURE OF SECOND CLUTCH 36

PRESSURE OF SECONDARY CLUTCH

PRESSURE OF PRIMARY CLUTCH

Axis labels: PRESSURE (vertical), TIME (horizontal)
Time markers: A  B  C  D  E  F  G  H  I  J  K  TIME

TRANSMISSION GEAR RATIO IS ADJUSTED BY ADJUSTMENT OF ROTATION SPEED

TORQUE LOAD IN ONE DIRECTION IS OPERATED AND TORQUE LOAD IN OPPOSING DIRECTION IS NOT OPERATED

"FREE ROTATION IN BOTH DIRECTIONS" OR "TORQUE LOAD IN ONE DIRECTION IS OPERATED AND TORQUE LOAD IN OPPOSING DIRECTION IS NOT OPERATED"

STATE OF CONTROL OF FIRST VARIATOR 33

Fig.34

**EXTERNAL LOCKUP→STEPLESS SPEED CHANGE+SWITCH OF MULTISTAGE SPEED-CHANGING MECHANISM 26**

SPEED REDUCTION RATIO FROM POWER SOURCH VIA DIRECT JOINT MECHANISM AND MULTISTAGE SPEED-CHANGING MECHANISM TO OUTPUT SHAFT BEFORE SWITCH OF MULTISTAGE SPEED-CHANGING MECHANISM

SPEED REDUCTION RATIO (UPSHIFT) FROM POWER SOURCE VIA PLANETARY STEPLESS SPEED-CHANGING MECHANISM AND MULTISTAGE SPEED-CHANGING MECHANISM TO OUTPUT SHAFT AFTER SWITCH OF MULTISTAGE SPEED-CHANGING MECHANISM

SPEED REDUCTION RATIO (DOWNSHIFT) FROM POWER SOURCE VIA PLANETARY STEPLESS SPEED-CHANGING MECHANISM AND MULTISTAGE SPEED-CHANGING MECHANISM TO OUTPUT SHAFT AFTER SWITCH OF MULTISTAGE SPEED-CHANGING MECHANISM

SPEED REDUCTION RATIO

TIME

A   B   C   D   E F G H   I   J   K

PRESSURE OF SECOND CLUTCH 36   PRESSURE OF FIRST CLUTCH 27C

PRESSURE

PRESSURE OF SECONDARY CLUTCH

PRESSURE OF PRIMARY CLUTCH

A   B   C   D   E F G H   I   J   K

TIME

"FREE ROATION IN BOTH DIRECTIONS" OR "TORQUE LOAD IN ONE DIRECTION IS OPERATED AND TORQUE LOAD IN OPPOSING DIRECTION IS NOT OPERATED"

TORQUE LOAD IN ONE DIRECTION IS OPERATED AND TORQUE LOAD IN OPPOSING DIRECTION IS NOT OPERATED

TRANSMISSION GEAR RATIO IS ADJUSTED BY ADJUSTMENT OF ROTATION SPEED

STATE OF CONTROL OF FIRST VARIATOR 33

EP 4 782 726 A1

Fig.35

DIRECTION OF TORQUE

ROTATION IN OPPOSING DIRECTION
TORQUE IN ONE DIRECTION

ROTATION IN ONE DIRECTION
TORQUE IN ONE DIRECTION

DIRECTION OF ROTATION

ROTATION IN OPPOSING DIRECTION
TORQUE IN OPPOSING DIRECTION

ROTATION IN ONE DIRECTION
TORQUE IN OPPOSING DIRECTION

EP 4 782 726 A1

Fig.36

Fig.37

Fig.38

Fig.39

EP 4 782 726 A1

Fig.40

CONTROLLER

Fig.41

## INTERNATIONAL SEARCH REPORT

International application No.

**PCT/JP2024/032752**

### A. CLASSIFICATION OF SUBJECT MATTER

*F16H 61/66*(2006.01)i; *F16H 61/02*(2006.01)i
FI: F16H61/66; F16H61/02

According to International Patent Classification (IPC) or to both national classification and IPC

### B. FIELDS SEARCHED

Minimum documentation searched (classification system followed by classification symbols)

F16H61/66; F16H61/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-143739 A (KOMATSU LTD.) 29 August 2019 (2019-08-29)<br>entire text, all drawings | 1-13 |
| A | JP 2023-095183 A (KUBOTA CORPORATION) 06 July 2023 (2023-07-06)<br>entire text, all drawings | 1-13 |

☐ Further documents are listed in the continuation of Box C.　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **31 October 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| | International application No. |
| --- | --- |
| | **PCT/JP2024/032752** |

| Patent document cited in search report | | | Publication date (day/month/year) | Patent family member(s) | | | Publication date (day/month/year) |
| --- | --- | --- | --- | --- | --- | --- | --- |
| JP | 2019-143739 | A | 29 August 2019 | US | 2020/0132179 | A1 | |
| | | | | entire text, all drawings | | | |
| | | | | CN | 110869648 | A | |
| JP | 2023-095183 | A | 06 July 2023 | US | 2023/0204096 | A1 | |
| | | | | entire text, all drawings | | | |
| | | | | EP | 4202256 | A1 | |

Form PCT/ISA/210 (patent family annex) (July 2022)

**EP 4 782 726 A1**

**Patent documents cited in the description**

- JP 2008247269 A

- JP 5095252 B